# EUROPEAN PATENT SPECIFICATION

(11) **EP 3 004 196 B1**
(45) Date of publication and mention of the grant of the patent: **07.04.2021**
(21) Application number: 14797346.5
(22) Date of filing: 13.05.2014
(51) Int. Cl.: C08G 18/48, C08G 18/70, C08G 18/76, C08G 18/77, C08G 18/78, C08G 18/79, C08J 9/02, C08G 18/80, C08J 9/12, C08G 18/10, C08G 18/44, C08G 101/00

(54) **CO2 CONTAINING FOAMS AND RELATED METHODS**
CO2-HALTIGE SCHAUMSTOFFE UND ZUGEHÖRIGE VERFAHREN
MOUSSES CONTENANT DU CO2 ET PROCÉDÉS ASSOCIÉS

(30) Priority: 13.05.2013 US 201361822692 P
(43) Date of publication of application: 13.04.2016
(73) Proprietor: SAUDI ARAMCO TECHNOLOGIES COMPANY, Dhahran 31311 (SA)
(72) Inventor: WADDINGTON, Simon, 8925 Ebertswil (CH)
(74) Representative: Tostmann, Holger Carl
(86) International application number: PCT/US2014/037903
(87) International publication number: WO 2014/186397

(56) References cited:
- EP-A1- 1 894 956
- EP-A2- 1 726 612
- WO-A1-2014/074706
- WO-A2-2013/016331
- US-A- 3 887 505
- US-A- 4 826 887
- US-A1- 2004 092 616
- US-A1- 2012 095 122

## Description

### FIELD OF THE INVENTION

The invention pertains to the field of polyurethane foams. More particularly, the invention pertains to methods for the incorporation of aliphatic polycarbonate polyols into polyurethane formulations.

### BACKGROUND OF THE INVENTION

The ability to manufacture useful polymers from waste CO₂ has garnered increasing interest in recent years as concern over increased atmospheric CO₂ levels has grown. Applicant has developed a family of aliphatic polycarbonate (APC) polyols based on copolymerization of epoxides and carbon dioxide in the presence of multifunctional chain transfer agents.

Such polyols show great promise in polyurethane applications and their incorporation has been shown to bring significant performance advantages including increased, strength, hardness, adhesion, UV stability and chemical resistance. The application of these CO₂-based polyols to foam applications is particularly attractive since their inclusion increases the physical strength foam formulations without increasing their density and without some of the undesirable characteristics of graft polyols (such as styrene off-gassing and precipitation of solids from B-side polyol formulations).

One shortcoming of CO₂ based polyols such as poly(propylene carbonate) polyol (PPC), is their relatively high viscosity relative to polyether and polyester polyols used in industry today.

Separate from developments in the CO₂-based polyol field, there have been efforts to incorporate CO₂ into traditional polyether-based foams by injection of CO₂ into the foam formulation. Typically, this has been achieved by injecting liquid CO₂ into the mix head where the polyol and isocyanate are combined. One challenge with this technology in the past has been achieving the correct foam hardness. Because less water is required as a blowing agent the level of hard segment in the resulting foam is significantly reduced. A secondary issue is the reactivity of the foam system since the endotherm of the CO₂ phase change removes a significant amount of heat from the system and slows the cure of the foam or requires use of very high catalyst levels. When the standard polyols are heated to very high temperatures, the viscosity becomes so low that control of the mixing becomes difficult.

Therefore, there remains a need for strategies and formulations to incorporate CO₂ into polyurethane foam compositions.

### SUMMARY OF THE INVENTION

Among other things, the present invention encompasses the recognition that APC polyols provide a solution to several of the challenges associated with injecting CO₂ into polyurethane foams.

It would be desirable in the field of foam formulation to lessen the amount of water utilized as a blowing agent. Water reacts with polyisocyanates during the foaming process to release CO₂ as the blowing gas:

R-NCO + H₂O → R-NH₂ + CO_{2(g)}.

The gaseous CO₂ expands the foam, while the amine resulting from reaction of the isocyanate goes on to react with additional isocyanate in the formulation to form urea linkages in the finished polymer network. This reliance on isocyanate-generated CO₂ for blowing can have undesirable consequences since it requires the addition of large amounts of isocyanate beyond what is necessary to react with the polyol in the B-side formulation and necessarily leads to a high 'hard segment' content in the finished foam. It would be less expensive to add CO₂ gas directly as the blowing agent since CO₂ itself is much less expensive than the isocyanate. Furthermore, decoupling of the CO₂ supply from the isocyanate chemistry would permit more latitude in defining the hard segment content of the foam and the ratio of urea vs. urethane linkages in the finished foams thereby providing more options for controlling the properties of the finished foam.

Unfortunately, as described above, direct use of CO₂ presents problems as well: for typical polyether polyol-based foam formulations, the reduction in hard segment content can lead to foams that are too soft. Furthermore, the injection of CO₂ cools the reaction mixture leading to longer cure times or the need for increased catalyst loading. The ability to heat the mixture to counteract this cooling effect is limited by the fact that polyether polyols are difficult to handle and mix at elevated temperatures.

Among other things, the present invention encompasses the recognition that polycarbonate polyols derived from copolymerization of CO₂ and one or more epoxides provide solutions to these problems and provide improved methods to utilize directly added CO₂ as a foam blowing agent.

In one aspect, the present invention encompasses the recognition that incorporation of polycarbonate polyols such as poly(propylene carbonate) polyol in place of polyether polyols can mitigate the negative impact of lowering the hard segment content of the foam. Therefore, in certain embodiments, the present invention encompasses foam formulations and finished foams characterized in that the foam has a lower hard segment content relative to polyether-based foams of similar properties. Likewise, in some embodiments, the present invention encompasses foam formulations containing lowered water content in the B-side polyol formulation, and foam compositions containing a low urea to urethane ratio. In some embodiments, a cured foam composition has a hard segment content of less than about 40%, less than about 30%, less than about 25%, less than about 20%, less than about 15%, or less than about 10%. In some embodiments, a cured foam composition has a ratio of urethane linkages to urea linkages of greater than about 1:1, greater than about 2:1, greater than about 3:1, or greater than about 5:1.

In another aspect, the present invention encompasses the recognition that the high viscosity of polycarbonate polyols such as poly(propylene carbonate) polyol can be advantageous in mitigating the undesirable cooling effects of injecting CO₂ into a foam formulation. Therefore, in certain embodiments, the invention encompasses methods of introducing the B-side composition of a foam formulation at a high temperature (e.g. above about 75 °C, or even above about 100 °C) thereby providing additional heat to compensate for cooling caused by CO₂ injection. Such methods provide novel fast-curing foam formulations that do not require high catalyst loads.

In another aspect, the present invention encompasses the recognition that that the high solubility of CO₂ in polycarbonate polyols such as poly(propylene carbonate) polyol, can provide a useful method for adding CO₂ to a foam formulation. Therefore, in certain embodiments, the invention encompasses methods of providing CO₂ as a foam blowing agent wherein at least a portion of the CO₂ is provided to the formulation dissolved in a polycarbonate polyol (or a B-side formulation containing such polyol).

The present invention provides methods for producing a polyurethane foam composition as defined in claim 1. The method comprises the steps of:
providing an A-side composition comprising one or more polyisocyanates;
providing a B-side composition comprising one or more highly alternating polycarbonate polyols derived from the copolymerization of one or more epoxides and CO₂;
heating the B-side composition to a temperature of above 50 °C;
mixing the A-side composition, the heated B-side composition, and CO₂ to provide a foam mixture; and
allowing the foam mixture to cure into the polyurethane foam composition;
wherein at least a portion of the CO₂ is added as a separate stream, or is provided dissolved in the B-side composition. The highly alternating polycarbonate polyol is characterized in that it has at least 95% carbonate linkages

The present invention also provides polyurethane foam compositions made by the method according to the present invention. In certain embodiments, such foams are characterized in that the cured foam has a hard segment content of less than about 40%, less than about 30%, less than about 25%, less than about 20%, less than about 15%, or less than about 10%. In certain embodiments, such foams are characterized in that the cured foam composition has a ratio of urethane linkages to urea linkages of greater than about 1:1, greater than about 2:1, greater than about 3:1, or greater than about 5:1. In some embodiments, the foam comprises a flexible foam. In other embodiments, the foam comprises a rigid foam.

### Definitions

Definitions of specific functional groups and chemical terms are described in more detail below. For purposes of this invention, the chemical elements are identified in accordance with the Periodic Table of the Elements, CAS version, Handbook of Chemistry and Physics, 75^{th} Ed., inside cover, and specific functional groups are generally defined as described therein. Additionally, general principles of organic chemistry, as well as specific functional moieties and reactivity, are described in Organic Chemistry, Thomas Sorrell, University Science Books, Sausalito, 1999; Smith and March March's Advanced Organic Chemistry, 5th Edition, John Wiley & Sons, Inc., New York, 2001; Larock, Comprehensive Organic Transformations, VCH Publishers, Inc., New York, 1989; Carruthers, Some Modern Methods of Organic Synthesis, 3rd Edition, Cambridge University Press, Cambridge, 1987.

Certain compounds as provided can comprise one or more asymmetric centers, and thus can exist in various stereoisomeric forms, e.g., enantiomers and/or diastereomers. Thus, inventive compounds and compositions thereof may be in the form of an individual enantiomer, diastereomer or geometric isomer, or may be in the form of a mixture of stereoisomers. In certain embodiments, the compounds of the invention are enantiopure compounds. In certain embodiments, mixtures of enantiomers or diastereomers are provided.

Furthermore, certain compounds, as described herein may have one or more double bonds that can exist as either the Z or E isomer, unless otherwise indicated. The invention additionally encompasses the compounds as individual isomers substantially free of other isomers and alternatively, as mixtures of various isomers, *e.g*., racemic mixtures of enantiomers. In addition to the above-mentioned compounds *per se,* this invention also encompasses compositions comprising one or more compounds.

As used herein, the term "isomers" includes any and all geometric isomers and stereoisomers. For example, "isomers" include *cis*- and *trans*-isomers, *E*- and *Z*- isomers, *R*and *S*-enantiomers, diastereomers, (D)-isomers, (L)-isomers, racemic mixtures thereof, and other mixtures thereof, as falling within the scope of the invention. For instance, a stereoisomer may, in some embodiments, be provided substantially free of one or more corresponding stereoisomers, and may also be referred to as "stereochemically enriched."

Where a particular enantiomer is preferred, it may, in some embodiments be provided substantially free of the opposite enantiomer, and may also be referred to as "optically enriched." "Optically enriched," as used herein, means that the compound or polymer is made up of a significantly greater proportion of one enantiomer. In certain embodiments the compound is made up of at least about 90% by weight of a preferred enantiomer. In other embodiments the compound is made up of at least about 95%, 98%, or 99% by weight of a preferred enantiomer. Preferred enantiomers may be isolated from racemic mixtures by any method known to those skilled in the art, including chiral high pressure liquid chromatography (HPLC) and the formation and crystallization of chiral salts or prepared by asymmetric syntheses. See, for example, Jacques, et al., Enantiomers, Racemates and Resolutions (Wiley Interscience, New York, 1981); Wilen, S.H., et al., Tetrahedron 33:2725 (1977); Eliel, E.L. Stereochemistry of Carbon Compounds (McGraw-Hill, NY, 1962); Wilen, S.H. Tables of Resolving Agents and Optical Resolutions p. 268 (E.L. Eliel, Ed., Univ. of Notre Dame Press, Notre Dame, IN 1972).

The term "epoxide", as used herein, refers to a substituted or unsubstituted oxirane. Such substituted oxiranes include monosubstituted oxiranes, disubstituted oxiranes, trisubstituted oxiranes, and tetrasubstituted oxiranes. Such epoxides may be further optionally substituted as defined herein. In certain embodiments, epoxides comprise a single oxirane moiety. In certain embodiments, epoxides comprise two or more oxirane moieties.

The term "polymer", as used herein, refers to a molecule of high relative molecular mass, the structure of which comprises the multiple repetition of units derived, actually or conceptually, from molecules of low relative molecular mass. In certain embodiments, a polymer is comprised of substantially alternating units derived from CO₂ and an epoxide (*e.g*., poly(ethylene carbonate). In certain embodiments, a polymer of the present invention is a copolymer, terpolymer, heteropolymer, block copolymer, or tapered heteropolymer incorporating two or more different epoxide monomers. With respect to the structural depiction of such higher polymers, the convention of showing enchainment of different monomer units separated by a slash may be used herein 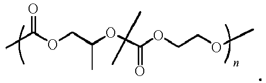 These structures are to be interpreted to encompass copolymers incorporating any ratio of the different monomer units depicted unless otherwise specified. This depiction is also meant to represent random, tapered, block co-polymers, and combinations of any two or more of these and all of these are implied unless otherwise specified.

The terms "halo" and "halogen" as used herein refer to an atom selected from fluorine (fluoro, -F), chlorine (chloro, -CI), bromine (bromo, -Br), and iodine (iodo, -I).

The term "aliphatic" or "aliphatic group", as used herein, denotes a hydrocarbon moiety that may be straight-chain (i.e., unbranched), branched, or cyclic (including fused, bridging, and spiro-fused polycyclic) and may be completely saturated or may contain one or more units of unsaturation, but which is not aromatic. Unless otherwise specified, aliphatic groups contain 1-40 carbon atoms. In certain embodiments, aliphatic groups contain 1-20 carbon atoms. In certain embodiments, aliphatic groups contain 3-20 carbon atoms. In certain embodiments, aliphatic groups contain 1-12 carbon atoms. In certain embodiments, aliphatic groups contain 1-8 carbon atoms. In certain embodiments, aliphatic groups contain 1-6 carbon atoms. In some embodiments, aliphatic groups contain 1-5 carbon atoms, in some embodiments, aliphatic groups contain 1-4 carbon atoms, in some embodiments aliphatic groups contain 1-3 carbon atoms, and in some embodiments aliphatic groups contain 1 or 2 carbon atoms. Suitable aliphatic groups include, but are not limited to, linear or branched, alkyl, alkenyl, and alkynyl groups, and hybrids thereof such as (cycloalkyl)alkyl, (cycloalkenyl)alkyl or (cycloalkyl)alkenyl.

The term "heteroaliphatic," as used herein, refers to aliphatic groups wherein one or more carbon atoms are independently replaced by one or more atoms selected from the group consisting of oxygen, sulfur, nitrogen, or phosphorus. In certain embodiments, one to six carbon atoms are independently replaced by one or more of oxygen, sulfur, nitrogen, or phosphorus. Heteroaliphatic groups may be substituted or unsubstituted, branched or unbranched, cyclic or acyclic, and include saturated, unsaturated or partially unsaturated groups.

The term "unsaturated", as used herein, means that a moiety has one or more double or triple bonds.

The terms "cycloaliphatic", "carbocycle", or "carbocyclic", used alone or as part of a larger moiety, refer to a saturated or partially unsaturated cyclic aliphatic monocyclic or polycyclic ring systems, as described herein, having from 3 to 12 members, wherein the aliphatic ring system is optionally substituted as defined above and described herein. Cycloaliphatic groups include, without limitation, cyclopropyl, cyclobutyl, cyclopentyl, cyclopentenyl, cyclohexyl, cyclohexenyl, cycloheptyl, cycloheptenyl, cyclooctyl, cyclooctenyl, norbornyl, adamantyl, and cyclooctadienyl. In some embodiments, the cycloalkyl has 3-6 carbons. The terms "cycloaliphatic", "carbocycle" or "carbocyclic" also include aliphatic rings that are fused to one or more aromatic or nonaromatic rings, such as decahydronaphthyl or tetrahydronaphthyl, where the radical or point of attachment is on the aliphatic ring. In certain embodiments, the term "3-to 7-membered carbocycle" refers to a 3- to 7-membered saturated or partially unsaturated monocyclic carbocyclic ring. In certain embodiments, the term "3- to 8-membered carbocycle" refers to a 3- to 8-membered saturated or partially unsaturated monocyclic carbocyclic ring. In certain embodiments, the terms "3- to 14-membered carbocycle" and "C₃₋₁₄ carbocycle" refer to a 3- to 8-membered saturated or partially unsaturated monocyclic carbocyclic ring, or a 7- to 14-membered saturated or partially unsaturated polycyclic carbocyclic ring.

The term "alkyl," as used herein, refers to saturated, straight- or branched-chain hydrocarbon radicals derived from an aliphatic moiety containing between one and six carbon atoms by removal of a single hydrogen atom. Unless otherwise specified, alkyl groups contain 1-12 carbon atoms. In certain embodiments, alkyl groups contain 1-8 carbon atoms. In certain embodiments, alkyl groups contain 1-6 carbon atoms. In some embodiments, alkyl groups contain 1-5 carbon atoms, in some embodiments, alkyl groups contain 1-4 carbon atoms, in some embodiments alkyl groups contain 1-3 carbon atoms, and in some embodiments alkyl groups contain 1-2 carbon atoms. Examples of alkyl radicals include, but are not limited to, methyl, ethyl, n-propyl, isopropyl, n-butyl, iso-butyl, sec-butyl, sec-pentyl, iso-pentyl, tert-butyl, n-pentyl, neopentyl, n-hexyl, sec-hexyl, n-heptyl, n-octyl, n-decyl, n-undecyl, dodecyl, and the like.

The term "alkenyl," as used herein, denotes a monovalent group derived from a straight- or branched-chain aliphatic moiety having at least one carbon-carbon double bond by the removal of a single hydrogen atom. Unless otherwise specified, alkenyl groups contain 2-12 carbon atoms. In certain embodiments, alkenyl groups contain 2-8 carbon atoms. In certain embodiments, alkenyl groups contain 2-6 carbon atoms. In some embodiments, alkenyl groups contain 2-5 carbon atoms, in some embodiments, alkenyl groups contain 2-4 carbon atoms, in some embodiments alkenyl groups contain 2-3 carbon atoms, and in some embodiments alkenyl groups contain 2 carbon atoms. Alkenyl groups include, for example, ethenyl, propenyl, butenyl, 1-methyl-2-buten-1-yl, and the like.

The term "alkynyl," as used herein, refers to a monovalent group derived from a straight- or branched-chain aliphatic moiety having at least one carbon-carbon triple bond by the removal of a single hydrogen atom. Unless otherwise specified, alkynyl groups contain 2-12 carbon atoms. In certain embodiments, alkynyl groups contain 2-8 carbon atoms. In certain embodiments, alkynyl groups contain 2-6 carbon atoms. In some embodiments, alkynyl groups contain 2-5 carbon atoms, in some embodiments, alkynyl groups contain 2-4 carbon atoms, in some embodiments alkynyl groups contain 2-3 carbon atoms, and in some embodiments alkynyl groups contain 2 carbon atoms. Representative alkynyl groups include, but are not limited to, ethynyl, 2-propynyl (propargyl), 1-propynyl, and the like.

The term "alkoxy", as used herein refers to an alkyl group, as previously defined, attached to the parent molecule through an oxygen atom. Examples of alkoxy, include but are not limited to, methoxy, ethoxy, propoxy, isopropoxy, n-butoxy, tert-butoxy, neopentoxy, and n-hexoxy.

The term "acyl", as used herein, refers to a carbonyl-containing functionality, *e.g.,* -C(=O)R', wherein R is hydrogen or an optionally substituted aliphatic, heteroaliphatic, heterocyclic, aryl, heteroaryl group, or is a substituted (*e.g*., with hydrogen or aliphatic, heteroaliphatic, aryl, or heteroaryl moieties) oxygen or nitrogen containing functionality (*e.g*., forming a carboxylic acid, ester, or amide functionality).

The term "aryl" used alone or as part of a larger moiety as in "aralkyl", "aralkoxy", or "aryloxyalkyl", refers to monocyclic and polycyclic ring systems having a total of five to 20 ring members, wherein at least one ring in the system is aromatic and wherein each ring in the system contains three to twelve ring members. The term "aryl" may be used interchangeably with the term "aryl ring". In certain embodiments of the present invention, "aryl" refers to an aromatic ring system which includes, but is not limited to, phenyl, biphenyl, naphthyl, anthracyl and the like, which may bear one or more substituents. Also included within the scope of the term "aryl", as it is used herein, is a group in which an aromatic ring is fused to one or more additional rings, such as benzofuranyl, indanyl, phthalimidyl, naphthimidyl, phenantriidinyl, or tetrahydronaphthyl, and the like. In certain embodiments, the terms "6- to 10-membered aryl" and "C₆₋₁₀ aryl" refer to a phenyl or an 8- to 10-membered polycyclic aryl ring.

The terms "heteroaryl" and "heteroar-", used alone or as part of a larger moiety, e.g., "heteroaralkyl", or "heteroaralkoxy", refer to groups having 5 to 14 ring atoms, preferably 5, 6, or 9 ring atoms; having 6, 10, or 14 π electrons shared in a cyclic array; and having, in addition to carbon atoms, from one to five heteroatoms. The term "heteroatom" refers to nitrogen, oxygen, or sulfur, and includes any oxidized form of nitrogen or sulfur, and any quaternized form of a basic nitrogen. Heteroaryl groups include, without limitation, thienyl, furanyl, pyrrolyl, imidazolyl, pyrazolyl, triazolyl, tetrazolyl, oxazolyl, isoxazolyl, oxadiazolyl, thiazolyl, isothiazolyl, thiadiazolyl, pyridyl, pyridazinyl, pyrimidinyl, pyrazinyl, indolizinyl, purinyl, naphthyridinyl, benzofuranyl and pteridinyl. The terms "heteroaryl" and "heteroar-", as used herein, also include groups in which a heteroaromatic ring is fused to one or more aryl, cycloaliphatic, or heterocyclyl rings, where the radical or point of attachment is on the heteroaromatic ring. Nonlimiting examples include indolyl, isoindolyl, benzothienyl, benzofuranyl, dibenzofuranyl, indazolyl, benzimidazolyl, benzthiazolyl, quinolyl, isoquinolyl, cinnolinyl, phthalazinyl, quinazolinyl, quinoxalinyl, 4H-quinolizinyl, carbazolyl, acridinyl, phenazinyl, phenothiazinyl, phenoxazinyl, tetrahydroquinolinyl, tetrahydroisoquinolinyl, and pyrido[2,3-b]-1,4-oxazin-3(4H)-one. A heteroaryl group may be mono- or bicyclic. The term "heteroaryl" may be used interchangeably with the terms "heteroaryl ring", "heteroaryl group", or "heteroaromatic", any of which terms include rings that are optionally substituted. The term "heteroaralkyl" refers to an alkyl group substituted by a heteroaryl, wherein the alkyl and heteroaryl portions independently are optionally substituted. In certain embodiments, the term "5- to 10-membered heteroaryl" refers to a 5- to 6-membered heteroaryl ring having 1 to 3 heteroatoms independently selected from nitrogen, oxygen, or sulfur, or an 8- to 10-membered bicyclic heteroaryl ring having 1 to 4 heteroatoms independently selected from nitrogen, oxygen, or sulfur. In certain embodiments, the term "5- to 12-membered heteroaryl" refers to a 5- to 6-membered heteroaryl ring having 1 to 3 heteroatoms independently selected from nitrogen, oxygen, or sulfur, or an 8- to 12-membered bicyclic heteroaryl ring having 1 to 4 heteroatoms independently selected from nitrogen, oxygen, or sulfur.

As used herein, the terms "heterocycle", "heterocyclyl", "heterocyclic radical", and "heterocyclic ring" are used interchangeably and refer to a stable 5- to 7-membered monocyclic or 7-14-membered polycyclic heterocyclic moiety that is either saturated or partially unsaturated, and having, in addition to carbon atoms, one or more, preferably one to four, heteroatoms, as defined above. When used in reference to a ring atom of a heterocycle, the term "nitrogen" includes a substituted nitrogen. As an example, in a saturated or partially unsaturated ring having 0-3 heteroatoms selected from oxygen, sulfur or nitrogen, the nitrogen may be N (as in 3,4-dihydro-2*H*-pyrrolyl), NH (as in pyrrolidinyl), or ⁺NR (as in *N*-substituted pyrrolidinyl). In some embodiments, the term "3- to 7-membered heterocyclic" refers to a 3- to 7-membered saturated or partially unsaturated monocyclic heterocyclic ring having 1 to 2 heteroatoms independently selected from nitrogen, oxygen, or sulfur. In some embodiments, the term "3- to 12-membered heterocyclic" refers to a 3- to 8-membered saturated or partially unsaturated monocyclic heterocyclic ring having 1 to 2 heteroatoms independently selected from nitrogen, oxygen, or sulfur, or a 7- to 12-membered saturated or partially unsaturated polycyclic heterocyclic ring having 1-3 heteroatoms independently selected from nitrogen, oxygen, or sulfur.

A heterocyclic ring can be attached to its pendant group at any heteroatom or carbon atom that results in a stable structure and any of the ring atoms can be optionally substituted. Examples of such saturated or partially unsaturated heterocyclic radicals include, without limitation, tetrahydrofuranyl, tetrahydrothienyl, pyrrolidinyl, pyrrolidonyl, piperidinyl, pyrrolinyl, tetrahydroquinolinyl, tetrahydroisoquinolinyl, decahydroquinolinyl, oxazolidinyl, piperazinyl, dioxanyl, dioxolanyl, diazepinyl, oxazepinyl, thiazepinyl, morpholinyl, and quinuclidinyl. The terms "heterocycle", "heterocyclyl", "heterocyclyl ring", "heterocyclic group", "heterocyclic moiety", and "heterocyclic radical", are used interchangeably herein, and also include groups in which a heterocyclyl ring is fused to one or more aryl, heteroaryl, or cycloaliphatic rings, such as indolinyl, 3*H*-indolyl, chromanyl, phenanthridinyl, or tetrahydroquinolinyl, where the radical or point of attachment is on the heterocyclyl ring. A heterocyclyl group may be mono- or bicyclic. The term "heterocyclylalkyl" refers to an alkyl group substituted by a heterocyclyl, wherein the alkyl and heterocyclyl portions independently are optionally substituted.

As used herein, the term "partially unsaturated" refers to a ring moiety that includes at least one double or triple bond. The term "partially unsaturated" is intended to encompass rings having multiple sites of unsaturation, but is not intended to include aryl or heteroaryl moieties, as herein defined.

As described herein, compounds of the invention may contain "optionally substituted" moieties. In general, the term "substituted", whether preceded by the term "optionally" or not, means that one or more hydrogens of the designated moiety are replaced with a suitable substituent. Unless otherwise indicated, an "optionally substituted" group may have a suitable substituent at each substitutable position of the group, and when more than one position in any given structure may be substituted with more than one substituent selected from a specified group, the substituent may be either the same or different at every position. Combinations of substituents envisioned by this invention are preferably those that result in the formation of stable or chemically feasible compounds. The term "stable", as used herein, refers to compounds that are not substantially altered when subjected to conditions to allow for their production, detection, and, in certain embodiments, their recovery, purification, and use for one or more of the purposes disclosed herein.

Suitable monovalent substituents on a substitutable carbon atom of an "optionally substituted" group are independently halogen; -(CH₂)₀₋₄R^{∘}; -(CH₂)₀₋₄OR^{∘}; -O-(CH₂)₀₋₄C(O)OR^{∘}; -(CH₂)₀₋₄CH(OR^{∘})₂; -(CH₂)₀₋₄SR^{∘}; -(CH₂)₀₋₄Ph, which may be substituted with R^{∘}; -(CH₂)₀₋₄O(CH₂)₀₋₁Ph which may be substituted with R^{∘}; -CH=CHPh, which may be substituted with R^{∘}; -NO₂; -CN; -N₃; -(CH₂)₀₋₄N(R^{∘})₂; -(CH₂)₀₋₄N(R^{∘})C(O)R^{∘}; -N(R^{∘})C(S)R^{∘}; -(CH₂)₀₋₄N(R^{∘})C(O)NR^{∘}₂; -N(R^{∘})C(S)NR^{∘}₂; -(CH₂)₀₋₄N(R^{∘})C(O)OR^{∘}; -N(R^{∘})N(R^{∘})C(O)R^{∘}; -N(R^{∘})N(R^{∘})C(O)NR^{∘}₂; -N(R^{∘})N(R^{∘})C(O)OR^{∘}; -(CH₂)₀₋₄C(O)R^{∘}; -C(S)R^{∘}; -(CH₂)₀₋₄C(O)OR^{∘}; -(CH₂)₀₋₄C(O)N(R^{∘})₂; -(CH₂)₀₋₄C(O)SR^{∘}; -(CH₂)₀₋₄C(O)OSiR^{∘}₃; -(CH₂)₀₋₄OC(O)R^{∘}; -OC(O)(CH₂)₀₋₄SR-, SC(S)SR°; -(CH₂)₀₋₄SC(O)R^{∘};-CH₂)₀₋₄C(O)NR^{∘}₂; -C(S)NR^{∘}₂; -C(S)SR°; -SC(S)SR°, -(CH₂)₀₋₄OC(O)NR^{∘}₂; -C(O)N(OR^{∘})R^{∘}; -C(O)C(O)R^{∘}; -C(O)CH₂C(O)R^{∘}; -C(NOR^{∘})R^{∘}; -(CH₂)₀₋₄SSR^{∘}; -(CH₂)₀₋₄S(O)₂R^{∘}; -(CH₂)₀₋₄S(O)₂OR^{∘}; -(CH₂)₀₋₄OS(O)₂R^{∘}; -S(O)₂NR^{∘}₂; -(CH₂)₀₋₄S(O)R^{∘}; -N(R^{∘})S(O)₂NR^{∘}₂; -N(R^{∘})S(O)₂R^{∘}; -N(OR^{∘})R^{∘}; -C(NH)NR^{∘}₂; -P(O)₂R^{∘}; -P(O)R^{∘}₂; -OP(O)R^{∘}₂; -OP(O)(OR^{∘})₂; SiR^{∘}₃; -(C₁₋₄-straight or branched alkylene)O-N(R^{∘})₂; or -(C₁₋₄ straight or branched alkylene)C(O)O-N(R^{∘})₂, wherein each R^{∘} may be substituted as defined below and is independently hydrogen, C₁₋₈ aliphatic, -CH₂Ph, -O(CH₂)₀₋₁Ph, or a 5-6-membered saturated, partially unsaturated, or aryl ring having 0-4 heteroatoms independently selected from nitrogen, oxygen, or sulfur, or, notwithstanding the definition above, two independent occurrences of R^{∘}, taken together with their intervening atom(s), form a 3-12-membered saturated, partially unsaturated, or aryl mono- or polycyclic ring having 0-4 heteroatoms independently selected from nitrogen, oxygen, or sulfur, which may be substituted as defined below.

Suitable monovalent substituents on R^{∘} (or the ring formed by taking two independent occurrences of R^{∘} together with their intervening atoms), are independently halogen, -(CH₂)₀₋₂R^{•}, -(haloR^{•}), -(CH₂)₀₋₂OH, -(CH₂)₀₋₂OR^{•}, -(CH₂)₀₋₂CH(OR^{•})₂; -O(haloR^{•}), -CN, -N₃, -(CH₂)₀₋₂C(O)R^{•}, -(CH₂)₀₋₂C(O)OH, -(CH₂)₀₋₂C(O)OR^{•}, -(CH₂)₀₋₄C(O)N(R^{∘})₂; -(CH₂)₀₋₂SR^{•}, -(CH₂)₀₋₂SH, -(CH₂)₀₋₂NH₂, -(CH₂)₀₋₂NHR^{•}, -(CH₂)₀₋₂NR^{•}₂, -NO₂, -SiR^{•}₃, -OSiR^{•}₃, -C(O)SR^{•}, -(C₁₋₄ straight or branched alkylene)C(O)OR^{•}, or -SSR^{•} wherein each R^{•} is unsubstituted or where preceded by "halo" is substituted only with one or more halogens, and is independently selected from C₁₋₄ aliphatic, -CH₂Ph, -O(CH₂)₀₋₁Ph, or a 5-6-membered saturated, partially unsaturated, or aryl ring having 0-4 heteroatoms independently selected from nitrogen, oxygen, or sulfur. Suitable divalent substituents on a saturated carbon atom of R^{•} include =O and =S.

Suitable divalent substituents on a saturated carbon atom of an "optionally substituted" group include the following: =O, =S, =NNR^{*}₂, =NNHC(O)R^{*}, =NNHC(O)OR^{*}, =NNHS(O)₂R^{*}, =NR^{*}, =NOR^{*}, -O(C(R^{*}₂))₂₋₃O-, or -S(C(R^{*}₂))₂₋₃S-, wherein each independent occurrence of R^{*} is selected from hydrogen, C₁₋₆ aliphatic which may be substituted as defined below, or an unsubstituted 5-6-membered saturated, partially unsaturated, or aryl ring having 0-4 heteroatoms independently selected from nitrogen, oxygen, or sulfur. Suitable divalent substituents that are bound to vicinal substitutable carbons of an "optionally substituted" group include: -O(CR^{*}₂)₂₋₃O-, wherein each independent occurrence of R^{*} is selected from hydrogen, C₁₋₆ aliphatic which may be substituted as defined below, or an unsubstituted 5-6-membered saturated, partially unsaturated, or aryl ring having 0-4 heteroatoms independently selected from nitrogen, oxygen, or sulfur.

Suitable substituents on the aliphatic group of R^{*} include halogen, -R^{•}, -(haloR^{•}), -OH, -OR^{•}, -O(haloR^{•}), -CN, -C(O)OH, -C(O)OR^{•}, -NH₂, -NHR^{•}, -NR^{•}₂, or -NO₂, wherein each R^{•} is unsubstituted or where preceded by "halo" is substituted only with one or more halogens, and is independently C₁₋₄ aliphatic, -CH₂Ph, -O(CH₂)₀₋₁Ph, or a 5-6-membered saturated, partially unsaturated, or aryl ring having 0-4 heteroatoms independently selected from nitrogen, oxygen, or sulfur.

Suitable substituents on a substitutable nitrogen of an "optionally substituted" group include -R^{†}, -NR^{†}₂, -C(O)R^{†}, -C(O)OR^{†}, -C(O)C(O)R^{†}, -C(O)CH₂C(O)R^{†}, -S(O)₂R^{†}, -S(O)₂NR^{†}₂, -C(S)NR^{†}₂, -C(NH)NR^{†}₂, or -N(R^{†})S(O)₂R^{†}; wherein each R^{†} is independently hydrogen, C₁₋₆ aliphatic which may be substituted as defined below, unsubstituted -OPh, or an unsubstituted 5-6-membered saturated, partially unsaturated, or aryl ring having 0-4 heteroatoms independently selected from nitrogen, oxygen, or sulfur, or, notwithstanding the definition above, two independent occurrences of R^{†}, taken together with their intervening atom(s) form an unsubstituted 3-12-membered saturated, partially unsaturated, or aryl mono- or bicyclic ring having 0-4 heteroatoms independently selected from nitrogen, oxygen, or sulfur.

Suitable substituents on the aliphatic group of R^{†} are independently halogen, -R^{•}, -(haloR^{•}), -OH, -OR^{•}, -O(haloR^{•}), -CN, -C(O)OH, -C(O)OR^{•}, -NH₂, -NHR^{•}, -NR^{•}₂, or -NO₂, wherein each R^{•} is unsubstituted or where preceded by "halo" is substituted only with one or more halogens, and is independently C₁₋₄ aliphatic, -CH₂Ph, -O(CH₂)₀₋₁Ph, or a 5-6-membered saturated, partially unsaturated, or aryl ring having 0-4 heteroatoms independently selected from nitrogen, oxygen, or sulfur.

When substituents are described herein, the term "radical" or "optionally substituted radical" is sometimes used. In this context, "radical" means a moiety or functional group having an available position for attachment to the structure on which the substituent is bound. In general the point of attachment would bear a hydrogen atom if the substituent were an independent neutral molecule rather than a substituent. The terms "radical" or "optionally-substituted radical" in this context are thus interchangeable with "group" or "optionally-substituted group".

As used herein, the "term head-to-tail" or "HT", refers to the regiochemistry of adjacent repeating units in a polymer chain. For example, in the context of poly(propylene carbonate) (PPC), the term head-to-tail based on the three regiochemical possibilities depicted below:

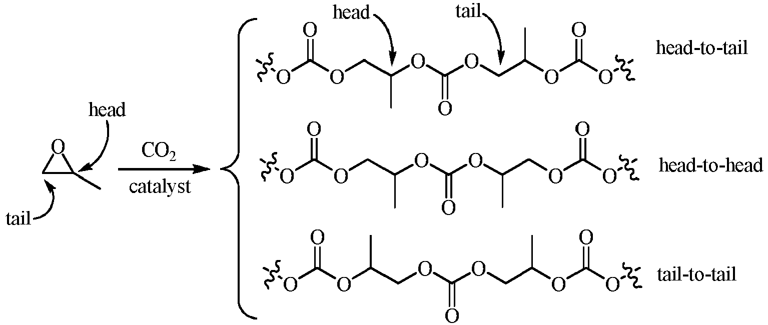

The term "head-to-tail ratio" or (H:T) refers to the proportion of head-to-tail linkages to the sum of all other regiochemical possibilities. With respect to the depiction of polymer structures, while a specific regiochemical orientation of monomer units may be shown in the representations of polymer structures herein, this is not intended to limit the polymer structures to the regiochemical arrangement shown but is to be interpreted to encompass all regiochemical arrangements including that depicted, the opposite regiochemistry, random mixtures, isotactic materials, syndiotactic materials, racemic materials, and/or enantioenriched materials and combinations of any of these unless otherwise specified.

As used herein the term "alkoxylated" means that one or more functional groups on a molecule (usually the functional group is an alcohol, amine, or carboxylic acid, but is not strictly limited to these) has appended to it a hydroxy-terminated alkyl chain. Alkoxylated compounds may comprise a single alkyl group or they may be oligomeric moieties such as hydroxyl-terminated polyethers. Alkoxylated materials can be derived from the parent compounds by treatment of the functional groups with epoxides.

### DETAILED DESCRIPTION OF THE INVENTION

The present invention provides methods for making polyurethane foams as defined in claim 1. In certain embodiments, the methods of this invention provide improved strategies for direct incorporation of CO₂ into polyurethane foam compositions. In certain embodiments, the inventive methods provided are defined broadly by two features:
1. the feature that at least some CO₂ utilized as a blowing agent for the foam is added directly to the formulation (i.e. as opposed to being generated in situ by reaction of water and isocyanate); and
2. the B-side formulation of the foam contains APC polyols derived from the copolymerization of CO₂ and one or more epoxides.

The present invention provides a method for producing a polyurethane foam composition, comprising the steps of:
providing an A-side composition comprising one or more polyisocyanates;
providing a B-side composition comprising one or more highly alternating polycarbonate polyols derived from the copolymerization of one or more epoxides and CO₂;
heating the B-side composition to a temperature of above 50 °C;
mixing the A-side composition, the heated B-side composition, and CO₂ to provide a foam mixture; and
allowing the foam mixture to cure into the polyurethane foam composition;
wherein at least a portion of the CO₂ is added as a separate stream, or is provided dissolved in the B-side composition. The highly alternating polycarbonate polyol is characterized in that it has at least 95% carbonate linkages

In certain embodiments, a method comprises adding CO₂ as a separate feedstream to the site where an A-side composition and a B-side composition are mixed. In other embodiments, a method comprises adding liquid CO₂ as a separate feedstream to the mixture of an A-side composition and B-side composition (i.e. the CO₂ is added at a point after the mixing of the A-side and B-side). In certain embodiments, the step of adding CO₂ comprises feeding a liquid CO₂ stream. In certain embodiments, the step of adding of the CO₂ comprises feeding CO₂ as a compressed gas stream.

In certain embodiments, a method comprises dissolving CO₂ in an APC polyol prior to mixing an A-side with a B-side. In certain embodiments, a B-side composition contains dissolved CO₂ and a B-side composition is provided at an elevated pressure. In certain embodiments, a B-side composition may include other dissolved gasses such as nitrogen, argon, helium, deoxygenated air, hydrocarbons, fluorinated hydrocarbons and the like, either in place of or in addition to carbon dioxide.

In certain embodiments, a method comprises heating an APC polyol (or a B-side composition containing an APC polyol) to a temperature above about 50 °C. In certain embodiments, a polyol or B-side composition is heated to a temperature of about 70 °C, about 75 °C, about 80 °C, about 90 °C, about 100 °C, about 110 °C, about 120 °C, about 140 °C, about 160 °C, or about 180 °C.

In certain embodiments, methods of the present invention are characterized in that a B-side composition contains a relatively small amount of water compared to a typical foam formulation for the type of foam being produced (i.e. rigid, flexible, viscoelastic, etc.). In certain embodiments, methods of the present invention are characterized in that a B-side composition contains less than 10 molar equivalents of water relative to moles of active -OH provided by a polyol present in a B-side formulation. In certain embodiments, methods of the present invention are characterized in that a B-side composition contains less than 8, less than 6, less than 5, less than 4, less than 3, or less than 2 molar equivalents of water relative to the moles of active -OH groups provided by a polyol present in a B-side formulation. In certain embodiments, methods of the present invention are characterized in that a B-side composition contains between 0 and 5 molar equivalents of water relative to moles of active -OH provided by a polyol present in a B-side formulation. In certain embodiments, methods of the present invention are characterized in that a B-side composition contains between 0 and 3 molar equivalents of water relative to moles of active -OH provided by a polyol present in a B-side formulation. In certain embodiments, methods of the present invention are characterized in that a B-side composition contains more polyol -OH groups than molecules of water. In certain embodiments, methods of the present invention are characterized in that a B-side composition contains at least twice as many polyol -OH groups as molecules of water.

In certain embodiments, a highly alternating polycarbonate polyol contained in a B-side composition is derived from copolymerization of CO₂ and one or more epoxides. In certain embodiments, a highly alternating polycarbonate polyol contained in a B-side composition is derived from copolymerization of CO₂ and propylene oxide. In certain embodiments, a highly alternating polycarbonate polyol contained in a B-side composition is derived from copolymerization of CO₂ and a mixture propylene oxide and at least one other epoxide selected from the group consisting of: ethylene oxide, 1-butene oxide, 2-butene oxide, butadiene monoepoxide, 1-hexene oxide, cyclohexene oxide, cylopentene oxide, 3-vinyl cyclohexene oxide, 3-ethyl cyclohexene oxide, epichlorohydrin, glycidol ethers, glycidol esters, and epoxides of higher alpha olefins.

In certain embodiments, a highly alternating polycarbonate polyol contained in a B-side composition is derived from copolymerization of CO₂ and ethylene oxide. In certain embodiments, a highly alternating polycarbonate polyol contained in a B-side composition is derived from copolymerization of CO₂ and a mixture ethylene oxide and at least one other epoxide selected from the group consisting of: 1-butene oxide, 2-butene oxide, butadiene monoepoxide, 1-hexene oxide, cyclohexene oxide, cylopentene oxide, 3-vinyl cyclohexene oxide, 3-ethyl cyclohexene oxide, epichlorohydrin, glycidol ethers, glycidol esters, and epoxides of higher alpha olefins.

Suitable APC polyols include those described in Appendix A at the end of this specification. In certain embodiments, a B-side composition comprises a polyol selected from the group consisting of: 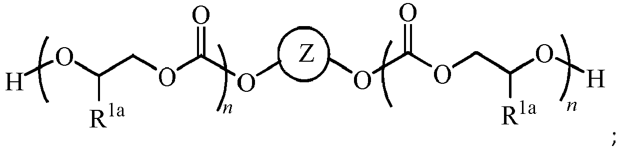 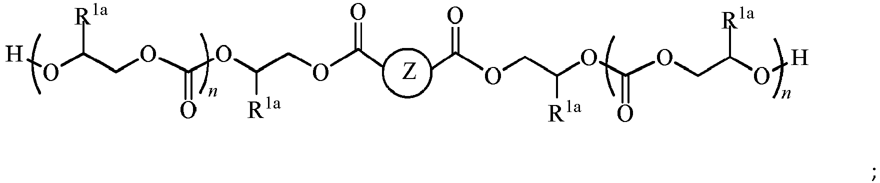 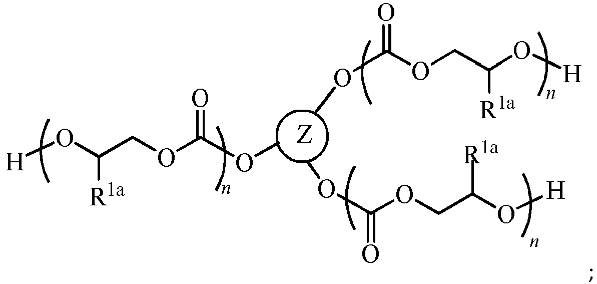 and 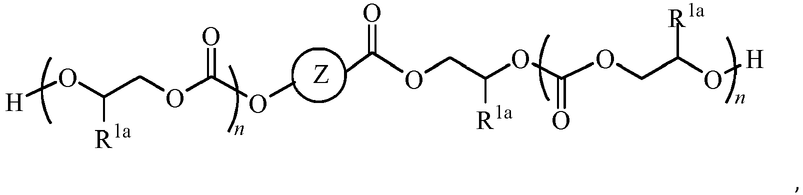 wherein n is at each occurrence, independently an integer from about 2 to about 100; 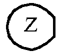 is a multivalent moiety; and
R^{1a} is, independently at each occurrence in the polymer chain, selected from the group consisting of -H, -CH₃, -CH₂CH₃, -CH₂Cl, -CH₂OR^{x}, -CH₂OC(O)R^{x}, and -(CH₂)*_{q}*CH₃, where each R^{x} is independently an optionally substituted moiety selected from the group consisting of C₁₋₂₀ aliphatic, C₁₋₂₀ heteroaliphatic, 3- to 14-membered carbocyclic, 6- to 10-membered aryl, 5- to 10-membered heteroaryl, and 3- to 12-membered heterocyclic, and q is an integer from 2 to 40.

In certain embodiments, where a highly alternating APC polyol contained in the B-side composition has one of the structures shown in the previous paragraph, R^{1a} is -CH₃. In certain embodiments, R^{1a} is -CH₂CH₃. In certain embodiments, R^{1a} is a mixture of -H and -CH₃. In certain embodiments, R^{1a} is a mixture of H and -CH₂CH₃. In certain embodiments, R^{1a} is a mixture of H and -CH₂Cl. In certain embodiments, R^{1a} is a mixture of -CH₃ and -CH₂CH₃. In certain embodiments, R^{1a} is a mixture of -CH₃ and -CH₂Cl.

In certain embodiments, a highly alternating APC polyol contained in a B-side composition is characterized in that it has an Mn between about 500 g/mol and about 7,500 g/mol. In certain embodiments, an APC polyol has an Mn between about 3,000 g/mol and about 6,000 g/mol. In certain embodiments, an APC polyol has an Mn between about 500 g/mol and about 1,500 g/mol. In certain embodiments, an APC polyol has an Mn between about 1,000 g/mol and about 2,500 g/mol. In certain embodiments, an APC polyol has an Mn between about 2,500 g/mol and about 5,000 g/mol.

In certain embodiments, a highly alternating APC polyol contained in a B-side composition is characterized in that it has a viscosity at 70 °C of between about 2,500 and about 10,000 cp. In certain embodiments, an APC polyol has a viscosity at 70 °C of between about 3,000 and about 8,000 cp. In certain embodiments, an APC polyol has a viscosity at 70 °C of between about 5,000 and about 7,000 cp. In certain embodiments, an APC polyol has a viscosity at 70 °C of between about 1,500 and about 3,000 cp.

In certain embodiments, a highly alternating APC polyol contained in a B-side composition is characterized in that it has functional number of 2. In certain embodiments, a highly alternating APC polyol contained in a B-side composition is characterized in that it has functional number greater than 2. In certain embodiments, an APC polyol has a functional number between 2 and 3. In certain embodiments, an APC polyol has a functional number of approximately 2, approximately 2.4, approximately 2.6, approximately 2.7, approximately 2.8, approximately 2.9, or approximately 3.

In certain embodiments, methods of the present invention are characterized in that a B-side composition contains APC polyol with a highly alternating structure. In certain embodiments, such compositions comprise APC polyol chains containing greater than 95%, greater than 96%, greater than 97%, greater than 98%, greater than 99%, or greater than 99.5% carbonate linkages. In certain embodiments, the compositions comprise APC polyol chains with no detectable ether linkages (e.g. as determined by ¹H or ¹³C NMR spectroscopy).

In certain embodiments, methods of the present invention are characterized in that a B-side composition contains APC polyol with a narrow molecular weight distribution. In certain embodiments, the PDI of an APC polyol is less than about 2. In certain embodiments, the PDI is less than about 1.6, less than about 1.4, less than about 1.3, less than about 1.2, or less than about 1.1.

In the methods above, an A-side can contain any polyisocyanate suitable for foam formulation. Many such compositions are known in the art. In certain embodiments, an A-side composition in the methods provided herein contain one or more of the materials listed in Appendix B below.

In certain embodiments, a B-side composition comprises the APC polyols in combination with one or more additional polyols and/or one or more additives. In certain embodiments, the additives are selected from the group consisting of: solvents, water, catalysts, surfactants, blowing agents, colorants, UV stabilizers, flame retardants, antimicrobials, plasticizers, cell-openers, antistatic compositions, compatibilizers, and the like. In certain embodiments, the B-side compositions comprise additional reactive small molecules such as amines, alcohols, thiols, or carboxylic acids that participate in bond-forming reactions with isocyanates.

### Additional Polyols

In certain embodiments, B-side compisitions of the present invention comprise APC polyols as described above in combination with one or more additional polyols such as are traditionally used in polyurethane foam compositions. In embodiments where B-side compositions of the present invention comprise or are derived from a mixture of one or more APC polyols and one or more additional polyols, the additional polyols are selected from the group consisting of polyether polyols, polyester polyols, polystyrene polyols, polyether-carbonate polyols, polyether-ester carbonates, and mixtures of any two or more of these. In certain embodiments, B-side compositions of the present invention comprise or are derived from a mixture of one or more APC polyols as described herein and one or more other polyols selected from the group consisting of materials available commercially under the trade names: Voranol® (Dow), SpecFlex® (Dow), Tercarol® (Dow), Caradol® (Shell), Hyperliter®, Acclaim® (Bayer Material Science), Ultracel® (Bayer Material Science), Desmophen® (Bayer Material Science), and Arcol® (Bayer Material Science).

In certain embodiments, B-side compositions of the present invention comprise mixtures containing polyether polyols in combination with one or more APC polyols as described herein. In certain embodiments, such polyether polyols are characterized in that they have an Mn between about 500 and about 10,000 g/mol. In certain embodiments, such polyether polyols have an Mn between about 500 and about 5,000 g/mol. In certain embodiments, polyether polyols comprise polyethylene glycol. In certain embodiments, polyether polyols comprise polypropylene glycol.

Polyether polyols that may be present include those which can be obtained by known methods, for example, polyether polyols can be produced by anionic polymerization- from one or more alkylene oxides with 2 to 4 carbons in the alkylene radical-with alkali hydroxides such as sodium hydroxide or potassium hydroxide or alkali alcoholates, such as sodium methylate, sodium ethylate, potassium ethylate, or potassium isopropylate as catalysts and with the addition of at least one initiator molecule containing 2 to 8, preferably 3 to 8, reactive hydrogens, or by cationic polymerization with Lewis acids such as antimony pentachloride, boron trifluoride etherate, etc., or bleaching earth as catalysts. Any suitable alkylene oxide may be used such as 1,3-propylene oxide, 1,2- and 2,3 butylene oxide, amylene oxides, styrene oxide, and preferably ethylene oxide and propylene oxide and mixtures of these oxides. The polyalkylene polyether polyols may be prepared from other starting materials such as tetrahydrofuran and alkylene oxide-tetrahydrofuran mixtures; epihalohydrins such as epichlorohydrin; as well as aralkylene oxides such as styrene oxide. The polyalkylene polyether polyols may have either primary or secondary hydroxyl groups, preferably secondary hydroxyl groups from the addition of propylene oxide onto an initiator because these groups are slower to react. Included among the polyether polyols are polyoxyethylene glycol, polyoxypropylene glycol, polyoxybutylene glycol, polytetramethylene glycol, block copolymers, for example, combinations of polyoxypropylene and polyoxyethylene glycols, poly-1,2-oxybutylene and polyoxyethylene glycols, poly-1,4-tetramefhylene and polyoxyethylene glycols, and copolymer glycols prepared from blends or sequential addition of two or more alkylene oxides. The polyalkylene polyether polyols may be prepared by any known process such as, for example, the process disclosed by Wurtz in Encyclopedia of Chemical Technology, Vol. 7, pp. 257-262, published by Interscience Publishers, Inc. (1951) or in U.S. Pat. No. 1,922,459. Polyethers include the alkylene oxide addition products of polyhydric alcohols such as ethylene glycol, propylene glycol, dipropylene glycol, trimethylene glycol, 1,2- butanediol, 1,5-pentanediol, 1,6-hexanediol, 1,7-heptanediol, hydroquinone, resorcinol glycerol, glycerine, 1,1,1-trimethylol-propane, 1,1,1-trimethylolethane, pentaerythritol, 1,2,6-hexanetriol, a-methyl glucoside, sucrose, and sorbitol. Also included within the term "polyhydric alcohol" are compounds derived from phenol such as 2,2-bis(4-hydroxyphenyl)-propane, commonly known as Bisphenol A. In some embodiments, a polyol composition comprises at least one polyol which is initiated with a compound having at least two primary or secondary amine groups, a polyhydric alcohol having 4 or more hydroxyl groups, such as sucrose, or a mixture of initiators employing a polyhydric alcohol having at least 4 hydroxyl groups and compounds having at least two primary or secondary amine groups. Suitable organic amine initiators which may be condensed with alkylene oxides include aromatic amines-such as aniline, N-alkylphenylene-diamines, 2,4'-, 2,2'-, and 4,4'-methylenedianiline, 2,6- or 2,4-toluenediamine, vicinal toluenediamines, o-chloroaniline, p-aminoaniline, 1,5-diaminonaphthalene, methylene dianiline, the various condensation products of aniline and formaldehyde, and the isomeric diaminotoluenes; and aliphatic amines such as mono-, di-, and trialkanolamines, ethylene diamine, propylene diamine, diethylenetriamine, methylamine, triisopropanolamine, 1,3-diaminopropane, 1,3-diaminobutane, and 1,4-diaminobutane. In certain embodiments, amines include monoethanolamine, vicinal toluenediamines, ethylenediamines, and propylenediamine. In some embodiments, aromatic polyether polyols contemplated for use in this invention are an alkylene oxide adduct of phenol/formaldehyde/alkanolamine resin, frequently called a "Mannich" polyol such as disclosed in U.S. Pat. Nos. 4,883,826; 4,939,182; and 5,120, 815.

In certain embodiments where additional polyols are present, they comprise from about 5 weight percent to about 95 weight percent of the total polyol content with the balance of the polyol mixture made up of one or more APC polyols described above and specific embodiments herein. In certain embodiments, up to about 75 weight percent of the total polyol content of the B-side mixture is APC polyol. In certain embodiments, up to about 50 weight percent of the total polyol content of the B-side mixture is APC polyol. In certain embodiments, up to about 40 weight percent, up to about 30 weight percent, up to about 25 weight percent, up to about 20 weight percent, up to about 15 weight percent, or up to about 10 weight percent of the total polyol content of the B-side mixture is APC polyol. In certain embodiments, at least about 5 weight percent of the total polyol content of the B-side mixture is APC polyol. In certain embodiments, at least about 10 weight percent of the total polyol content of the B-side mixture is APC polyol. In certain embodiments, at least about 15 weight percent, at least about 20 weight percent, at least about 25 weight percent, at least about 40 weight percent, or at least about 50 weight percent, of the total polyol content of the B-side mixture is APC polyol.

### Catalysts

In certain embodiments, B-side compositions contain one or more catalysts for the reaction of the polyol (and water, if present) with the polyisocyanate. Any suitable urethane catalyst may be used, including tertiary amine compounds and organometallic compounds. Exemplary tertiary amine compounds include triethylenediamine, N-methylmorpholine, N,N-dimethylcyclohexylamine, pentamethyldiethylenetriamine, tetramethylethylenediamine, 1-methyl-4-dimethylaminoethylpiperazine, 3-methoxy-N-dimethylpropylamine, N-ethylmorpholine, diethylethanolamine, N-cocomorpholine, N,N-dimethyl- N',N'-dimethyl isopropylpropylenediamine, N,N-diethyl-3-diethylaminopropylamine dimethylbenzylamine, 1,8-Diazabicycloundec-7-ene (DBU), 1,4-diazabicyclo[2.2.2]octane (DABCO) triazabicyclodecene (TBD), and N-methyltriazabicyclodecene. (MTBD) Exemplary organometallic catalysts include organomercury, organolead, organoferric and organotin catalysts. Suitable tin catalysts include stannous chloride, tin salts of carboxylic acids such as dibutyltin dilaurate, as well as other organometallic compounds such as are disclosed in U.S. Pat. No. 2,846,408 and elsewhere. A catalyst for the trimerization of polyisocyanates, resulting in a polyisocyanurate, such as an alkali metal alkoxide may also optionally be employed herein. Such catalysts are used in an amount which measurably increases the rate of polyurethane or polyisocyanurate formation.

In certain embodiments, where B-side compositions of the present invention comprise catalysts, the catalysts comprise tin based materials. In certain embodiments, tin catalysts included in the B-side compositions are selected from the group consisting of: di-butyl tin dilaurate, dibutylbis(laurylthio)stannate, dibutyltinbis(isooctylmercapto acetate), dibutyltinbis(isooctylmaleate), tin octanoate, and mixtures of any two or more of these.

In certain embodiments, catalysts included in the B-side compositions comprise tertiary amines. In certain embodiments, catalysts included in the B-side compositions are selected from the group consisting of: DABCO, pentametyldipropylenetriamine, bis(dimethylamino ethyl ether), pentamethyldiethylenetriamine, DBU phenol salt, dimethylcyclohexylamine, 2,4,6-tris(N,N-dimethylaminomethyl)phenol (DMT-30), 1,3,5-tris(3-dimethylaminopropyl)hexahydro-s-triazine, ammonium salts, and combinations or formulations of any of these.

Typical amounts of catalyst are 0.001 to 10 parts of catalyst per 100 parts by weight of total polyol in the B-side mixture. In certain embodiments, catalyst levels in the formulation, when used, range between about 0.001 pph (weight parts per hundred) and about 3 pph based on the amount of polyol present in the B-side mixture. In certain embodiments, catalyst levels range between about 0.05 pph and about 1 pph, or between about 0.1 pph and about 0.5 pph.

### Blowing agents

In certain embodiments, B-side compositions of the present invention contain blowing agents. Blowing agents may be chemical blowing agents (typically molecules that react with A-side components to liberate CO₂ or other volatile compounds) or they may be physical blowing agents (typically molecules with a low boiling point that vaporize during the foam formation. Many blowing agents are known in the art and may be applied to B-side compositions of the present invention according to conventional methodology. The choice of blowing agent and the amounts added can be a matter of routine experimentation.

In certain embodiments, the blowing agent comprises a chemical blowing agent. In certain embodiments, water is present as a blowing agent. Water functions as a blowing agent by reacting with a portion of the isocyanate in an A-side mixture to produce carbon dioxide gas. Similarly, formic acid can be included as a blowing agent. Formic acid functions as a blowing agent by reacting with a portion of the isocyanate to produce carbon dioxide and carbon monoxide gas.

In certain embodiments, water is present in an amount of from 0.5 to 20 parts per 100 parts by weight of the polyol in a B-side composition. In certain embodiments, water is present from about 1 to 10 parts, from about 2 to 8 parts, or from about 4 to 6 parts per 100 parts by weight of polyol in a B-side composition. In certain embodiments, it is advantageous not to exceed 2 parts of water, not to exceed 1.5 parts of water, or not to exceed 0.75 parts of water. In certain embodiments, it is advantageous to have water absent.

In certain embodiments, formic acid is present in an amount of from 0.5 to 20 parts per 100 parts by weight of the polyol in a B-side composition. In certain embodiments, formic acid is present from about 1 to 10 parts, from about 2 to 8 parts, or from about 4 to 6 parts per 100 parts by weight of polyol in the B-side composition.

In certain embodiments, physical blowing agents can be used. Suitable physical blowing agents include hydrocarbons, fluorine-containing organic molecules, hydrocarbons, chlorocarbons, acetone, methyl formate and carbon dioxide. In some embodiments, fluorine-containing organic molecules comprise perfluorinated compounds, chlorofluorocarbons, hydrochlorofluorocarbons, and hydrofluorocarbons. Suitable hydrofluoroalkanes are *C₁₋₄* compounds including difiuoromethane (R-32), 1,1,1,2-tetrafluoroethane (R-134a), 1,1-difluoroethane (R-152a), difiuorochloroethane (R-142b), trifiuoromethane (R-23), heptafluoropropane (R-227a), hexafluoropropane (R136), 1,1,1-trifluoroefhane (R-133), fluoroethane (R-161), 1,1,1,2,2-pentafluoropropane (R-245fa), pentafluoropropylene (R2125a), 1,1,1,3-tetrafiuoropropane, tetrafhioropropylene (R-2134a), 1,1,2,3,3-pentafluoropropane and 1,1,1,3,3-pentafiuoro-*n*-butane.

In certain embodiments, when a hydrofluorocarbon blowing agent is present in the B-side mixture, it is selected from the group consisting of: tetrafluoroethane (R-134a), pentafluoropropane (R-245fa) and pentafluorobutane (R-365).

Suitable hydrocarbons for use as blowing agents include nonhalogenated hydrocarbons such as butane, isobutane, 2,3-dimethylbutane, *n-* and *i*-pentane isomers, hexane isomers, heptane isomers and cycloalkanes including cyclopentane, cyclohexane, and cycloheptane. In some embodiments, hydrocarbons for use as blowing agents include cyclopentane, n-pentane, and iso-pentane. In certain embodiments, a B-side composition comprises a physical blowing agent selected from the group consisting of tetrafluoroethane (R-134a), pentafluoropropane (R-245fa), pentafluorobutane (R-365), cyclopentane, n-pentane, and iso-pentane.

In certain embodiments where a physical blowing agent is present, it is used in an amount of from about 1 to about 20 parts per 100 parts by weight of a polyol in the B-side composition. In certain embodiments, a physical blowing agent is present from 2 to 15 parts, or from 4 to 10 parts per 100 parts by weight of the polyol in a B-side composition.

### Reactive small molecules

In certain embodiments, B-side compositions of the present invention include one or more small molecules reactive toward isocyanates. In certain embodiments, reactive small molecules included in B-side compositions comprise organic molecules having one or more functional groups selected from the group consisting of alcohols, amines, carboxylic acids, thiols, and combinations of any two or more of these. In some embodiments, a non-polymeric small molecule has a molecular weight less than 1,000 g/mol, or less than 1,500 g/mol.

In certain embodiments, B-side compositions of the present invention include one or more alcohols. In certain embodiments, B-side compositions include polyhydric alcohols.

In certain embodiments, reactive small molecules included in the inventive B-side compositions comprise dihydric alcohols. In certain embodiments, the dihydric alcohol comprises a C₂₋₄₀ diol. In certain embodiments, the dihydric alcohol is selected from the group consisting of: 1,2-ethanediol, 1,2-propanediol, 1,3-propanediol, 1,2-butanediol, 1,3-butanediol, 1,4-butanediol, 1,5-pentanediol, 2,2-dimethylpropane-1,3-diol, 2-butyl-2-ethylpropane-1,3-diol, 2-methyl-2,4-pentane diol, 2-ethyl-1,3-hexane diol, 2-methyl-1,3-propane diol, 1,5-hexanediol, 1,6-hexanediol, 1,8-octanediol, 1,10-decanediol, 1,12-dodecanediol, 2,2,4,4-tetramethylcyclobutane-1,3-diol, 1,3-cyclopentanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, isosorbide, glycerol monoesters, glycerol monoethers, trimethylolpropane monoesters, trimethylolpropane monoethers, pentaerythritol diesters, pentaerythritol diethers, and alkoxylated derivatives of any of these.

In certain embodiments, a reactive small molecule included in B-side compositions comprises a dihydric alcohol selected from the group consisting of: diethylene glycol, triethylene glycol, tetraethylene glycol, higher poly(ethylene glycol), such as those having number average molecular weights of from 220 to about 2000 g/mol, dipropylene glycol, tripropylene glycol, and higher poly(propylene glycols) such as those having number average molecular weights of from 234 to about 2000 g/mol.

In certain embodiments, a reactive small molecule included in B-side compositions comprises an alkoxylated derivative of a compound selected from the group consisting of: a diacid, a diol, or a hydroxy acid. In certain embodiments, alkoxylated derivatives comprise ethoxylated or propoxylated compounds.

In certain embodiments, a reactive small molecule included in B-side compositions comprises a polymeric diol. In certain embodiments, a polymeric diol is selected from the group consisting of polyethers, polyesters, hydroxy-terminated polyolefins, polyether-copolyesters, polyether polycarbonates, polycarbonate-copolyesters, and alkoxylated analogs of any of these. In certain embodiments, a polymeric diol has an average molecular weight less than about 2000 g/mol.

In some embodiments, a reactive small molecule included in B-side compositions comprises a triol or higher polyhydric alcohol. In certain embodiments, a reactive small molecule is selected from the group consisting of: glycerol, 1,2,4-butanetriol, 2-(hydroxymethyl)-1,3-propanediol; hexane triols, trimethylol propane, trimethylol ethane, trimethylolhexane, 1,4-cyclohexanetrimethanol, pentaerythritol mono esters, pentaerythritol mono ethers, and alkoxylated analogs of any of these. In certain embodiments, alkoxylated derivatives comprise ethoxylated or propoxylated compounds. In certain embodiments, a reactive small molecule is a polyalcohol including those having from 2 to 12 carbon atoms, preferably from 2 to 8 carbon atoms, such as ethylene glycol, diethylene glycol, neopentyl glycol, butanediols, hexanediol, and the like, and mixtures thereof.

In some embodiments, a reactive small molecule comprises a polyhydric alcohol with four to six hydroxy groups. In certain embodiments, a reactive small molecule comprises dipentaerithrotol or an alkoxylated analog thereof. In certain embodiments, a reactive small molecule comprises sorbitol or an alkoxylated analog thereof.

In certain embodiments, a reactive small molecule comprises a hydroxycarboxylic acid having the general formula (HO)*ₓ*(COOH)*_{y}*, wherein Q is a straight or branched hydrocarbon radical containing 1 to 12 carbon atoms, and x and *y* are each integers from 1 to 3. In certain embodiments, a reactive small molecule comprises a diol carboxylic acid. In certain embodiments, a reactive small molecule comprises a bis(hydroxylalkyl) alkanoic acid. In certain embodiments, a reactive small molecule comprises a bis(hydroxylmethyl) alkanoic acid. In certain embodiments the diol carboxylic acid is selected from the group consisting of 2,2 bis-(hydroxymethyl)-propanoic acid (dimethylolpropionic acid, DMPA) 2,2-bis(hydroxymethyl) butanoic acid (dimethylolbutanoic acid; DMBA), dihydroxysuccinic acid (tartaric acid), and 4,4'-bis(hydroxyphenyl) valeric acid. In certain embodiments, a reactive small molecule comprises an N,N-bis(2-hydroxyalkyl)carboxylic acid.

In certain embodiments, a reactive small molecule comprises a polyhydric alcohol comprising one or more amino groups. In certain embodiments, a reactive small molecule comprises an amino diol. In certain embodiments, a reactive small molecule comprises a diol containing a tertiary amino group. In certain embodiments, an amino diol is selected from the group consisting of: diethanolamine (DEA), *N*-methyldiethanolamine (MDEA), *N-*ethyldiethanolamine (EDEA), *N*-butyldiethanolamine (BDEA), *N*,*N*-bis(hydroxyethyl)-α-amino pyridine, dipropanolamine, diisopropanolamine (DIPA), *N*-methyldiisopropanolamine, Diisopropanol-p-toluidine, N,N-Bis(hydroxyethyl)-3-chloroaniline, 3-diethylaminopropane-1,2-diol, 3-dimethylaminopropane-1,2-diol and *N*-hydroxyethylpiperidine. In certain embodiments, a reactive small molecule comprises a diol containing a quaternary amino group. In certain embodiments, a reactive small molecule comprising a quaternary amino group is an acid salt or quaternized derivative of any of the amino alcohols described above.

In certain embodiments, a reactive small molecule is selected from the group consisting of: inorganic or organic polyamines having an average of about 2 or more primary and/or secondary amine groups, polyalcohols, ureas, and combinations of any two or more of these. In certain embodiments, a reactive small molecule is selected from the group consisting of: diethylene triamine (DETA), ethylene diamine (EDA), meta-xylylenediamine (MXDA), aminoethyl ethanolamine (AEEA), 2-methyl pentane diamine, and the like, and mixtures thereof. Also suitable for practice in the present invention are propylene diamine, butylene diamine, hexamethylene diamine, cyclohexylene diamine, phenylene diamine, tolylene diamine, 3,3-dichlorobenzidene, 4,4'-methylene-bis-(2-chloroaniline), 3,3-dichloro-4,4-diamino diphenylmethane, and sulfonated primary and/or secondary amines. In certain embodiments, a reactive small molecule is selected from the group consisting of: hydrazines, substituted hydrazines, hydrazine reaction products, and the like, and mixtures thereof. Suitable ureas include urea and its derivatives, and the like, and mixtures thereof.

In certain embodiments, reactive small molecules containing at least one basic nitrogen atom are selected from the group consisting of: mono-, bis- or polyalkoxylated aliphatic, cycloaliphatic, aromatic or heterocyclic primary amines, N-methyl diethanolamine, N-ethyl diethanolamine, N-propyl diethanolamine, N-isopropyl diethanolamine, N-butyl diethanolamine, N-isobutyl diethanolamine, N-oleyl diethanolamine, N-stearyl diethanolamine, ethoxylated coconut oil fatty amine, N-allyl diethanolamine, N-methyl diisopropanolamine, N-ethyl diisopropanolamine, N-propyl diisopropanolamine, N-butyl diisopropanolamine, cyclohexyl diisopropanolamine, N,N-diethoxylaniline, N,N-diethoxyl toluidine, N,N-diethoxyl-1-aminopyridine, N,N'-diethoxyl piperazine, dimethyl-bis-ethoxyl hydrazine, N,N'-bis-(2-hydroxyethyl)-N,N'-diethylhexahydr op-phenylenediamine, N-12-hydroxyethyl piperazine, polyalkoxylated amines, propoxylated methyl diethanolamine, N-methyl-N,N-bis-3-aminopropylamine, N-(3-aminopropyl)-N,N'-dimethyl ethylenediamine, N-(3-aminopropyl)-N-methyl ethanolamine, N,N'-bis-(3-aminopropyl)-N,N'-dimethyl ethylenediamine, N,N'-bis-(3-aminopropyl)-piperazine, N-(2-aminoethyl)-piperazine, N, N'-bisoxyethyl propylenediamine, 2,6-diaminopyridine, diethanolaminoacetamide, diethanolamidopropionamide, N,N-bisoxyethylphenyl thiosemicarbazide, N,N-bis-oxyethylmethyl semicarbazide, p,p'-bis-aminomethyl dibenzyl methylamine, 2,6-diaminopyridine, 2-dimethylaminomethyl-2-methylpropanel, 3-diol. In certain embodiments, chain-extending agents are compounds that contain two amino groups. In certain embodiments, chain-extending agents are selected from the group consisting of: ethylene diamine, 1,6-hexamethylene diamine, and 1,5-diamino-1-methyl-pentane.

### Additives

In addition to the above components, B-side mixtures of the present invention may optionally contain various additives as are known in the art of polyurethane foam technology. Such additives may include, but are not limited to solvents, compatibilizers, colorants, surfactants, flame retardants, antistatic compounds, antimicrobials, UV stabilizers, plasticizers, and cell openers.

### Solvents

If desired, the polyurethanes or pre-polymers (see *infra*) can be dispersed in a solvent which can include water or organic solvents known to those skilled in the art. Suitable solvents can include aliphatic, aromatic, or halogenated hydrocarbons, ethers, polyether polyols, esters, ketones, lactones, sulfones, nitriles, amides, nitromethane, propylene carbonate, dimethyl carbonate and the like. Representative examples include, but are not limited to: acetone, acetonitrile, benzene, butanol, butyl acetate, g-butyrolactone, butyl caribitl acetate, carbitol acetate, chloroform, cyclohexane, 1,2-dichloromethane, dibasic ester, diglyme, 1,2-dimethoxyethane, dimethylacetamide, dimethylsulfoxide, dimethformamide, 1,4-dioxane, ethanol, ethyl acetate, ethyl ether, ethylene glycol, hexane, hydroxylmethyl methacrylate, isopropyl acetate, methanol, methyl acetate, methyl amyl ketone, methyl isobutyl ketone, methylene chloride, methyl ethyl ketone, monoglyme, methyl methacrylate, propylene carbobonate, propylene oxide, styrene, alpha-terpineol, tetrahydrafuran, texanol, toluene, diethyl succinate, diethylene glycol methyl ether, ethylene glycol diacetate, triethyl phosphate and the like.

### Colorants

In certain embodiments, B-side mixtures of the present invention comprise one or more suitable colorants. Many foam products are color coded during manufacture to identify product grade, to conceal yellowing, or to make a consumer product. The historical method of coloring foam was to blend in traditional pigments or dyes. Typical inorganic coloring agents included titanium dioxide, iron oxides and chromium oxide. Organic pigments originated from the azo/diazo dyes, phthalocyanines and dioxazines, as well as carbon black. Typical problems encountered with these colorants included high viscosity, abrasive tendencies, foam instability, foam scorch, migrating color, and a limited range of available colors. Recent advances in the development of polyol-bound colorants are described in:
Miley, J. W.; Moore, P. D. "Reactive Polymeric Colorants For Polyurethane", Proceedings Of The SPI-26th Annual Technical Conference; Technomic: Lancaster, Pa., 1981; 83-86.
Moore, P. D.; Miley, J. W.; Bates, S. H.; "New Uses For Highly Miscible Liquid Polymeric Colorants In The Manufacture of Colored Urethane Systems"; Proceedings of the SPI-27th Annual Technical/Marketing Conference; Technomic: Lancaster, Pa., 1982; 255-261.
Bates, S. H.; Miley, J. W. "Polyol-Bound Colorants Solve Polyurethane Color Problems";
Proceedings Of The SPI-30th Annual Technical/ Marketing Conference; Technomic: Lancaster, Pa., 1986; 160-165
Vielee, R. C.; Haney, T. V. "Polyurethanes"; In Coloring of Plastics;Webber, T. G., Ed., Wiley-Interscience: New York, 1979, 191-204.

### UV Stabilizers

In certain embodiments, B-side mixtures of the present invention comprise one or more suitable UV stabilizers. Polyurethanes based on aromatic isocyanates will typically turn dark shades of yellow upon aging with exposure to light. A review of polyurethane weathering phenomena is presented in: Davis, A.; Sims, D. Weathering Of Polymers; Applied Science: London, 1983, 222-237. The yellowing is not a problem for most foam applications. Light protection agents, such as hydroxybenzotriazoles, zinc dibutyl thiocarbamate, 2,6-ditertiary butylcatechol, hydroxybenzophenones, hindered amines, and phosphites have been used to improve the light stability of polyurethanes. Color pigments have also been used successfully.

### Flame Retardants

In certain embodiments, B-side mixtures of the present invention comprise one or more suitable flame retardants. Low-density, open-celled flexible polyurethane foams have a large surface area and high permeability to air and thus will burn given the application of sufficient ignition source and oxygen. Flame retardants are often added to reduce this flammability. The choice of flame retardant for any specific foam often depends upon the intended service application of that foam and the attendant flammability testing scenario governing that application. Aspects of flammability that may be influenced by additives include the initial ignitability, burning rate, and smoke evolution.

The most widely used flame retardants are the chlorinated phosphate esters, chlorinated paraffins, and melamine powders. These and many other compositions are available from specialty chemical suppliers. A review of this subject has been given: Kuryla, W. C.; Papa, A. J. Flame Retardancy of Polymeric Materials, Vol. 3; Marcel Dekker: New York, 1975, 1-133.

### Antimicrobials

Under certain conditions of warmth and high humidity, polyurethane foams are susceptible to attack by microorganisms. When this is a concern, additives against bacteria, yeast or fungi are added to the foam during manufacture. In certain embodiments, B-side mixtures of the present invention comprise one or more suitable bacteriostats.

### Plasticizers

In certain embodiments, B-side mixtures of the present invention comprise one or more suitable plasticizers. Nonreactive liquids have been used to soften a foam or to reduce viscosity for improved processing. The softening effect can be compensated for by using a polyol of lower equivalent weight, so that a higher cross-linked polymer structure is obtained. These materials increase foam density and often adversely affect physical properties.

### Cell-Openers

In certain embodiments, B-side mixtures of the present invention comprise one or more suitable cell openers. In some polyurethane foams it is necessary to add cell-openers to obtain foam that does not shrink upon cooling. Known additives for inducing cell-opening include silicone-based antifoamers, waxes, finely divided solids, liquid perfluocarbons, paraffin oils, long-chain fatty acids, and certain polyether polyols made using high concentrations of ethylene oxide.

### Antistatic Agents

In certain embodiments, B-side mixtures of the present invention comprise one or more suitable antistatic compounds. Some flexible foams are used in packaging, clothing, and other applications where it is desired to minimize the electrical resistance of the foam so that buildup of static electrical charges is minimized. This has traditionally been accomplished through the addition of ionizable metal salts, carboxylic acid salts, phosphate esters, and mixtures thereof. These agents function either by being inherently conductive or by absorbing moisture from the air. The desired net result is orders of magnitude reduction in foam surface resistivity.

### Compatibilizers

In certain embodiments, B-side mixtures of the present invention comprise one or more suitable compatibilizers. Compatibilizers are molecules that allow two or more nonmiscible ingredients to come together and give a homogeneous liquid phase. Many such molecules are known to the polyurethane industry, these include by way of nonlimiting example: amides, amines, hydrocarbon oils, phthalates, polybutyleneglycols, and ureas.

Also disclosed herein are B-side mixtures suitable for the formation of polyurethane foams wherein the B-side mixtures comprise:
100 parts by weight of a polyol component, wherein the polyol component comprises from about 5 weight percent to 100 weight percent of one or more of the APC polyols described above and in the specific embodiments and examples herein;
0.01 to 20 parts by weight of one or more blowing agents as described above and in the specific embodiments and examples herein;
0 to 1 parts by weight of one or more catalysts as described above and in the specific embodiments and examples herein;
0 to 20 parts by weight of one or more reactive small molecules, wherein the reactive small molecules are substantially as described above and in the specific embodiments and examples herein; and
0 to 10 parts by weight of one or more additives, wherein the additives are selected from the group consisting of: compatibilizers, colorants, flame retardants, antistatic agents, antimicrobials, UV stabilizers, plasticizers, and cell openers substantially as described above and in the specific embodiments herein.

### Pre-Polymers

In some embodiments, methods of the present invention utilize the formation of prepolymers of the APC polyols described herein. This may result in -OH or isocyanate-terminated prepolymers. In the case of the -OH terminated prepolymers, these materials may be employed in place of some or all of the APC polyol in the B-side in the methods described herein.

In the case of isocyanate-terminated prepolymers, the APC may be provided as part of the A-side composition. In certain embodiments, such prepolymer-containing A-side compositions are provided at high temperature or with CO₂ dissolved in them to provide similar advantages to those described above when the APC polyol is in the B-side composition.

Methods of making prepolymer compositions suitable to practice these embodiments of the invention are described in WO/2013158621.

In certain embodiments, such isocyanate-terminated prepolymers consist primarily of epoxide-CO₂-derived polyols end-capped by reaction with polyisocyanate compounds where there is little oligomerization. In certain embodiments, such isocyanate-terminated prepolymers comprise a plurality of epoxide-CO₂-derived polyol segments linked via urethane bonds formed by reaction with polyisocyanate compounds.

In certain embodiments, prepolymers suitable for methods of the present invention are the result of a reaction between one or more of the APC polyols described above with a stoichiometric excess of any one or more of the diisocyanates described herein. The degree of polymerization of these prepolymers (i.e. the average number of polyol segments contained in the prepolymer chains) can be manipulated by controlling the relative amount of isocyanate, as well as the order of reagent addition and the reaction conditions.

In certain embodiments, prepolymers comprise compounds conforming to a formula: 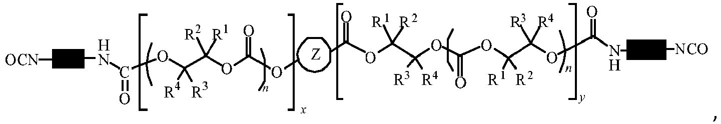 where, the black rectangles 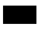 represent the carbon skeleton of a diisocyanate (e.g. if the isocyanate were 2,4-toluene diisocyanate, then 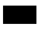 would have the formula 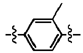 ), and R¹, R², R³, R⁴, *n, x,* and y, are as defined above and in the classes and subclasses herein.

In certain embodiments, prepolymers comprise compounds conforming to a formula: 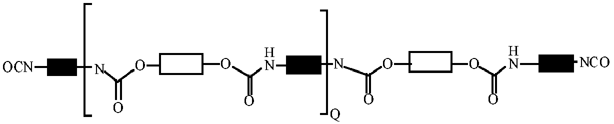 wherein Q is 0 or an integer between 1 and about 50, each open rectangle, 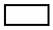 , represents a polyol moiety each of which may be the same or different, and 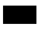 , is as defined above and in the classes and subclasses herein. In certain of these embodiments, some of the polyol moieties are derived from one or more of the APC polyols as defined herein, while other of the polyol moieties may be derived from other polyols such as polyether or polyester polyols as described herein.

In certain embodiments, prepolymers comprise chains conforming to the formula: 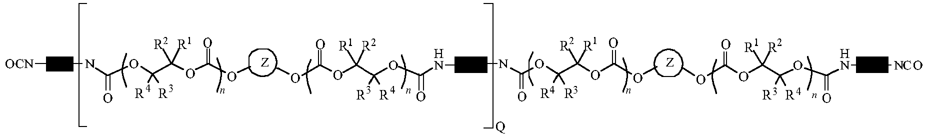 wherein, 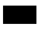 , 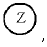 Q, R¹, R², R³, R⁴*, n, x,* and y, are as defined above and in the classes and subclasses herein.

In other embodiments, a prepolymer may be formed by reacting a stoichiometric excess of polyol with a limited amount of isocyanate. In such embodiments, the prepolymer has -OH end groups and contains two or more polyol units connected by urethane linkages. In certain embodiments, such prepolymers conform to a structure: 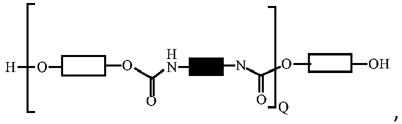 wherein 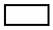 , 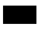 , and *Q*, are as defined above and in the classes and subclasses herein. In certain embodiments, such prepolymers have structures conforming to: 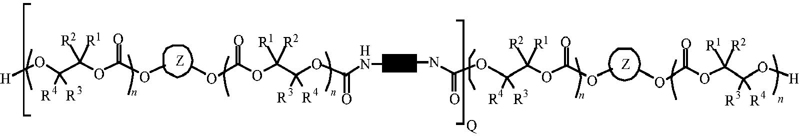 wherein, 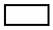 , 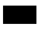 , 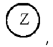 Q, R¹, R², R³, R⁴*, n, x,* and y, are as defined above and in the classes and subclasses herein.

### Appendix A - APC Polyols

This section describes some of the APC polyols that have utility in methods and compositions of the present invention. APC polyols refered to herein are derived from the copolymerization of one or more epoxides and carbon dioxide. Examples of suitable polyols, as well as methods of making them are disclosed in PCT publication WO2010/028362.

It is advantageous for many of the embodiments described herein that the APC polyols used have a high percentage of reactive end groups. Such reactive end-groups are typically hydroxyl groups, but other reactive functional groups may be present if the polyols are treated to modify the chemistry of the end groups. Such modified materials may terminate in amino groups, thiol groups, alkene groups, carboxylate groups, silanes, phosphate derivatives, isocyanate groups and the like. For purposes of this invention, the term "APC polyol" typically refers to a composition of -OH terminated materials, but the incorporation of end-group modified compositions is not excluded, unless otherwise specified.

In certain embodiments, at least 90% of the end groups of the APC polyol used are reactive groups. In certain embodiments, at least 95%, at least 96%, at least 97% or at least 98% of the end groups of an APC polyol used are reactive groups. In certain embodiments, more than 99%, more than 99.5%, more than 99.7%, or more than 99.8% of the end groups of an APC polyol used are reactive groups. In certain embodiments, more than 99.9% of the end groups of an APC polyol used are reactive groups.

In certain embodiments, at least 90% of the end groups of an APC polyol used are -OH groups. In certain embodiments, at least 95%, at least 96%, at least 97% or at least 98% of the end groups of an APC polyol used are -OH groups. In certain embodiments, more than 99%, more than 99.5%, more than 99.7%, or more than 99.8% of the end groups of an APC polyol used are -OH groups. In certain embodiments, more than 99.9% of the end groups of an APC polyol used are -OH groups.

Another way of expressing the -OH end-group content of a polyol composition is by reporting its OH# which is measured using methods well known in the art. In certain embodiments, the APC polyols utilized in the present invention have an OH# greater than about 40. In certain embodiments, the APC polyols have an OH# greater than about 50, greater than about 75, greater than about 100, or greater than about 120.

In certain embodiments, it is advantageous if the APC polyol compositions have a substantial proportion of primary hydroxyl end groups. These are the norm for compositions comprising poly(ethylene carbonate), but for polyols derived copolymerization of substituted epoxides, it is common for some or most of the chain ends having -OH groups to be secondary hydroxyl groups. Poly(propylene carbonate) polyol is one example of a polyol comprising hydroxyl end groups that are mostly secondary hydroxyl end groups. In certain embodiments, such polyols are treated to increase the proportion of primary -OH end groups. This may be accomplished by methods known in the art such as by reacting the secondary hydroxyl groups with reagents such as ethylene oxide, reactive lactones, and the like. In certain embodiments, the APC polyols are treated with beta lactones, caprolactone and the like to introduce primary hydroxyl end groups. In certain embodiments, the APC polyols are treated with ethylene oxide to introduce primary hydroxyl end groups.

In certain embodiments, polycarbonate polyols with utility for the present invention contain a primary repeating unit having a structure: 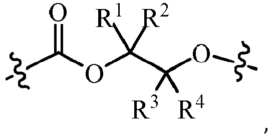 where R¹, R², R³, and R⁴ are, at each occurrence in the polymer chain, independently selected from the group consisting of -H, fluorine, an optionally substituted C₁₋₄₀ aliphatic group, an optionally substituted C₁₋₂₀ heteroaliphatic group, and an optionally substituted aryl group, where any two or more of R¹, R², R³, and R⁴ may optionally be taken together with intervening atoms to form one or more optionally substituted rings optionally containing one or more heteroatoms.

In certain embodiments, polycarbonate polyols with utility for the present invention contain a primary repeating unit having a structure: 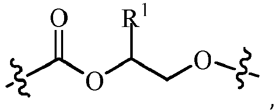 where R¹ is as defined above and in the classes, subclasses and examples herein.

In certain embodiments, APC polyol chains comprise a copolymer of carbon dioxide and ethylene oxide. In certain embodiments, APC polyol chains comprise a copolymer of carbon dioxide and propylene oxide. In certain embodiments, APC polyol chains comprise a copolymer of carbon dioxide and cyclohexene oxide. In certain embodiments, APC polyol chains comprise a copolymer of carbon dioxide and cyclopentene oxide. In certain embodiments, APC polyol chains comprise a copolymer of carbon dioxide and 3-vinyl cyclohexane oxide.

In certain embodiments, APC polyol chains comprise a terpolymer of carbon dioxide and ethylene oxide along with one or more additional epoxides selected from the group consisting of propylene oxide, 1,2-butene oxide, 2,3-butene oxide, cyclohexene oxide, 3-vinyl cyclohexene oxide, epichlorohydrin, glicydyl esters, glycidyl ethers, styrene oxides, and epoxides of higher alpha olefins. In certain embodiments, such terpolymers contain a majority of repeat units derived from ethylene oxide with lesser amounts of repeat units derived from one or more additional epoxides. In certain embodiments, terpolymers contain about 50% to about 99.5% ethylene oxide-derived repeat units. In certain embodiments, terpolymers contain greater than about 60% ethylene oxide-derived repeat units. In certain embodiments, terpolymers contain greater than 75% ethylene oxide-derived repeat units. In certain embodiments, terpolymers contain greater than 80% ethylene oxide-derived repeat units. In certain embodiments, terpolymers contain greater than 85% ethylene oxide-derived repeat units. In certain embodiments, terpolymers contain greater than 90% ethylene oxide-derived repeat units. In certain embodiments, terpolymers contain greater than 95% ethylene oxide-derived repeat units.

In some embodiments, APC polyol chains comprise a copolymer of carbon dioxide and propylene oxide along with one or more additional epoxides selected from the group consisting of ethylene oxide, 1,2-butene oxide, 2,3-butene oxide, cyclohexene oxide, 3-vinyl cyclohexene oxide, epichlorohydrin, glicydyl esters, glycidyl ethers, styrene oxides, and epoxides of higher alpha olefins. In certain embodiments, such terpolymers contain a majority of repeat units derived from propylene oxide with lesser amounts of repeat units derived from one or more additional epoxides. In certain embodiments, terpolymers contain about 50% to about 99.5% propylene oxide-derived repeat units. In certain embodiments, terpolymers contain greater than 60% propylene oxide-derived repeat units. In certain embodiments, terpolymers contain greater than 75% propylene oxide-derived repeat units. In certain embodiments, terpolymers contain greater than 80% propylene oxide-derived repeat units. In certain embodiments, terpolymers contain greater than 85% propylene oxide-derived repeat units. In certain embodiments, terpolymers contain greater than 90% propylene oxide-derived repeat units. In certain embodiments, terpolymers contain greater than 95% propylene oxide-derived repeat units.

In certain embodiments, APC polyol compositions with utility in the present invention have a number average molecular weight (M*ₙ*) in the range of about 500 g/mol to about 25,000 g/mol.

In certain embodiments, APC polyol chains have an M*ₙ* less than about 25,000 g/mol. In certain embodiments, APC polyol chains have an M*ₙ* less than about 10,000 g/mol. In certain embodiments, APC polyol chains have an M*ₙ* less than about 5,000 g/mol. In certain embodiments, APC polyol chains have an M*ₙ* between about 500 g/mol and about 15,000 g/mol. In certain embodiments, APC polyol chains have an M*ₙ* between about 500 g/mol and about 10,000 g/mol. In certain embodiments, APC polyol chains have an M*ₙ* between about 500 g/mol and about 5,000 g/mol. In certain embodiments, APC chains polyol have an M*ₙ* between about 500 g/mol and about 3,000 g/mol. In certain embodiments, APC polyol chains have an M*ₙ* between about 500 g/mol and about 2,500 g/mol. In certain embodiments, APC polyol chains have an M*ₙ* between about 500 g/mol and about 2,000 g/mol. In certain embodiments, APC polyol chains have an M*ₙ* between about 500 g/mol and about 1,500 g/mol. In certain embodiments, APC polyol chains have an M*ₙ* between about 500 g/mol and about 1,000 g/mol. In certain embodiments, APC polyol chains have an M*ₙ* between about 1,000 g/mol and about 5,000 g/mol. In certain embodiments, APC polyol chains have an M*ₙ* between about 1,000 g/mol and about 3,000 g/mol. In certain embodiments, APC polyol chains have an M*ₙ* between about 5,000 g/mol and about 10,000 g/mol. In certain embodiments, APC polyol chains have an M*ₙ* of about 5,000 g/mol. In certain embodiments, APC polyol chains have an M*ₙ* of about 4,000 g/mol. In certain embodiments, APC polyol chains have an M*ₙ* of about 3,000 g/mol. In certain embodiments, APC polyol chains have an M*ₙ* of about 2,500 g/mol. In certain embodiments, APC polyol chains have an M*ₙ* of about 2,000 g/mol. In certain embodiments, APC polyol chains have an M*ₙ* of about 1,500 g/mol. In certain embodiments, APC polyol chains have an M*ₙ* of about 1,000 g/mol. In certain embodiments, APC polyol chains have an M*ₙ* of about 850 g/mol. In certain embodiments, APC polyol chains have an M*ₙ* of about 750 g/mol. In certain embodiments, APC polyol chains have an M*ₙ* of about 500 g/mol.

In certain embodiments, the APC polyols used are characterized in that they have a narrow molecular weight distribution. This can be indicated by the polydispersity indices (PDI) of the APC polyol polymers. In certain embodiments, APC polyol compositions have a PDI less than 2. In certain embodiments, APC polyol compositions have a PDI less than 1.8. In certain embodiments, APC polyol compositions have a PDI less than 1.5. In certain embodiments, APC polyol compositions have a PDI less than 1.4. In certain embodiments, APC polyol compositions have a PDI between about 1.0 and 1.2. In certain embodiments, APC polyol compositions have a PDI between about 1.0 and 1.1.

In certain embodiments APC polyol compositions of the present invention comprise substantially alternating polymers containing a high percentage of carbonate linkages and a low content of ether linkages. APC polyol compositions of the present invention are characterized in that, on average in the composition, the percentage of carbonate linkages is 95% or greater. In certain embodiments, APC polyol compositions of the present invention are characterized in that, on average in the composition, the percentage of carbonate linkages is 96% or greater. In certain embodiments, APC polyol compositions of the present invention are characterized in that, on average in the composition, the percentage of carbonate linkages is 97% or greater. In certain embodiments, APC polyol compositions of the present invention are characterized in that, on average in the composition, the percentage of carbonate linkages is 98% or greater. In certain embodiments, APC polyol compositions of the present invention are characterized in that, on average in the composition, the percentage of carbonate linkages is 99% or greater. In certain embodiments, APC polyol compositions of the present invention are characterized in that, on average in the composition, the percentage of carbonate linkages is 99.5% or greater. In certain embodiments, the percentages above exclude ether linkages present in polymerization initiators or chain transfer agents and refer only to the linkages formed during epoxide CO₂ copolymerization.

In certain embodiments, APC polyol compositions of the present invention are characterized in that they contain essentially no ether linkages either within the polymer chains derived from epoxide CO₂ copolymerization or within any polymerization intiators, chain transfer agents or end groups that may be present in the polymer. In certain embodiments, APC polyol compositions of the present invention are characterized in that they contain, on average, less than one ether linkage per polymer chain within the composition. In certain embodiments, APC polyol compositions of the present invention are characterized in that they contain essentially no ether linkages.

In certain embodiments where an APC polyol is derived from mono-substituted epoxides (e.g. such as propylene oxide, 1,2-butylene oxide, epichlorohydrin, epoxidized alpha olefins, or a glycidol derivative), the APC is characterized in that it is regioregular. Regioregularity may be expressed as the percentage of adjacent monomer units that are oriented in a head-to-tail arrangement within the polymer chain. In certain embodiments, APC polyol chains in the inventive polymer compositions have a head-to-tail content higher than about 80%. In certain embodiments, the head-to-tail content is higher than about 85%. In certain embodiments, the head-to-tail content is higher than about 90%. In certain embodiments, the head-to-tail content is greater than about 91%, greater than about 92%, greater than about 93%, greater than about 94%, or greater than about 95%. In certain embodiments, the head-to-tail content of the polymer is as determined by proton or carbon-13 NMR spectroscopy.

In certain embodiments, APC polyols useful for the present invention have a viscosity controlled to be within a particular range. The preferred range may depend upon a particular application and may be controlled to be within the normal range for a particular application.

In certain embodiments, where the APC polyol is used in the formulation of a rigid foam or a thermoplastic composition, the polyol has a viscosity, as measured at a temperature of at least 20 °C but less than 70 °C, of less than about 30,000 cps. In certain embodiments, such polyols have a viscosity less than about 20,000 cps, less than about 15,000 cps, less than about 12,000 cps, or less than about 10,000 cps. In certain embodiments, such polyols have a viscosity between about 600 and about 30,000 cps. In certain embodiments, such polyols have a viscosity between about 2,000 and about 20,000 cps. In certain embodiments, such polyols have a viscosity between about 5,000 and about 15,000 cps.

In other embodiments, where the APC polyol is used in the formulation of a flexible foam, the polyol has a viscosity, as measured at a temperature of at least 20 °C but less than 70 °C, of less than about 10,000 cps. In certain embodiments, such polyols have a viscosity less than about 8,000 cps, less than about 6,000 cps, less than about 3,000 cps, or less than about 2,000 cps. In certain embodiments, such polyols have a viscosity between about 1,000 and about 10,000 cps. In certain embodiments, such polyols have a viscosity between about 1,000 and about 6,000 cps.

In certain embodiments, the polyol viscosity values described above represent the viscosity as measured at about 25 °C. In certain embodiments, the viscosity values above represent the viscosity as measured at about 30 °C, about 40 °C, about 50 °C, about 60 °C, or about 70 °C.

In certain embodiments, APC polyols useful for the present invention have a Tg within a particular range. The desired Tg will vary with the application and may be controlled to be within the known normal range for a particular application. In certain embodiments, where the polyol is used in the formulation of a flexible foam composition, the polyol has a Tg less than about 20 °C. In certain embodiments, such polyols have Tg less than about 15 °C, less than about 10 °C, less than about 5 °C, less than about 0 °C, less than about -10 °C, less than about -20 °C, or less than about -40 °C. In certain embodiments, such polyols have a Tg between about -30 °C and about -20 °C. In certain embodiments, such polyols have a Tg between about -30 °C and about - 20 °C.

In certain embodiments, where the APC polyol is used in the formulation of a rigid foam composition, the polyol has a Tg greater than about -30 °C. In certain embodiments, such polyols have Tg greater than about -20 °C, greater than about -10 °C, greater than about 0 °C, greater than about 10 °C, greater than about 15 °C, or greater than about 25 °C. In certain embodiments, such polyols have a Tg between about -10 °C and about 30 °C. In certain embodiments, such polyols have a Tg between about 0 °C and about 20 °C.

In certain embodiments, compositions of the present invention comprise APC polyols having a structure **P1**: 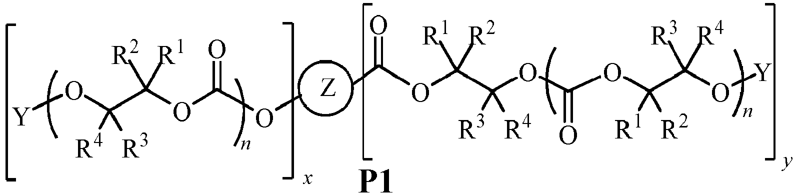 wherein,
R¹, R², R³, and R⁴ are, at each occurrence in the polymer chain, independently selected from the group consisting of -H, fluorine, an optionally substituted C₁₋₃₀ aliphatic group, and an optionally substituted C₁₋₂₀ heteroaliphatic group, and an optionally substituted C₆₋₁₀ aryl group, where any two or more of R¹, R², R³, and R⁴ may optionally be taken together with intervening atoms to form one or more optionally substituted rings optionally containing one or more heteroatoms;
Y is, at each occurrence, independently -H or the site of attachment of a moiety containing another reactive end group such as those described hereinabove;
*n* is at each occurrence, independently an integer from about 2 to about 100; 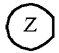
is a multivalent moiety; and
*x* and *y* are each independently an integer from 0 to 6, where the sum of *x* and *y* is between 2 and 6.

In certain embodiments, the multivalent moiety 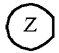 embedded within the APC chain is derived from a polyfunctional chain transfer agent having two or more sites from which epoxide/CO₂ copolymerization can occur. In certain embodiments, such copolymerizations are performed in the presence of polyfunctional chain transfer agents as exemplified in PCT publication WO/2010/028362.

In certain embodiments, a polyfunctional chain transfer agent has a formula: 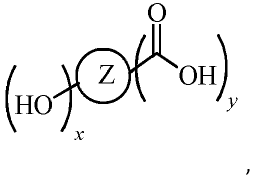 wherein each of 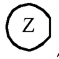 *x,* and *y* is as defined above and described in classes and subclasses herein.

In certain embodiments, APC polyol chains in the inventive polymer compositions are derived from the copolymerization of one or more epoxides with carbon dioxide in the presence of such polyfunctional chain transfer agents as shown in Scheme 2:

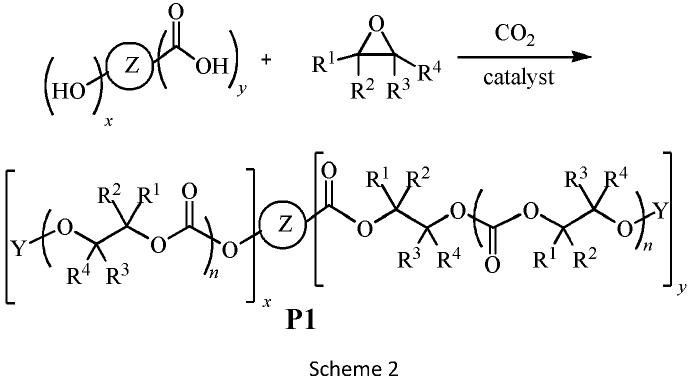

In certain embodiments, APC polyol chains in polymer compositions of the present invention comprise chains with a structure **P2:** 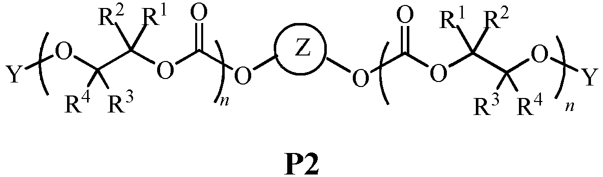 wherein each of R¹, R², R³, R⁴, Y, 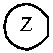 and *n* is as defined above and described in the classes and subclasses herein.

In certain embodiments where APC chains have a structure **P2,** 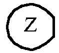 is derived from a dihydric alcohol. In such instances 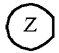 represents the carbon-containing backbone of the dihydric alcohol, while the two oxygen atoms adjacent to 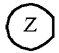 are derived from the -OH groups of the diol. For example, if the polyfunctional chain transfer agent were ethylene glycol, then 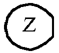 would be -CH₂CH₂- and P2 would have the following structure:

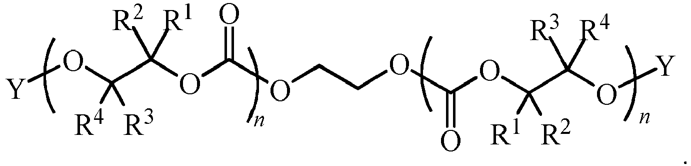

It will be apparent to the skilled artisan that this is the case for the other polyfunctional chain transfer agents described herein, i.e., there is a nexus between the structure of the chain transfer agent employed and the structure of 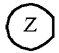 in the resulting polyol.

In certain embodiments, where 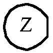 is derived from a dihydric alcohol, the dihydric alcohol comprises a C₂₋₄₀ diol. In certain embodiments, the dihydric alcohol is selected from the group consisting of: 1,2-ethanediol, 1,2-propanediol, 1,3-propanediol, 1,2-butanediol, 1,3-butanediol, 1,4-butanediol, 1,5-pentanediol, 2,2-dimethylpropane-1,3-diol, 2-butyl-2-ethylpropane-1,3-diol, 2-methyl-2,4-pentane diol, 2-ethyl-1,3-hexane diol, 2-methyl-1,3-propane diol, 1,5-hexanediol, 1,6-hexanediol, 1,8-octanediol, 1,10-decanediol, 1,12-dodecanediol, 2,2,4,4-tetramethylcyclobutane-l,3-diol, 1,3-cyclopentanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, isosorbide, glycerol monoesters, glycerol monoethers, trimethylolpropane monoesters, trimethylolpropane monoethers, pentaerythritol diesters, pentaerythritol diethers, and alkoxylated derivatives of any of these.

In certain embodiments, where 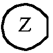 is derived from a dihydric alcohol, the dihydric alcohol is selected from the group consisting of: diethylene glycol, triethylene glycol, tetraethylene glycol, higher poly(ethylene glycol), such as those having number average molecular weights of from 220 to about 2000 g/mol, dipropylene glycol, tripropylene glycol, and higher poly(propylene glycols) such as those having number average molecular weights of from 234 to about 2000 g/mol.

In certain embodiments, where 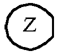 is derived from a dihydric alcohol, the dihydric alcohol comprises an alkoxylated derivative of a compound selected from the group consisting of: a diacid, a diol, or a hydroxy acid. In certain embodiments, the alkoxylated derivatives comprise ethoxylated or propoxylated compounds.

In certain embodiments, where 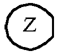 is derived from a dihydric alcohol, the dihydric alcohol comprises a polymeric diol. In certain embodiments, a polymeric diol is selected from the group consisting of polyethers, polyesters, hydroxy-terminated polyolefins, polycarbonate polyols derived from diols and phosgene (or its reactive equivalents); polyether-copolyesters, polyether polycarbonates, polycarbonate-copolyesters, polyoxymethylene polymers, and alkoxylated analogs of any of these. In certain embodiments, the polymeric diol has an average molecular weight less than about 2000 g/mol.

In certain embodiments, 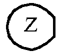 is derived from a polyhydric alcohol with more than two hydroxy groups. In certain embodiments, the APC polyol chains in polymer compositions of the present invention comprise APC chains where the moiety 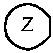 is derived from a triol. In certain embodiments, such APC chains have the structure **P3:** 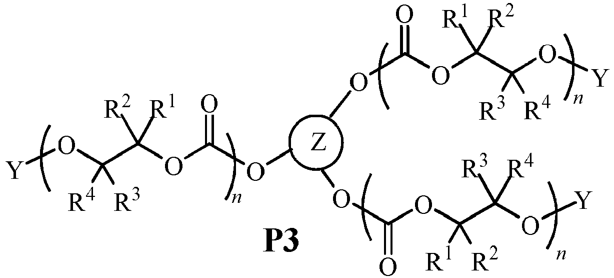 wherein each of R¹, R², R³, R⁴, Y, 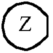 and *n* is as defined above and described in classes and subclasses herein.

In certain embodiments where 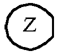 is derived from a triol, the triol is selected from the group consisting of: glycerol, 1,2,4-butanetriol, 2-(hydroxymethyl)-1,3-propanediol; hexane triols, trimethylol propane, trimethylol ethane, trimethylolhexane, 1,4-cyclohexanetrimethanol, pentaerythritol mono esters, pentaerythritol mono ethers, and alkoxylated analogs of any of these. In certain embodiments, alkoxylated derivatives comprise ethoxylated or propoxylated compounds.

In certain embodiments, 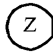 is derived from an alkoxylated derivative of a trifunctional carboxylic acid or trifunctional hydroxy acid. In certain embodiments, alkoxylated derivatives comprise ethoxylated or propoxylated compounds.

In certain embodiments, where 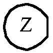 is derived from a polymeric triol, the polymeric triol is selected from the group consisting of polyethers, polyesters, hydroxy-terminated polyolefins, polyether-copolyesters, polyether polycarbonates, polyoxymethylene polymers, polycarbonate-copolyesters, and alkoxylated analogs of any of these. In certain embodiments, the alkoxylated polymeric triols comprise ethoxylated or propoxylated compounds.

In certain embodiments, 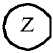 is derived from a polyhydric alcohol with four hydroxy groups. In certain embodiments, APC chains in polymer compositions of the present invention comprise APC chains where the moiety 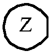 is derived from a tetraol. In certain embodiments, APC chains in polymer compositions of the present invention comprise chains with the structure **P4:** 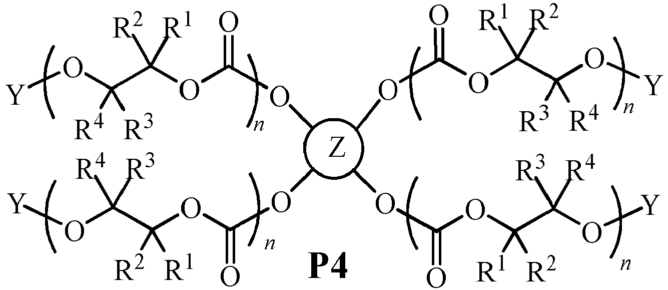 wherein each of R¹, R², R³, R⁴, Y, 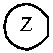 and n is as defined above and described in classes and subclasses herein.

In certain embodiments, 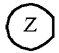 is derived from a polyhydric alcohol with more than four hydroxy groups. In certain embodiments, 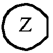 is derived from a polyhydric alcohol with six hydroxy groups. In certain embodiments, a polyhydric alcohol is dipentaerithrotol or an alkoxylated analog thereof. In certain embodiments, a polyhydric alcohol is sorbitol or an alkoxylated analog thereof. In certain embodiments, APC polyol chains in polymer compositions of the present invention comprise chains with the structure **P5:** 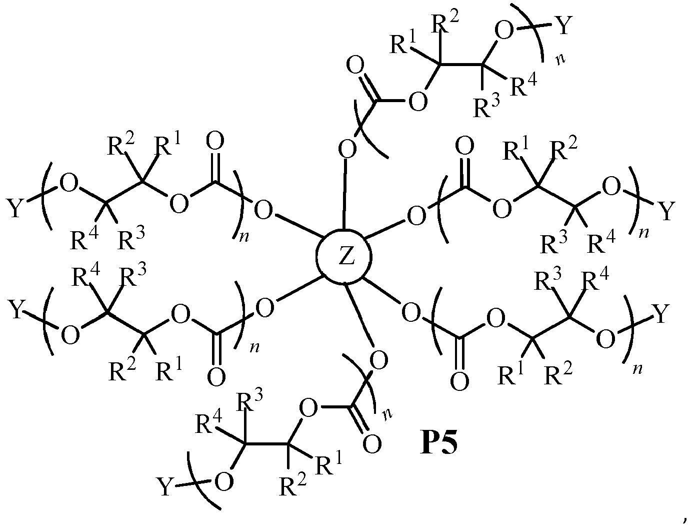 wherein each of R¹, R², R³, R⁴, Y, 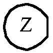 and *n* is as defined above and described in classes and subclasses herein.

In certain embodiments, APC polyols of the present invention comprise a combination of bifunctional chains (*e.g*. polycarbonates of formula **P2)** in combination with higher functional chains (*e.g*. one or more polycarbonates of formulae **P3** to **P5**).

In certain embodiments, 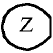 is derived from a hydroxy acid. In certain embodiments, APC polyol chains in polymer compositions of the present invention comprise chains with the structure **P6:** 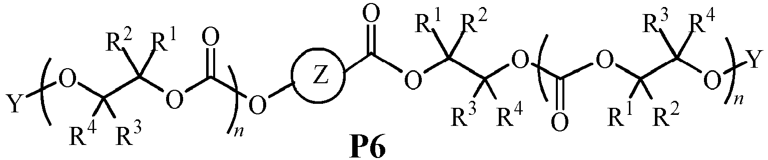 wherein each of R¹, R², R³, R⁴, Y, 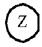 and *n* is as defined above and described in classes and subclasses herein. In such instances, 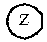 represents the carbon-containing backbone of the hydroxy acid, while the ester and carbonate linkages adjacent to 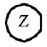 are derived from the -CO₂H group and the hydroxy group of the hydroxy acid. For example, if 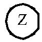 were derived from 3-hydroxy propanoic acid, then 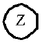 would be -CH₂CH₂- and P6 would have the following structure:

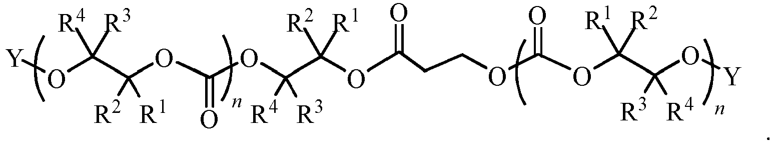

In certain embodiments, 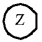 is derived from an optionally substituted C₂₋₄₀ hydroxy acid. In certain embodiments, 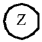 is derived from a polyester. In certain embodiments, such polyesters have a molecular weight less than about 2000 g/mol.

In certain embodiments, a hydroxy acid is an alpha-hydroxy acid. In certain embodiments, a hydroxy acid is selected from the group consisting of: glycolic acid, DL-lactic acid, D-lactic acid, L-lactic, citric acid, and mandelic acid.

In certain embodiments, a hydroxy acid is a beta-hydroxy acid. In certain embodiments, a hydroxy acid is selected from the group consisting of: 3-hydroxypropionic acid, DL 3-hydroxybutryic acid, D-3 hydroxybutryic acid, L-3-hydroxybutyric acid, DL-3-hydroxy valeric acid, D-3-hydroxy valeric acid, L-3-hydroxy valeric acid, salicylic acid, and derivatives of salicylic acid.

In certain embodiments, a hydroxy acid is a α-ω hydroxy acid. In certain embodiments, a hydroxy acid is selected from the group consisting of: of optionally substituted C₃₋₂₀ aliphatic α-ω hydroxy acids and oligomeric esters.

In certain embodiments, a hydroxy acid is selected from the group consisting of:

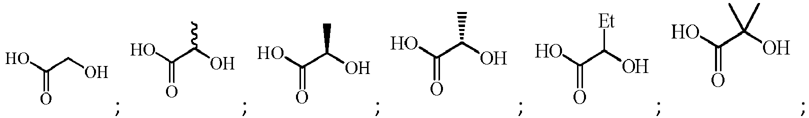

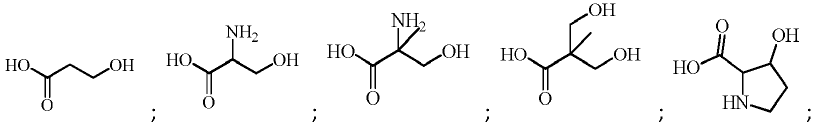

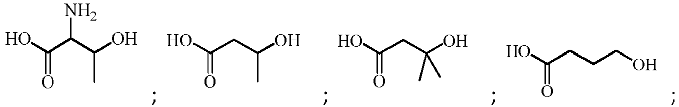

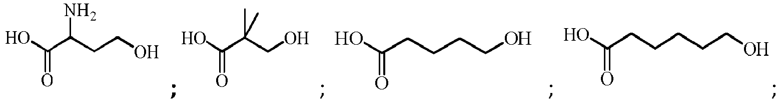

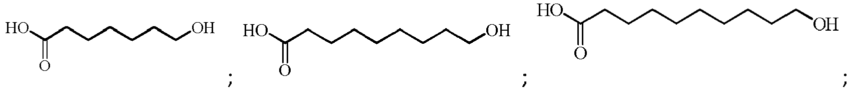

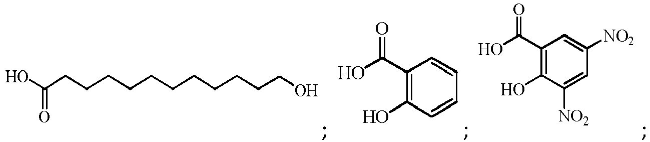

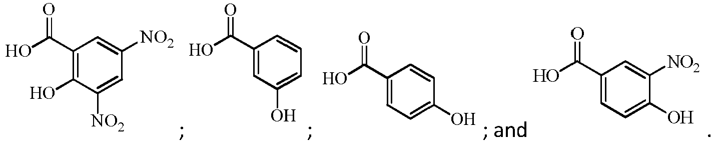

In certain embodiments, 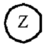 is derived from a polycarboxylic acid. In certain embodiments, APC polyol chains in polymer compositions of the present invention comprise chains with the structure **P7:** 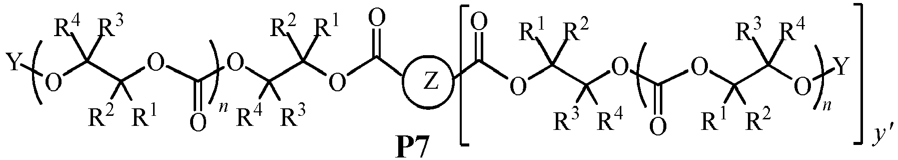 wherein each of R¹, R², R³, R⁴, Y, 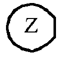 and *n* is as defined above and described in classes and subclasses herein, and *y'* is an integer from 1 to 5 inclusive.

In embodiments where the APC polyol chains have a structure **P7,** 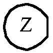 represents the carbon-containing backbone (or a covalent bond in the case of oxalic acid) of a polycarboxylic acid, while ester groups adjacent to 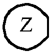 are derived from -CO₂H groups of the polycarboxylic acid. For example, if 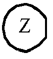 were derived from succinic acid (HO₂CCH₂CH₂CO₂H), then 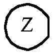 would be -CH₂CH₂- and **P7** would have the following structure: 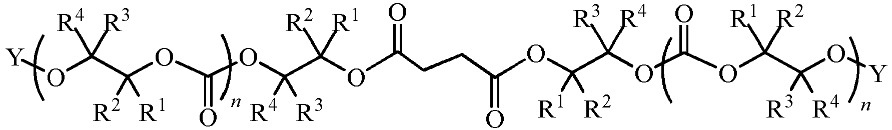 wherein each of R¹, R², R³, R⁴, Y, and *n* is as defined above and described in classes and subclasses herein.

In certain embodiments, 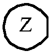 is derived from a dicarboxylic acid. In certain embodiments, APC chains in polymer compositions of the present invention comprise chains with the structure P8: 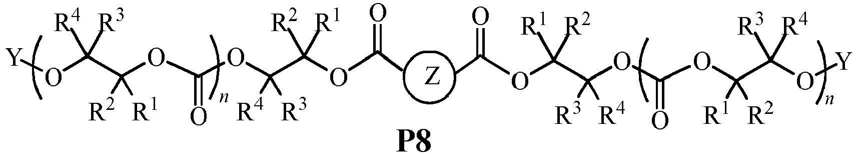 wherein each of R¹, R², R³, R⁴, Y, 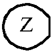 and *n* is as defined above and described in classes and subclasses herein.

In certain embodiments, 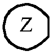 is selected from the group consisting of: phthalic acid, isophthalic acid, terephthalic acid, maleic acid, succinic acid, malonic acid, glutaric acid, adipic acid, pimelic acid, suberic acid, and azelaic acid.

In certain embodiments, 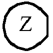 is selected from the group consisting of: 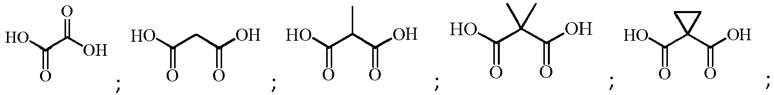 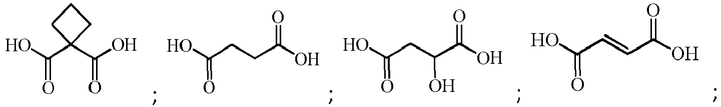 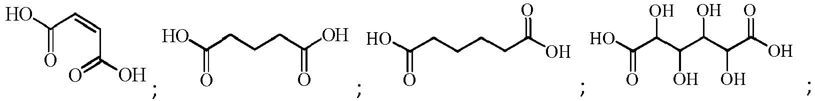 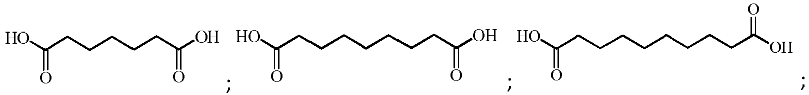 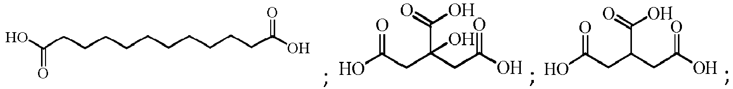 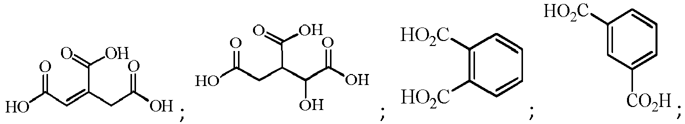 and

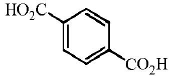

In certain embodiments, each 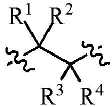 in the structures herein is independently selected from the group consisting of: 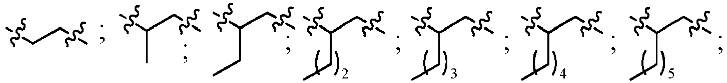 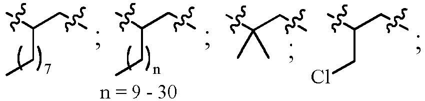 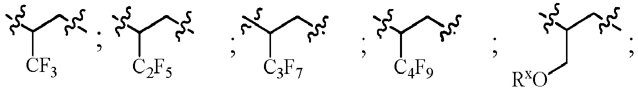 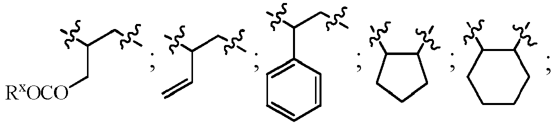 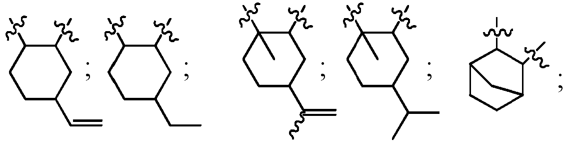 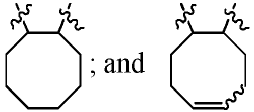 wherein each R^{x} is independently an optionally substituted group selected from the group consisting of C₂₋₂₀ aliphatic, C₂₋₂₀ heteroaliphatic, 3- to 14-membered carbocyclic, 6- to 10-membered aryl, 5- to 10-membered heteroaryl, and 3- to 12-membered heterocyclic.

In certain embodiments, each 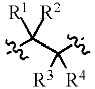 in the structures herein is independently selected from the group consisting of: 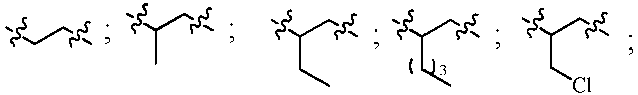 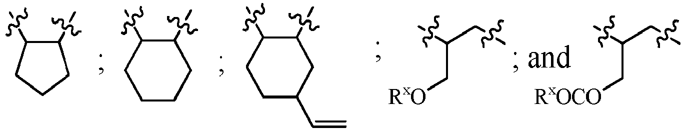 wherein R^{x} is as defined above and described in classes and subclasses herein.

In certain embodiments, APC polyol chains comprise: 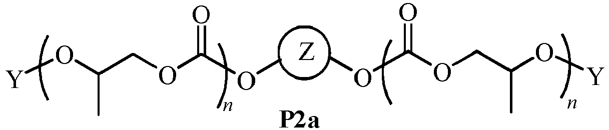 wherein each of 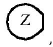 -Y, and *n* is as defined above and described in classes and subclasses herein.

In certain embodiments, APC polyol chains comprise 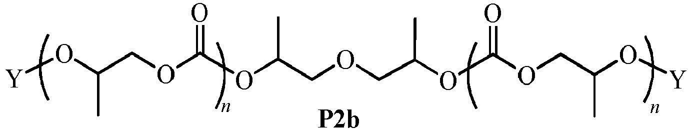 wherein each of -Y and *n* is as defined above and described in classes and subclasses herein.

In certain embodiments, APC polyol chains comprise 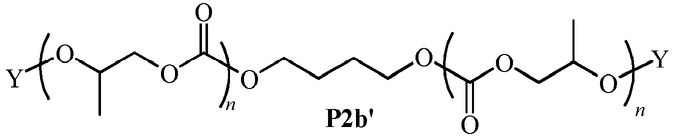 wherein each of -Y and *n* is as defined above and described in classes and subclasses herein.

In certain embodiments, APC polyol chains comprise 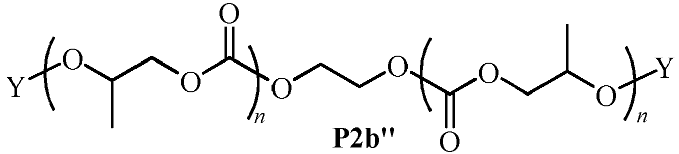 wherein each of -Y and *n* is as defined above and described in classes and subclasses herein.

In certain embodiments, APC polyol chains comprise 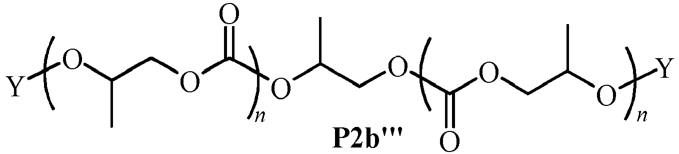 wherein each of -Y and *n* is as defined above and described in classes and subclasses herein.

In certain embodiments, APC polyol chains comprise 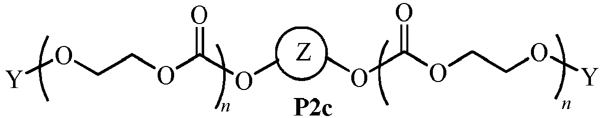 wherein each of 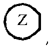 -Y, and *n* is as defined above and described in classes and subclasses herein.

In certain embodiments, APC polyol chains comprise 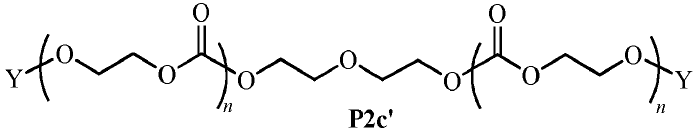 wherein each of -Y and *n* is as defined above and described in classes and subclasses herein.

In certain embodiments, APC polyol chains comprise 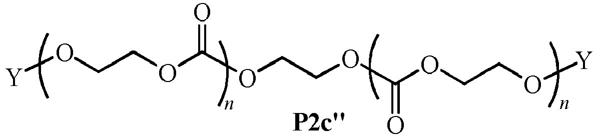 wherein each of -Y and *n* is as defined above and described in classes and subclasses herein.

In certain embodiments, APC polyol chains comprise 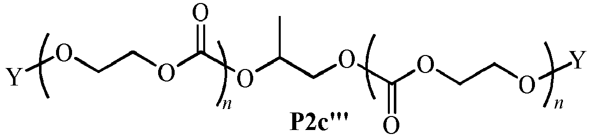 wherein each of -Y and *n* is as defined above and described in classes and subclasses herein.

In certain embodiments, APC polyol chains comprise 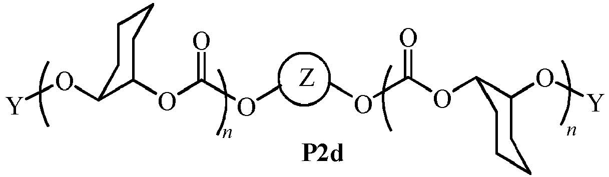 wherein each of 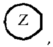 -Y, and n is as defined above and described in classes and subclasses herein.

In certain embodiments, APC polyol chains comprise 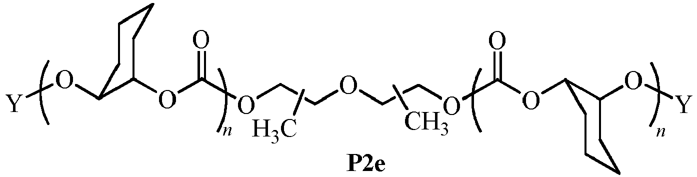 wherein each of -Y and n are is as defined above and described in classes and subclasses herein.

In certain embodiments, APC polyol chains comprise 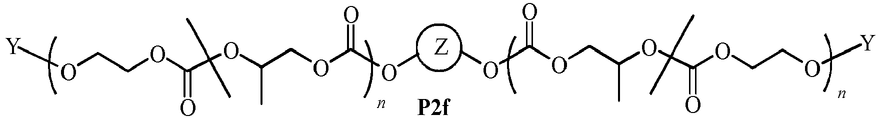 wherein each of 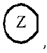 -Y, and n is as defined above and described in classes and subclasses herein.

In certain embodiments, APC polyol chains comprise 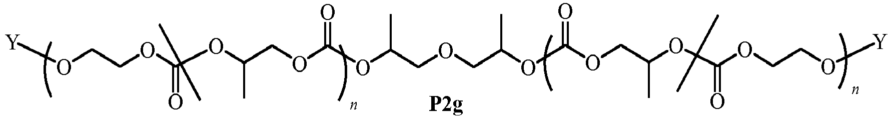 wherein each of -Y and n is as defined above and described in classes and subclasses herein.

In certain embodiments, APC polyol chains comprise 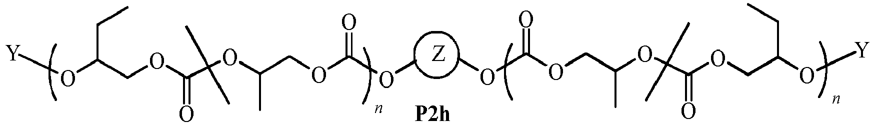 wherein each of 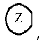 -Y, and n is as defined above and described in classes and subclasses herein.

In certain embodiments, APC polyol chains comprise 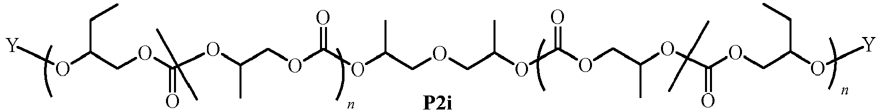 wherein each of -Y and n is as defined above and described in classes and subclasses herein.

In certain embodiments, APC polyol chains comprise 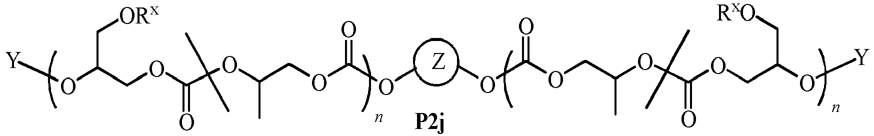 wherein each of 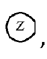 -Y, R^{x}, and *n* is as defined above and described in classes and subclasses herein.

In certain embodiments, APC polyol chains comprise 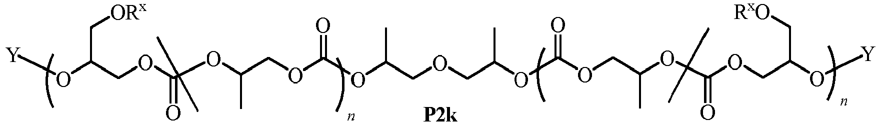 wherein each of-Y, R^{x}, and *n* is as defined above and described in classes and subclasses herein.

In certain embodiments, APC polyol chains comprise 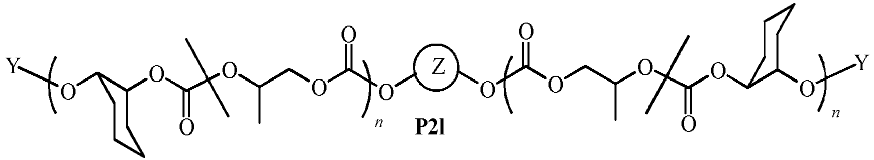 wherein each of 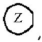 -Y, and *n* is as defined above and described in classes and subclasses herein.

In certain embodiments, APC polyol chains comprise 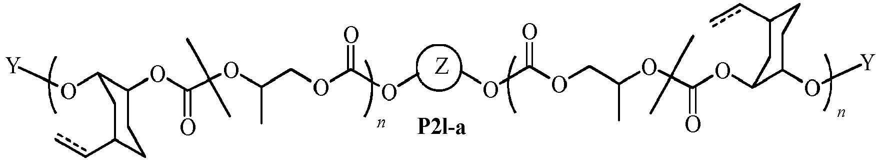 wherein each of 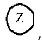 -Y, and *n* are is as defined above and described in classes and subclasses herein; and each -̅-̅-̅-̅-̅ independently represents a single or double bond.

In certain embodiments, APC polyol chains comprise 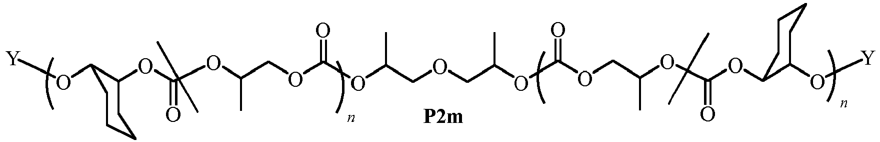 wherein each of-Y and *n* is as defined above and described in classes and subclasses herein.

In certain embodiments, APC polyol chains comprise 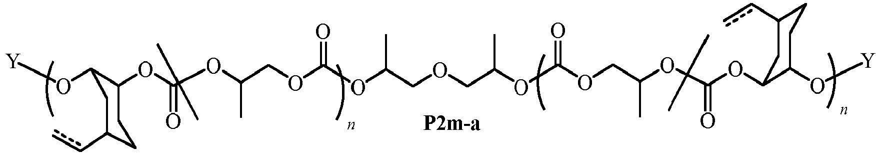 wherein each of-Y, -̅-̅-̅-̅-̅, and *n* is as defined above and described in classes and subclasses herein.

In certain embodiments, APC polyol chains comprise 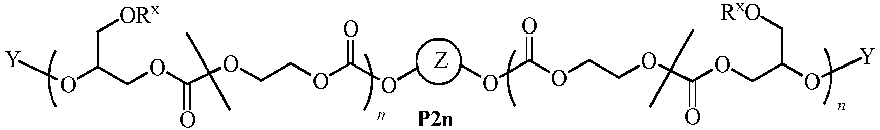 wherein each of 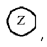 R^{x}, -Y and *n* is as defined above and described in classes and subclasses herein.

In certain embodiments, APC polyol chains comprise 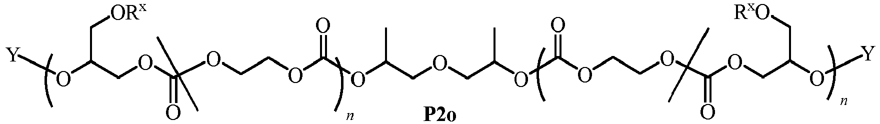 wherein each of-Y, R^{x}, and *n* is as defined above and described in classes and subclasses herein.

In certain embodiments, APC polyol chains comprise 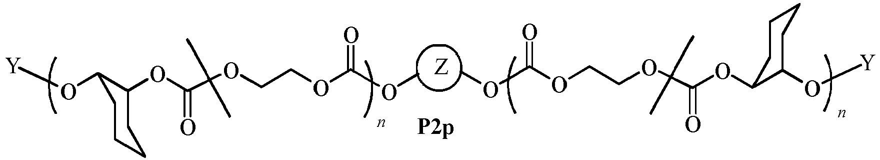 wherein each of 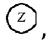 -Y, and *n* is as defined above and described in classes and subclasses herein.

In certain embodiments, APC polyol chains comprise 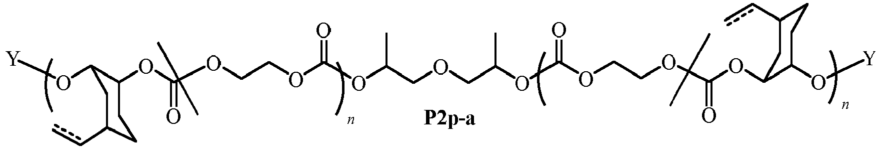 wherein each of-Y, -̅-̅-̅-̅-̅, and *n* is as defined above and described in classes and subclasses herein.

In certain embodiments, APC polyol chains comprise 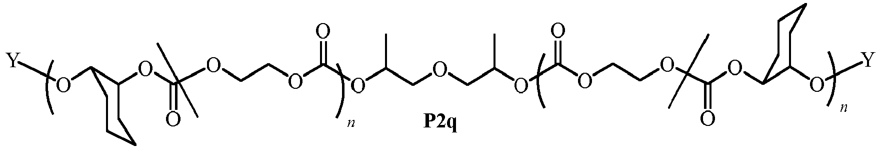 wherein each of-Y and n is as defined above and described in classes and subclasses herein.

In certain embodiments, APC polyol chains comprise 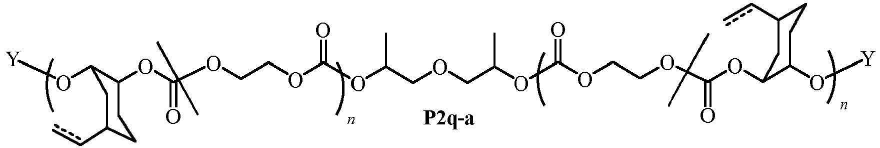 wherein each of-Y, -̅-̅-̅-̅-̅, and *n* is as defined above and described in classes and subclasses herein.

In certain embodiments, APC polyol chains comprise 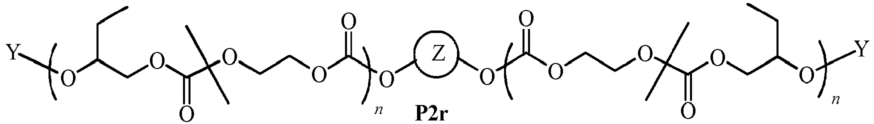 wherein each of 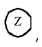 -Y, and *n* is as defined above and described in classes and subclasses herein.

In certain embodiments, APC polyol chains comprise 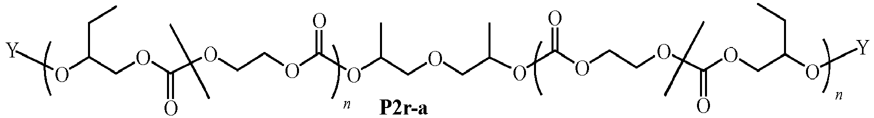 wh erein each of -Y and *n* is as defined above and described in classes and subclasses herein.

In certain embodiments, in polycarbonates of structures **P2a, P2c, P2d, P2f, P2h, P2j, P2l, P2l-a, P2n, P2p,** and **P2r,** 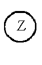 is selected from the group consisting of: ethylene glycol; diethylene glycol, triethylene glycol, 1,3 propane diol; 1,4 butane diol, hexylene glycol, 1,6 hexane diol, propylene glycol, dipropylene glycol, tripopylene glycol, and alkoxylated derivatives of any of these.

For polycarbonates comprising repeat units derived from two or more epoxides, such as those represented by structures **P2f** through **P2r,** depicted above, it is to be understood that the structures drawn may represent mixtures of positional isomers or regioisomers that are not explicitly depicted. For example, the polymer repeat unit adjacent to either end group of the polycarbonate chains can be derived from either one of the two epoxides comprising the copolymers, or from only one of the two epoxides. Thus, while the polymers may be drawn with a particular repeat unit attached to an end group, the terminal repeat units might be derived from either of the two epoxides and a given polymer composition might comprise a mixture of all of the possibilities in varying ratios. The ratio of these end-groups can be influenced by several factors including the ratio of the different epoxides used in the polymerization, the structure of the catalyst used, the reaction conditions used (i.e temperature, CO₂ pressure, etc.) as well as by the timing of addition of reaction components.

Similarly, while the drawings above may show a defined regiochemistry for repeat units derived from substituted epoxides, the polymer compositions will, in some cases, contain mixtures of regioisomers. The regioselectivity of a given polymerization can be influenced by numerous factors including the structure of the catalyst used and the reaction conditions employed. To clarify, this means that the composition represented by structure **P2r** above, may contain a mixture of several compounds as shown in the diagram below. This diagram shows the isomers graphically for polymer **P2r,** where the structures below the depiction of the chain show each regio- and positional isomer possible for the monomer unit adjacent to the chain transfer agent and the end groups on each side of the main polymer chain. Each end group on the polymer may be independently selected from the groups shown on the left or right while the central portion of the polymer including the chain transfer agent and its two adjacent monomer units may be independently selected from the groups shown. In certain embodiments, the polymer composition comprises a mixture of all possible combinations of these. In other embodiments, the polymer composition is enriched in one or more of these.

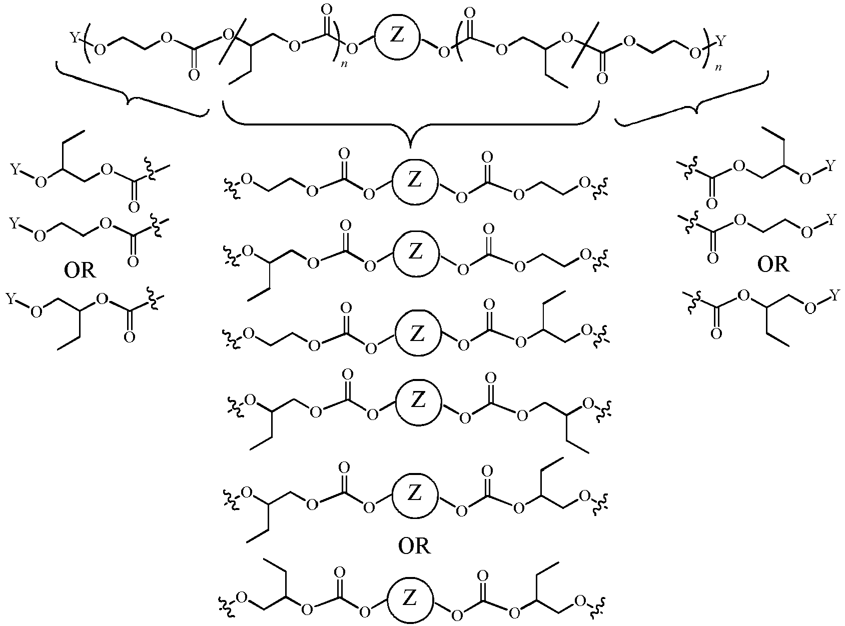

In certain embodiments, an APC polyol is selected from the group consisting of **Q1, Q2, Q3, Q4, Q5, Q6,** and mixtures of any two or more of these. 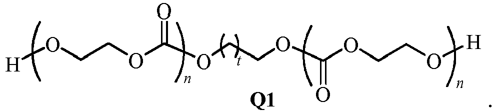 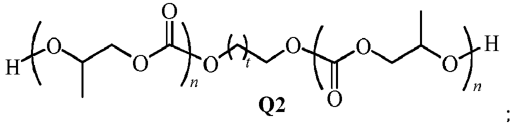 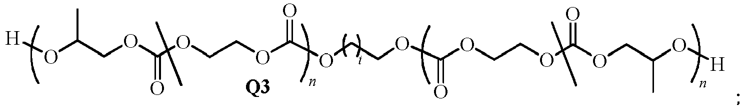 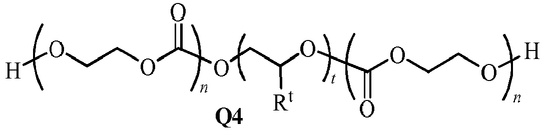 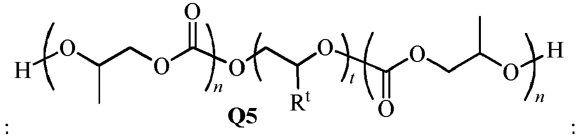 and 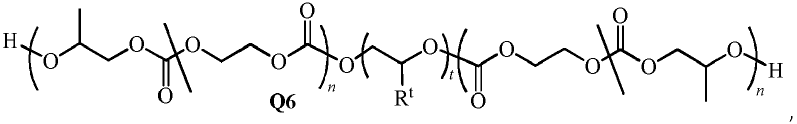 wherein, *t* is an integer from 1 to 12 inclusive, and R^{t} is independently at each occurrence - H, or -CH₃.

In certain embodiments, an APC polyol is selected from the group consisting of:
Poly(propylene carbonate) of formula **Q2** having an average molecular weight number of between about 500 g/mol and about 3,000 g/mol, a polydisperisty index less than about 1.25, at least 95% carbonate linkages, and at least 98% -OH end groups;
Poly(propylene carbonate) of formula **Q2** having an average molecular weight number of about 500 g/mol, a polydisperisty index less than about 1.25, at least 95% carbonate linkages, and at least 98% -OH end groups;
Poly(propylene carbonate) of formula **Q2** having an average molecular weight number of about 1,000 g/mol, a polydisperisty index less than about 1.25, at least 95% carbonate linkages, and at least 98% -OH end groups;
Poly(propylene carbonate) of formula **Q2** having an average molecular weight number of about 2,000 g/mol, a polydisperisty index less than about 1.25, at least 95% carbonate linkages, and at least 98% -OH end groups;
Poly(propylene carbonate) of formula **Q2** having an average molecular weight number of about 3,000 g/mol, a polydisperisty index less than about 1.25, at least 95% carbonate linkages, and at least 98% -OH end groups;
Poly(ethylene-co-propylene carbonate) of formula **Q3** having an average molecular weight number of about 3,000 g/mol, a polydisperisty index less than about 1.25, at least 95% carbonate linkages, and at least 98% -OH end groups;
Poly(ethylene carbonate) of formula **Q4** having an average molecular weight number of between about 500 g/mol and about 3,000 g/mol (e.g. each n is between about 4 and about 16), a polydisperisty index less than about 1.25, at least 95% carbonate linkages, and at least 98% -OH end groups;
Poly(propylene carbonate) of formula **Q5** having an average molecular weight number of between about 500 g/mol and about 3,000 g/mol, a polydisperisty index less than about 1.25, at least 95% carbonate linkages, and at least 98% -OH end groups;
Poly(propylene carbonate) of formula **Q5** having an average molecular weight number of about 500 g/mol, a polydisperisty index less than about 1.25, at least 95% carbonate linkages, and at least 98% -OH end groups;
Poly(propylene carbonate) of formula **Q5** having an average molecular weight number of about 1,000 g/mol, a polydisperisty index less than about 1.25, at least 95% carbonate linkages, and at least 98% -OH end groups;
Poly(propylene carbonate) of formula **Q5** having an average molecular weight number of about 2,000 g/mol, a polydisperisty index less than about 1.25, at least 95% carbonate linkages, and at least 98% -OH end groups;
Poly(propylene carbonate) of formula **Q5** having an average molecular weight number of about 3,000 g/mol, a polydisperisty index less than about 1.25, at least 95% carbonate linkages, and at least 98% -OH end groups;
Poly(ethylene-co-propylene carbonate) of formula **Q6** having an average molecular weight number of about 3,000 g/mol, a polydisperisty index less than about 1.25, at least 95% carbonate linkages, and at least 98% -OH end groups.

In certain embodiments, an embedded chain transfer agent 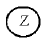 is a moiety derived from a polymeric diol or higher polyhydric alcohol. In certain embodiments, such polymeric alcohols are polyether or polyester polyols. In certain embodiments 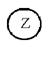 is a polyether polyol comprising ethylene glycol or propylene glycol repeating units (-OCH₂CH₂O-, or -OCH₂CH(CH₃)O-) or combinations of these. In certain embodiments, 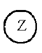 is a polyester polyol comprising the reaction product of a diol and a diacid, or a material derived from ring-opening polymerization of lactones.

In certain embodiments where 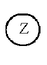 comprises a polyether diol, the APC polyol has a structure **Q7:** 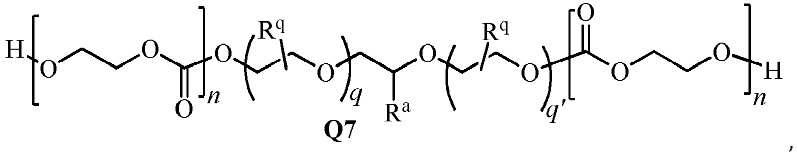 wherein,
R^{q} is at each occurrence in the polymer chain independently -H or -CH₃;
R^{a} is-H, or -CH₃;
*q* and *q'* are independently an integer from about 2 to about 40; and
and n is as defined above and in the examples and embodiments herein.

In certain embodiments, an APC polyol is selected from the group consisting of: 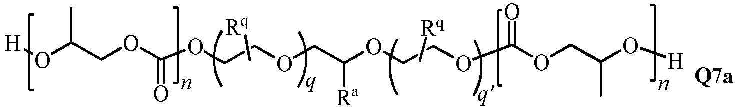 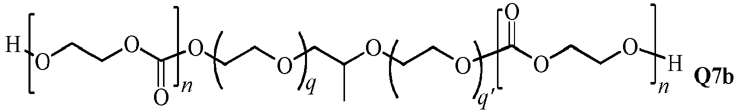 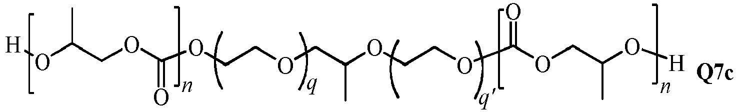 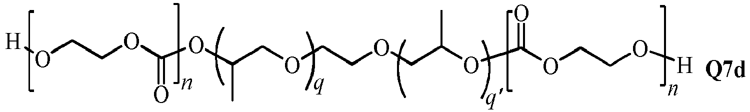 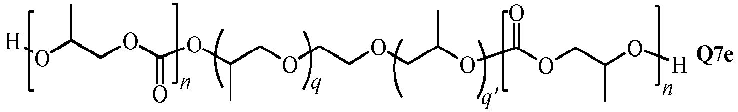 wherein each of R^{a}, R^{q}, *q, q',* and n is as defined above and described in classes and subclasses herein.

In certain embodiments, where APC polyols comprise compounds conforming to structure **Q7,** the moiety 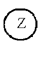 is derived from a commercially available polyether polyol such as those typically used in the formulation of polyurethane foam compositions.

In certain embodiments where 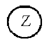 comprises a polyester diol, the APC polyol has a structure **Q8:** 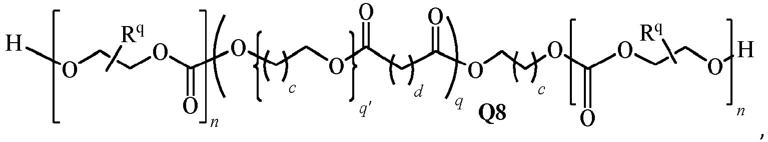 wherein,
*c* is at each occurrence in the polymer chain independently an integer from 0 to 6;
*d* is at each occurrence in the polymer chain independently an integer from 1 to 11;
*q'* is at each occurrence in the polymer chain independently an integer from 1 to 10; and
each of R^{q}, *n,* and q is as defined above and described in classes and subclasses herein.

In certain embodiments, an APC polyol is selected from the group consisting of: 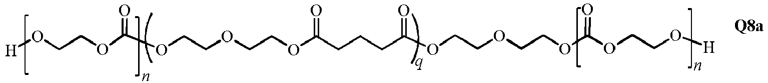 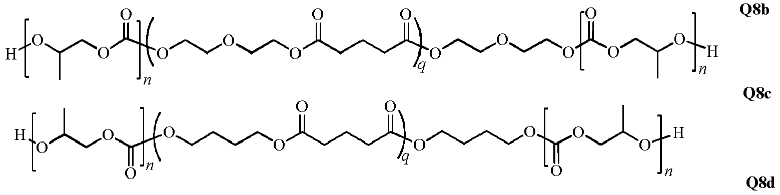 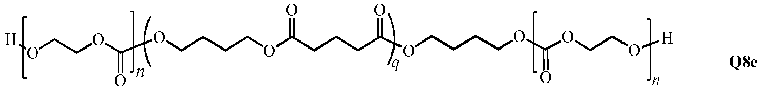 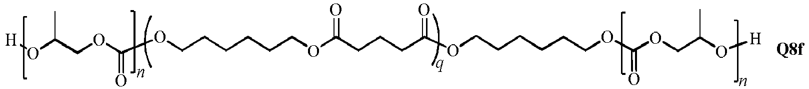 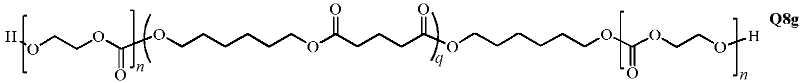 wherein each of *n* and *q* is as defined above and described in classes and subclasses herein.

In certain embodiments, where APC polyols comprise compounds conforming to structure **Q8,** the moiety 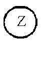 is derived from a commercially available polyester polyol such as those typically used in the formulation of polyurethane foam compositions.

### Appendix B - Isocyanate reagents

This section describes some of the polyisocyanates and that have utility in methods and compositions of the present invention. In some embodiments, compositions of the present invention comprise isocyanate reagents or their reaction products. The purpose of these isocyanate reagents is to react with the reactive end groups on the APC polyols to form higher molecular weight structures through chain extension and/or cross-linking.

The art of polyurethane synthesis is well advanced and a very large number of isocyanates and related polyurethane precursors are known in the art and available commercially. While this section of the specification describes isocyanates suitable for use in certain embodiments of the present invention, it is to be understood that it is within the capabilities of one skilled in the art of polyurethane formulation to use alternative isocyanates along with the teachings of this disclosure to formulate additional compositions of matter within the scope of the present invention. Descriptions of suitable isocyanate compounds and related methods can be found in: Chemistry and Technology of Polyols for Polyurethanes lonescu, Mihail 2005 (ISBN 978-1-84735-035-0), and H. Ulrich, "Urethane Polymers," Kirk-Othmer Encyclopedia of Chemical Technology, 1997.

In certain embodiments, isocyanate reagents comprise two or more isocyanate groups per molecule. In certain embodiments, isocyanate reagents are diisocyanates. In other embodiments, isocyanate reagents are higher polyisocyanates such as triisocyanates, tetraisocyanates, isocyanate polymers or oligomers, and the like. In certain embodiments, isocyanate reagents are aliphatic polyisocyanates or derivatives or oligomers of aliphatic polyisocyanates. In other embodiments, isocyanates are aromatic polyisocyanates or derivatives or oligomers of aromatic polyisocyanates. In certain embodiments, compositions may comprise mixtures of any two or more of the above types of isocyanates.

In certain embodiments, an isocyanate component used in the formulation of the novel materials of the present invention have a functionality of 2 or more. In certain embodiments, an isocyanate component of the inventive materials comprises a mixture of diisocyanates and higher isocyanates formulated to achieve a particular functionality number for a given application. In certain embodiments, where the inventive composition is a flexible foam or a soft elastomer, an isocyanate employed has a functionality of about 2. In certain embodiments, such isocyanates have a functionality between about 2 and about 2.7. In certain embodiments, such isocyanates have a functionality between about 2 and about 2.5. In certain embodiments, such isocyanates have a functionality between about 2 and about 2.3. In certain embodiments, such isocyanates have a functionality between about 2 and about 2.2.

In other embodiments, where the inventive composition is a rigid foam or a thermoplastic, an isocyanate employed has a functionality greater than 2. In certain embodiments, such isocyanates have a functionality between about 2.3 and about 4. In certain embodiments, such isocyanates have a functionality between about 2.5 and about 3.5. In certain embodiments, such isocyanates have a functionality between about 2.6 and about 3.1. In certain embodiments, such isocyanates have a functionality of about 3.

In certain embodiments, an isocyanate reagent is selected from the group consisting of: 1,6-hexamethylaminediisocyanate (HDI), isophorone diisocyanate (IPDI), 4,4' methylene-bis(cyclohexyl isocyanate) (H₁₂MDI), 2,4-toluene diisocyanate (TDI), 2,6-toluene diisocyanate (TDI), diphenylmethane-4,4'-diisocyanate (MDI), diphenylmethane-2,4'-diisocyanate (MDI), xylylene diisocyanate (XDI), 1,3-Bis(isocyanatomethyl)cyclohexane (H6-XDI), 2,2,4-trimethylhexamethylene diisocyanate, 2,4,4-trimethylhexamethylene diisocyanate (TMDI), m-tetramethylxylylene diisocyanate (TMXDI), p-tetramethylxylylene diisocyanate (TMXDI), isocyanatomethyl-1,8-ictane diisocyanate (TIN), triphenylmethane-4,4',4"triisocyanate, Tris(p-isocyanatomethyl)thiosulfate, 1,3-Bis(isocyanatomethyl)benzene, 1,4-tetramethylene diisocyanate, trimethylhexane diisocyanate, 1,6-hexamethylene diisocyanate, 1,4-cyclohexyl diisocyanate, lysine diisocyanate, and mixtures of any two or more of these.

Isocyanates suitable for certain embodiments of the present invention are available commercially under various trade names. Examples of suitable commercially available isocyanates include materials sold under trade names: Desmodur® (Bayer Material Science), Tolonate® (Perstorp), Takenate® (Takeda), Vestanat® (Evonik), Desmotherm® (Bayer Material Science), Bayhydur® (Bayer Material Science), Mondur (Bayer Material Science), Suprasec (Huntsman Inc.), Lupranate® (BASF), Trixene (Baxenden), Hartben® (Benasedo), Ucopol® (Sapici), and Basonat® (BASF). Each of these trade names encompasses a variety of isocyanate materials available in various grades and formulations. The selection of suitable commercially-available isocyanate materials as reagents to produce polyurethane compositions for a particular application is within the capability of one skilled in the art of polyurethane technology using the teachings and disclosure of this patent application along with the information provided in the product data sheets supplied by the above-mentioned suppliers.

In some embodiments, additional isocyanates suitable for certain embodiments of the present invention are sold under the trade name Lupranate® (BASF). In certain embodiments, isocyanates are selected from the group consisting of the materials shown in Table 1:

**TABLE 1**

| Products | Description | % NCO | Nominal Funct. |
|---|---|---|---|
| Lupranate M | 4,4' MDI | 33.5 | 2 |
| Lupranate MS | 4,4' MDI | 33.5 | 2 |
| Lupranate MI | 2,4' and 4,4' MDI Blend | 33.5 | 2 |
| Lupranate LP30 | Liquid Pure 4,4' MDI | 33.1 | 2 |
| Lupranate 227 | Monomeric/Modified MDI Blend | 32.1 | 2 |

| Carbodiimide Modified | | | |
|---|---|---|---|
| Lupranate 5143 | Carbodiimide Modified 4,4' MDI | 29.2 | 2.2 |
| Lupranate MM103 | Carbodiimide Modified 4,4' MDI | 29.5 | 2.2 |
| Lupranate 219 | Carbodiimide Modified 4,4' MDI | 29.2 | 2.2 |
| Lupranate 81 | Carbodiimide Modified MDI | 29.5 | 2.2 |
| Lupranate 218 | Carbodiimide Modified MDI | 29.5 | 2.2 |

| Polymeric MDI (PMDI) | | | |
|---|---|---|---|
| Lupranate M10 | Low Funct. Polymeric | 31.7 | 2.2 |
| Lupranate R2500U | Polymeric MDI Variant | 31.5 | 2.7 |
| Lupranate M20S | Mid-Functionality Polymeric | 31.5 | 2.7 |
| Lupranate M20FB | Mid-Functionality Polymeric | 31.5 | 2.7 |
| Lupranate M70L | High-Functionality Polymeric | 31 | 3 |
| Lupranate M200 | High-Functionality Polymeric | 30 | 3.1 |

| Polymeric MD**I** Blends and Derivatives | | | |
|---|---|---|---|
| Lupranate 241 | Low Functionality Polymeric | 32.6 | 2.3 |
| Lupranate 230 | Low Viscosity Polymeric | 32.5 | 2.3 |
| Lupranate 245 | Low Viscosity Polymeric | 32.3 | 2.3 |
| Lupranate TF2115 | Mid Functionality Polymeric | 32.3 | 2.4 |
| Lupranate 78 | Mid Functionality Polymeric | 32 | 2.3 |
| Lupranate 234 | Low Functionality Polymeric | 32 | 2.4 |
| Lupranate 273 | Low Viscosity Polymeric | 32 | 2.5 |
| Lupranate 266 | Low Viscosity Polymeric | 32 | 2.5 |
| Lupranate 261 | Low Viscosity Polymeric | 32 | 2.5 |
| Lupranate 255 | Low Viscosity Polymeric | 31.9 | 2.5 |
| Lupranate 268 | Low Viscosity Polymeric | 30.6 | 2.4 |

| Select MDI Prepolymers | | | |
|---|---|---|---|
| Lupranate 5010 | Higher Functional Prepolymer | 28.6 | 2.3 |
| Lupranate 223 | Low Vise. Derivative of Pure MDI | 27.5 | 2.2 |
| Lupranate 5040 | Mid Functional, Low Viscosity | 26.3 | 2.1 |
| Lupranate 5110 | Polymeric MDI Prepolymer | 25.4 | 2.3 |
| Lupranate MP102 | 4,4' MDI Prepolymer | 23 | 2 |
| Lupranate 5090 | Special 4,4' MDI Prepolymer | 23 | 2.1 |
| Lupranate 5050 | Mid Functional, Mid NCO Prepol | 21.5 | 2.1 |
| Lupranate 5030 | Special MDI Prepolymer | 18.9 | NA |
| Lupranate 5080 | 2,4'-MDI Enhanced Prepolymer | 15.9 | 2 |
| Lupranate 5060 | Low Funct, Higher MW Prepol | 15.5 | 2 |
| Lupranate 279 | Low Funct, Special Prepolymer | 14 | 2 |
| Lupranate 5070 | Special MDI Prepolymer | 13 | 2 |
| Lupranate 5020 | Low Functionality, Low NCO | 9.5 | 2 |

| Toluene Diisocyanate (TDI) | | | |
|---|---|---|---|
| Lupranate T80- | 80/20:2,4/2,6 TDI | 48.3 | 2 |
| Lupranate T80- | High Acidity TDI | 48.3 | 2 |
| Lupranate 8020 | 80/20:TDI/Polymeric MDI | 44.6 | 2.1 |

Other isocyanates suitable for certain embodiments of the present invention are sold under the trade name Desmodur® available from Bayer Material Science. In certain embodiments, isocyanates are selected from the group consisting of the materials shown in Table 2:

**TABLE 2**

| **Trade Name** | **Description** |
|---|---|
| **Desmodur® 2460 M** | Monomeric diphenylmethane diisocyanate with high 2,4'-isomer content |
| **Desmodur® 44 M** | A monomeric diphenylmethane-4,4'-diisocyanate (MDI). |
| **Desmodur® 44 MC** | Desmodur 44 MC Flakes is a monomeric diphenylmethane-4,4'-diisocyanate (MDI). |
| **Desmodur® BL 1100/1** | Blocked aromatic polyisocyanate based on TDI |
| **Desmodur® BL 1265 MPA/X** | Blocked aromatic polyisocyanate based on TDI |
| **Desmodur® BL 3175 SN** | Blocked, aliphatic polyisocyanate based on HDI |
| **Desmodur® BL 3272 MPA** | Blocked aliphatic polyisocyanate based on HDI |
| **Desmodur® BL 3370 MPA** | Blocked aliphatic polyisocyanate based on HDI |
| **Desmodur® BL 3475 BA/SN** | Aliphatic crosslinking stoving urethane resin based on HDI / IPDI |
| **Desmodur® BL 3575/1 MPA/SN** | Blocked aliphatic polyisocyanate based on HDI |
| **Desmodur® BL 4265 SN** | Blocked, aliphatic polyisocyanate based on IPDI |
| **Desmodur® BL 5375** | Blocked aliphatic polyisocyanate based on H 12 MDI |
| **Desmodur® CD-L** | Desmodur CD-L is a modified isocyanate based on diphenylmethane-4,4'-diisocyanate. |
| **Desmodur® CD-S** | Desmodur CD-S is a modified isocyanate based on diphenylmethane-4,4'-diisocyanate. |
| **Desmodur® D XP 2725** | Hydrophilically modified polyisocyanate |
| **Desmodur® DA-L** | Hydrophilic aliphatic polyisocyanate based on hexamethylene diisocyanate |
| **Desmodur® DN** | Aliphatic polyisocyanate of low volatility |
| **Desmodur® E 1160** | Aromatic polyisocyanate prepolymer based on toluene diisocyanate |
| **Desmodur® E 1361 BA** | Aromatic polyisocyanate prepolymer based on toluylene diisocyanate |
| **Desmodur® E 1361 MPA/X** | Aromatic polyisocyanate prepolymer based on toluene diisocyanate |
| **Desmodur® E 14** | Aromatic polyisocyanate prepolymer based on toluene diisocyanate |
| **Desmodur® E 15** | Aromatic polyisocyanate prepolymer based on toluene diisocyanate. |
| **Desmodur® E 1660** | Aromatic polyisocyanate prepolymer based on toluene diisocyanate. |
| **Desmodur® E 1750 PR** | Polyisocyanate prepolymer based on toluene diisocyanate |
| **Desmodur® E 20100** | Modified polyisocyanate prepolymer based on diphenylmethane diisocyanate. |
| **Desmodur® E 21** | Aromatic polyisocyanate prepolymer based on diphenylmethane diisocyanate (MDI). |
| **Desmodur® E 2190 X** | Aromatic polyisocyanate prepolymer based on diphenylmethane diisocyanate (MDI) |
| **Desmodur® E 22** | Aromatic polyisocyanate prepolymer based on diphenylmethane diisocyanate. |
| **Desmodur® E 2200/76** | Desmodur E 2200/76 is a prepolymer based on (MDI) with isomers. |
| **Desmodur® E 23** | Aromatic polyisocyanate prepolymer based on diphenylmethane diisocyanate (MDI). |
| **Desmodur® E 29** | Polyisocyanate prepolymer based on diphenylmethane diisocyanate. |
| **Desmodur® E 305** | Desmodur E 305 is a largely linear aliphatic NCO prepolymer based on hexamethylene diisocyanate. |
| **Desmodur® E 3265 MPA/SN** | Aliphatic polyisocyanate prepolymer based on hexamethylene diisocyanate (HDI) |
| **Desmodur® E 3370** | Aliphatic polyisocyanate prepolymer based on hexamethylene diisocyanate |
| **Desmodur® E XP 2605** | Polyisocyanate prepolymer based on toluene diisocyanate and diphenylmethan diisocyanate |
| **Desmodur® E XP 2605** | Polyisocyanate prepolymer based on toluene diisocyanate and diphenylmethan diisocyanate |
| **Desmodur® E XP 2715** | Aromatic polyisocyanate prepolymer based on 2,4'-diphenylmethane diisocyanate (2,4'-MDI) and a hexanediol adipate |
| **Desmodur® E XP 2723** | Aromatic polyisocyanate prepolymer based on diphenylmethane diisocyanate (MDI). |
| **Desmodur® E XP 2726** | Aromatic polyisocyanate prepolymer based on 2,4'-diphenylmethane diisocyanate (2,4'-MDI) |
| **Desmodur® E XP 2727** | Aromatic polyisocyanate prepolymer based on diphenylmethane diisocyanate. |
| **Desmodur® E XP 2762** | Aromatic polyisocyanate prepolymer based on diphenylmethane diisocyanate (MDI). |
| **Desmodur® H** | Monomeric aliphatic diisocyanate |
| **Desmodur® HL** | Aromatic/aliphatic polyisocyanate based on toluylene diisocyanate/ hexamethylene diisocyanate |
| **Desmodur® I** | Monomeric cycloaliphatic diisocyanate. |
| **Desmodur® IL 1351** | Aromatic polyisocyanate based on toluene diisocyanate |
| **Desmodur® IL 1451** | Aromatic polyisocyanate based on toluene diisocyanate |
| **Desmodur® IL BA** | Aromatic polyisocyanate based on toluene diisocyanate |
| **Desmodur® IL EA** | Aromatic polyisocyante resin based on toluylene diisocyanate |
| **Desmodur® L 1470** | Aromatic polyisocyanate based on toluene diisocyanate |
| **Desmodur® L 67 BA** | Aromatic polyisocyanate based on tolulene diisocyanate |
| **Desmodur® L 67** MPA/X | Aromatic polyisocyanate based on tolulene diisocyanate |
| **Desmodur® L 75** | Aromatic polyisocyanate based on tolulene diisocyanate |
| **Desmodur® LD** | Low-functionality isocyanate based on hexamethylene diisocyanate (HDI) |
| **Desmodur® LS 2424** | Monomeric diphenylmethane diisocyanate with high 2,4'-isomer content |
| **Desmodur® MT** | Polyisocyanate prepolymer based on diphenylmethane diisocyanate |
| **Desmodur® N 100** | Aliphatic polyisocyanate (HDI biuret) |
| **Desmodur® N 3200** | Aliphatic polyisocyanate (low-viscosity HDI biuret) |
| **Desmodur® N 3300** | Aliphatic polyisocyanate (HDI trimer) |
| **Desmodur® N 3368 BA/SN** | Aliphatic polyisocyanate (HDI trimer) |
| **Desmodur® N 3368 SN** | Aliphatic polyisocyanate (HDI trimer) |
| **Desmodur® N 3386 BA/SN** | Aliphatic polyisocyanate (HDI trimer) |
| **Desmodur® N 3390 BA** | Aliphatic polyisocyanate (HDI trimer) |
| **Desmodur® N 3390 BA/SN** | Aliphatic polyisocyanate (HDI trimer) |
| **Desmodur® N 3400** | Aliphatic polyisocyanate (HDI uretdione) |
| **Desmodur® N 3600** | Aliphatic polyisocyanate (low-viscosity HDI trimer) |
| **Desmodur® N 3790 BA** | Aliphatic polyisocyanate (high functional HDI trimer) |
| **Desmodur® N 3800** | Aliphatic polyisocyanate (flexibilizing HDI trimer) |
| **Desmodur® N 3900** | Low-viscosity, aliphatic polyisocyanate resin based on hexamethylene diisocyanate |
| **Desmodur® N 50 BA/MPA** | Aliphatic polyisocyanate (HDI biuret) |
| **Desmodur® N 75 BA** | Aliphatic polyisocyanate (HDI biuret) |
| **Desmodur® N 75 MPA** | Aliphatic polyisocyanate (HDI biuret) |
| **Desmodur® N 75 MPA/X** | Aliphatic polyisocyanate (HDI biuret) |
| **Desmodur® NZ 1** | Aliphatic polyisocyanate |
| **Desmodur® PC-N** | Desmodur PC-N is a modified diphenyl-methane-4,4'-diisocyanate (MDI). |
| **Desmodur® PF** | Desmodur PF is a modified diphenyl-methane-4,4'-diisocyanate (MDI). |
| **Desmodur® PL 340, 60 % BA/SN** | Blocked aliphatic polyisocyanate based on IPDI |
| **Desmodur® PL 350** | Blocked aliphatic polyisocyanate based on HDI |
| **Desmodur® RC** | Solution of a polyisocyanurate of toluene diisocyanate (TDI) in ethyl acetate. |
| **Desmodur® RE** | Solution of triphenylmethane-4,4',4"-triisocyanate in ethyl acetate |
| **Desmodur® RFE** | Solution of tris(p-isocyanatophenyl) thiophosphate in ethyl acetate |
| **Desmodur® RN** | Solution of a polyisocyanurate with aliphatic and aromatic NCO groups in ethyl acetate. |
| **Desmodur® T 100** | Pure 2,4'-toluene diisocyanate (TDI) |
| **Desmodur® T 65 N** | 2,4- and 2,6-toluene diisocyanate (TDI) in the ratio 67 : 33 |
| **Desmodur® T 80** | 2,4- and 2,6-toluene diisocyanate (TDI) in the ratio 80 : 20 |
| **Desmodur® T 80 P** | 2,4- and 2,6-toluene diisocyanate (TDI) in the ratio 80 : 20 with an increased content of hydrolysable chlorine |
| **Desmodur® VH 20 N** | Polyisocyanate based on diphenylmethane diisocyanate |
| **Desmodur® VK** | Desmodur VK products re mixtures of diphenylmethane-4,4'-diisocyanate (MDI) with isomers and higher functional homologues |
| **Desmodur® VKP 79** | Desmodur VKP 79 is a modified diphenylmethane-4,4'-diisocyanate (MDI) with isomers and homologues. |
| **Desmodur® VKS 10** | Desmodur VKS 10 is a mixture of diphenylmethane-4,4'-diisocyanate (MDI) with isomers and higher functional homologues |
| **Desmodur® VKS 20** | Desmodur VKS 20 is a mixture of diphenylmethane-4,4'-diisocyanate (MDI) with isomers and higher functional homologues |
| **Desmodur® VKS 20 F** | Desmodur VKS 20 F is a mixture of diphenylmethane-4,4'-diisocyanate (MDI) with isomers and higher functional homologues |
| **Desmodur® VKS 70** | Desmodur VKS 70 is a mixture of diphenylmethane-4,4'-diisocyanate (MDI) with isomers and homologues. |
| **Desmodur® VL** | Aromatic polyisocyanate based on diphenylmethane diisocyanate |
| **Desmodur® VP LS 2078/2** | Blocked aliphatic polyisocyanate based on IPDI |
| **Desmodur® VP LS 2086** | Aromatic polyisocyanate prepolymer based on diphenylmethane diisocyanate |
| **Desmodur® VP LS 2257** | Blocked aliphatic polyisocyanate based on HDI |
| **Desmodur® VP LS 2371** | Aliphatic polyisocyanate prepolymer based on isophorone diisocyanate. |
| **Desmodur® VP LS 2397** | Desmodur VP LS 2397 is a linear prepolymer based on polypropylene ether glycol and diphenylmethane diisocyanate |
| **Desmodur® W** | Monomeric cycloaliphatic diisocyanate |
| **Desmodur® W/1** | Monomeric cycloaliphatic diisocyanate |
| **Desmodur® XP 2404** | Desmodur XP 2404 is a mixture of monomeric polyisocyanates |
| **Desmodur® XP 2406** | Aliphatic polyisocyanate prepolymer based on isophorone diisocyanate |
| **Desmodur® XP 2489** | Aliphatic polyisocyanate |
| **Desmodur® XP 2505** | Desmodur XP 2505 is a prepolymer containing ether groups based on diphenylmethane-4,4'-diisocyanates (MDI) with isomers and |
| **Desmodur® XP 2551** | Aromatic polyisocyanate based on diphenylmethane diisocyanate |
| **Desmodur® XP 2565** | Low-viscosity, aliphatic polyisocyanate resin based on isophorone diisocyanate. |
| **Desmodur® XP 2580** | Aliphatic polyisocyanate based on hexamethylene diisocyanate |
| **Desmodur® XP 2599** | Aliphatic prepolymer containing ether groups and based on hexamethylene-1,6-diisocyanate (HDI) |
| **Desmodur® XP 2617** | Desmodur XP 2617 is a largely linear NCO prepolymer based on hexamethylene diisocyanate. |
| **Desmodur® XP 2665** | Aromatic polyisocyanate prepolymer based on diphenylmethane diisocyanate (MDI). |
| **Desmodur® XP 2675** | Aliphatic polyisocyanate (highly functional HDI trimer) |
| **Desmodur® XP 2679** | Aliphatic polyisocyanate (HDI allophanate trimer) |
| **Desmodur® XP 2714** | Silane-functional aliphatic polyisocyanate based on hexamethylene diisocyanate |
| **Desmodur® XP 2730** | Low-viscosity, aliphatic polyisocyanate (HDI uretdione) |
| **Desmodur® XP 2731** | Aliphatic polyisocyanate (HDI allophanate trimer) |
| **Desmodur® XP 2742** | Modified aliphatic Polyisocyanate (HDI-Trimer), contains SiO2 - nanoparticles |

In some embodiments, isocyanates suitable for certain embodiments of the present invention are sold under the trade name Tolonate® (Perstorp). In certain embodiments, isocyanates are selected from the group consisting of the materials shown in Table 3:

**TABLE 3**

| | |
|---|---|
| Tolonate™ D2 | a blocked aliphatic polyisocyanate, supplied at 75 % solids in aromatic solvent |
| Tolonate™ HDB | a viscous solvent-free aliphatic polyisocyanate |
| Tolonate™ HDB-LV | a solvent free low viscosity aliphatic polyisocyanate |
| Tolonate™ HDB 75 B | an aliphatic polyisocyanate, supplied at 75% solids in methoxy propyl acetate |
| Tolonate™ HDB 75 BX | an aliphatic polyisocyanate, supplied at 75% solids |
| Tolonate™ HDT | a medium viscosity, solvent-free aliphatic polyisocyanate |
| Tolonate™ HDT-LV | is a solvent free low viscosity aliphatic polyisocyanate |
| Tolonate™ HDT-LV2 | a solvent free, very low viscosity aliphatic polyisocyanate |
| Tolonate™ HDT 90 | an aliphatic polyisocyanate, based on HDI-trimer (isocyanurate), supplied at 90% solids |
| Tolonate™ HDT 90 B | an aliphatic polyisocyanate, based on HDI-trimer (isocyanurate), supplied at 90% solids |
| Tolonate™ IDT 70 B | an aliphatic polyisocyanate, based on HDI-trimer (isocyanurate), supplied at 70% solids |
| Tolonate™ IDT 70 S | an aliphatic polyisocyanate, based on HDI-trimer (isocyanurate), supplied at 70% solids |
| Tolonate™ X FD 90 B | a high functionality, fast drying aliphatic polyisocyanate based on HDI-trimer, supplied at 90% solids |

In some embodiments, isocyanates suitable for certain embodiments of the present invention are sold under the trade name Mondur® available from Bayer Material Science. In certain embodiments, isocyanates are selected from the group consisting of the materials shown in Table 4:

**TABLE 4**

| **Trade Name** | **Description** |
|---|---|
| **MONDUR 445** | TDI/MDI blend polyisocyanate; blend of toluene diisocyanate and polymeric diphenylmethane diisocyanate; NCO weight 44.5-45.2% |
| **MONDUR 448** | modified polymeric diphenylmethane diisocyanate (pMDI) prepolymer; NCO weight 27.7%; viscosity 140 mPa·s @ 25°C; equivalent weight 152; functionality 2.2 |
| **MONDUR 489** | modified polymeric diphenylmethane diisocyanate (pMDI); NCO weight 31.5%; viscosity 700 mPa·s @ 25°C; equivalent weight 133; functionality 3.0 |
| **MONDUR 501** | modified monomeric diphenylmethane diisocyanate (mMDI); isocyanate-terminated polyester prepolymer; NCO weight 19.0%; viscosity 1,100 mPa·s @ 25°C; equivalent weight 221; functionality 2 |
| **MONDUR 541** | polymeric diphenylmethane diisocyanate (pMDI); binder for composite wood products and as a raw material in adhesive formulations; NCO weight 31.5%; viscosity 200 mPa·s @ 25°C |
| **MONDUR 582** | polymeric diphenylmethane diisocyanate (pMDI); binder for composite wood products and as a raw material in adhesive formulations; NCO weight 31.0%; viscosity 200 mPa·s @ 25°C |
| **MONDUR 541-Light** | polymeric diphenylmethane diisocyanate (pMDI); NCO weight 32.0%; viscosity 70 mPa·s @ 25°C; equivalent weight 131; functionality 2.5 |
| **MONDUR 841** | modified polymeric MDI prepolymer; NCO, Wt 30.5%; Acidity, Wt 0.02%; Amine Equivalent 132; Viscosity at 25°C, mPa·s 350; Specific gravity at 25°C 1.24; Flash Point, PMCC, °F >200 |
| **MONDUR 1437** | modified diphenylmethane diisocyanate (mMDI); isocyanate-terminated polyether prepolymer; NCO weight 10.0%; viscosity 2,500 mPa·s @ 25°C; equivalent weight 420; functionality 2 |
| **MONDUR 1453** | modified diphenylmethane diisocyanate (mMDI); isocyanate-terminated polyether prepolymer based on polypropylene ether glycol (PPG); NCO weight 16.5%; viscosity 600 mPa·s @ 25°C; equivalent weight 254; functionality 2 |
| **MONDUR 1515** | modified polymeric diphenylmethane diisocyanate (pMDI) prepolymer; used in the production of rigid polyurethane foams, especially for the appliance industry; NCO weight 30.5%; viscosity 350 mPa·s @ 25°C |
| **MONDUR 1522** | modified monomeric 4,4-diphenylmethane diisocyanate (mMDI); NCO weight 29.5%; viscosity 50 mPa·s @ 25°C; equivalent weight 143; functionality 2.2 |
| **MONDUR MA-2300** | modified monomeric MDI, allophanate-modified 4,4'-diphenylmethane diisocyanate (mMDI); NCO weight 23.0%; viscosity 450 mPa·s @ 25°C; equivalent weight 183; functionality 2.0 |
| **MONDUR MA 2600** | modified monomeric MDI, allophanate-modified 4,4'-diphenylmethane diisocyanate (mMDI); NCO weight 26.0%; viscosity 100 mPa·s @ 25°C; equivalent weight 162; functionality 2.0 |
| **MONDUR MA 2601** | aromatic diisocyanate blend, allophanate-modified 4,4'-diphenylmethane diisocyanate (MDI) blended with polymeric diphenylmethane diisocyanate (pMDI) containing 2,4'-isomer; NCO weight 29.0%; viscosity 60 mPa·s @ 25°C; equivalent weight 145; functionality 2.2 |
| **MONDUR MA 2603** | MDI prepolymer; isocyanate-terminated (MDI) prepolymer blended with an allophanate-modified 4,4'-diphenylmethane diisocyanate (MDI); NCO weight 16.0%; viscosity 1,050 mPa·s @ 25°C; equivalent weight 263; functionality 2.0 |
| **MONDUR MA-2902** | modified monomeric MDI, allophanate-modified 4,4'-diphenylmethane diisocyanate (mMDI); NCO weight 29.0%; viscosity 40 mPa·s @ 25°C; equivalent weight 145; functionality 2.0 |
| **MONDUR MA-2903** | modified monomeric MDI; isocyanate-terminated (MDI) prepolymer; NCO weight 19.0%; viscosity 400 mPa·s @ 25°C; equivalent weight 221; functionality 2.0 |
| **MONDUR MA-2904** | Allophanate-modified MDI polyether prepolymer; NCO weight 12.0%; viscosity 1,800 mPa·s @ 25°C; equivalent weight 350; functionality of 2.0 |
| **MONDUR MB** | high-purity grade difunctional isocyanante, diphenylmethane 4,4'-diiscocyanate; used in production of polyurethane elastomers, adhesives, coatings and intermediate polyurethane products; appearance colorless solid or liquid; specific gravity @ 50°C±15.5 1.19; flash point 202°C PMCC; viscosity (in molten form) 4.1 mPa·S; bult density 10 Ib/gal (fused) or 9.93 Ib/gal (molten); freezing temperature 39°C |
| **MONDUR MLQ** | monomeric diphenylmethan diisocyanate; used in a foams, cast elastomers, coatings and ahdesives; appearance light yellow clear liquid, NCO 33.4% wt; 1.19 specific gravity at 25°C, 196°C flash point, DIN 51758; 11-15°C freezing temperature |
| **MONDUR MQ** | high-purity-grade difunctional isocyanate, diphenylmethane 4,4'-diisocyanate (MDI); used in production of solid polyurethane elastomers, adhesives, coatings and in intermediate polyurethane products; appearance colorless solid or liquid; specific gravity 1.19 @ 50°C; flash point 202°C PMCC; viscosity 4.1 mPa·S; bulk density 10 lb./gal (fused) or 9.93 Ib./gal (molten); freezing temperature 39°C |
| **MONDUR MR** | polymeric diphenylmethane diisocyanate (pMDI); NCO weight 31.5%; viscosity 200 mPa·s @ 25°C; equivalent weight 133; functionality 2.8 |
| **MONDUR MR LIGHT** | polymeric diphenylmethane diisocyanate (pMDI); NCO weight 31.5%; viscosity 200 mPa·s @ 25°C; equivalent weight 133; functionality 2.8 |
| **MONDUR MR-5** | polymeric diphenylmethane diisocyanate (pMDI); NCO weight 32.5%; viscosity 50 mPa·s @ 25°C; equivalent weight 129; functionality 2.4 |
| **MONDUR MRS** | 2,4' rich polymeric diphenylmethane diisocyanate (pMDI); NCO weight 31.5%; viscosity 200 mPa·s @ 25°C; equivalent weight 133; functionality2.6 |
| **MONDUR MRS 2** | 2,4' rich polymeric diphenylmethane diisocyanate (pMDI); NCO weight 33.0%; viscosity 25 mPa·s @ 25°C; equivalent weight 127; functionality2.2 |
| **MONDUR MRS-4** | 2,4' rich polymeric diphenylmethane diisocyanate (pMDI); NCO weight 32.5%; viscosity 40 mPa·s @ 25°C; equivalent weight 129; functionality 2.4 |
| **MONDUR MRS-5** | 2,4' rich polymeric diphenylmethane diisocyanate (pMDI); NCO weight 32.3%; viscosity 55 mPa·s @ 25°C; equivalent weight 130; functionality 2.4 |
| **MONDUR PC** | modified 4,4' diphenylmethane diisocyanate (mMDI); NCO weight 25.8%; viscosity 145 mPa·s @ 25°C; equivalent weight 163; functionality 2.1 |
| **MONDUR PF** | modified 4,4' diphenylmethane diisocyanate (mMDI) prepolymer; NCO weight 22.9%; viscosity 650 mPa·s @ 25°C; equivalent weight 183; functionality 2 |
| **MONDUR TD-65** | monomeric toluene diisocyanate (TDI); 65/35 mixture of 2,4 and 2.6 TDI; NCO weight 48%; viscosity 3 mPa·s @ 25°C; equivalent weight 87.5; functionality 2 |
| **MONDUR TD-80 GRADE A** | monomeric toluene diisocyanate (TDI); 80/20 mixture of the 2,4 and 2,6 isomer; NCO weight 48%; viscosity 5 mPa·s @ 25°C; equivalent weight 87.5; functionality 2 |
| **MONDUR TD-80 GRADE A/GRADE B** | monomeric toluene diisocyanate (TDI); 80/20 mixture of the 2,4 and 2,6 isomer; NCO weight 48%; viscosity 5 mPa·s @ 25°C; equivalent weight 87.5; functionality 2 |

In certain embodiments, one or more of the above-described isocyanate compositions is provided in a formulation typical of an A-side mixture known in the art of polyurethane foam manufacture. Such A side mixtures may comprise prepolymers formed by the reaction of a molar excess of one or more polyisocyanates with reactive molecules comprising reactive functional groups such as alcohols, amines, thiols, carboxylates and the like. A-side mixtures may also comprise solvents, surfactants, stabilizers, and other additives known in the art.

### Other Embodiments

The foregoing has been a description of certain non-limiting embodiments of the invention. Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A method for producing a polyurethane foam composition, the method comprising the steps of
providing an A-side composition comprising one or more polyisocyanates;
providing a B-side composition comprising one or more highly alternating polycarbonate polyols derived from the copolymerization of one or more epoxides and CO₂;
heating the B-side composition to a temperature above 50 °C;
mixing the A-side composition, the heated B-side composition, and CO₂ to provide a foam mixture; and
allowing the foam mixture to cure into the polyurethane foam composition;
wherein at least a portion of the CO₂ is added as a separate stream, or is provided dissolved in the B-side composition;
wherein the highly alternating polycarbonate polyol is **characterized in that** it has at least 95% carbonate linkages.

2. The method of claim 1, wherein (i) the A-side composition, the heated B-side composition and a liquid CO₂ stream are mixed simultaneously at a mix head to provide the foam mixture; or:
wherein (ii) at least a portion of the CO₂ is provided dissolved in the B-side composition, or:
wherein (iii) the A-side composition and the heated B-side composition are mixed at a mix head and a CO₂ stream is added separately to the A-side/B-side mixture.

3. The method of any one of the preceding claims, wherein the B-side composition contains less than 4 molar equivalents of water relative to the moles of active -OH end groups provided by the polyols in the B-side composition.

4. The method of claim 3, wherein the B-side composition contains less than 2 molar equivalents of water relative to the moles of active -OH end groups provided by the polyols in the B-side composition.

5. The method of any one of the preceding claims, wherein the B-side composition is heated to a temperature between 70°C and 200 °C; or:
wherein the B-side composition is heated to a temperature between 70°C and 150°C, between 70°C and 120°C, between 80°C and 120°C, between 100°C and 150°C, between 90°C and 140°C, or between 90°C and 130°C.

6. The method of any one of the preceding claims, wherein the B-side composition comprises a polyol selected from the group consisting of: 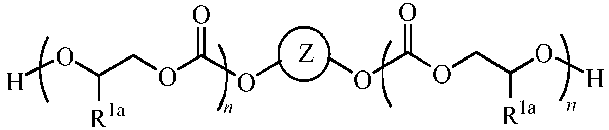 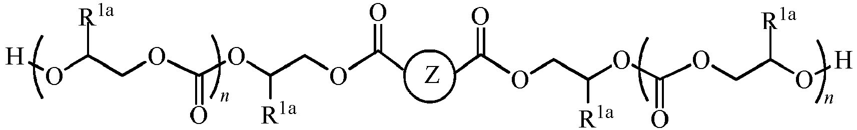 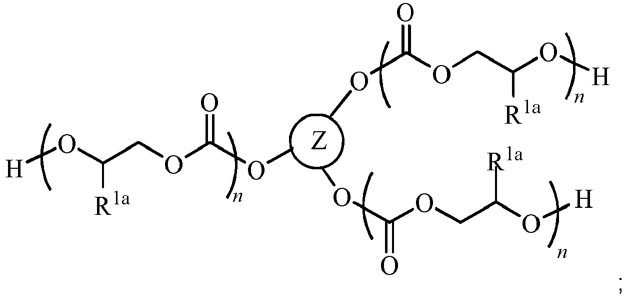 and 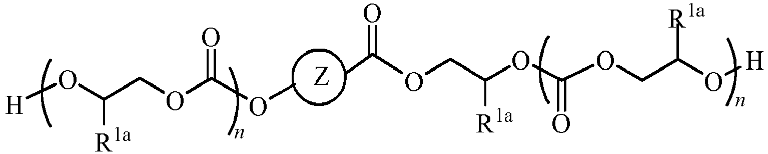 wherein,
*n* is at each occurrence, independently an integer from 2 to 100; 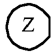
is a multivalent moiety; and
R^{1a} is, independently at each occurrence in the polymer chain, selected from the group consisting of -H, -CH₃, -CH₂CH₃, -CH₂Cl, -CH₂OR^{x}, -CH₂OC(O)R^{x}, and -(CH₂)*_{q}*CH₃, where each R^{x} is independently an optionally substituted moiety selected from the group consisting of C₁₋₂₀ aliphatic, C₁₋₂₀ heteroaliphatic, 3- to 14-membered carbocyclic, 6- to 10-membered aryl, 5- to 10-membered heteroaryl, and 3- to 12-membered heterocyclic, and q is an integer from 2 to 40.

7. The method of claim 6, wherein (i) the B-side composition comprises a polyol of formula: 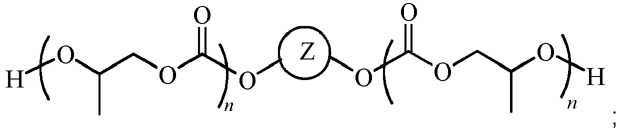 or:
wherein (ii) the B-side composition comprises a polyol of formula: 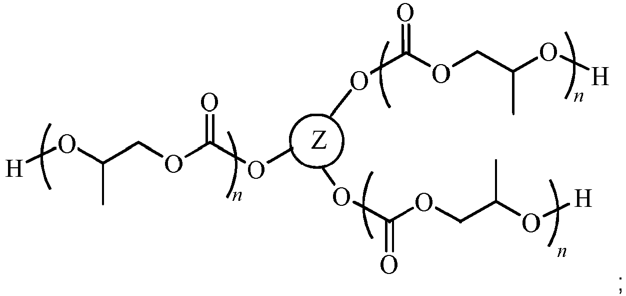 or:
wherein (iii) the B-side composition comprises a polyol of formula: 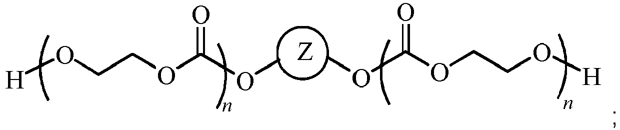 or:
wherein (iv) the B-side composition comprises a polyol of formula:

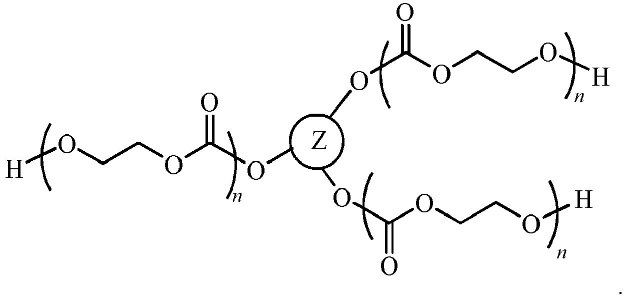

8. The method of any one of the preceding claims, wherein the highly alternating polycarbonate polyol is **characterized in that** it has at least 97% carbonate linkages, at least 99% carbonate linkages, or essentially only carbonate linkages.

9. The method of any one of the preceding claims, wherein the highly alternating polycarbonate polyol comprises poly(propylene carbonate).

10. The method of any one of the preceding claims, wherein the highly alternating polycarbonate polyol comprises poly(ethylene carbonate).

11. A polyurethane foam composition made by a method of any one of the preceding claims.

12. The polyurethane foam composition of claim 11, **characterized in that** the cured foam composition has a hard segment content of less than 40%, less than 30%, less than 25%, less than 20%, less than 15%, or less than 10%.

13. The polyurethane foam composition of claim 11, **characterized in that** the cured foam composition has a ratio of urethane linkages to urea linkages of greater than 1:1, greater than 2:1, greater than 3:1, or greater than 5:1.

14. The polyurethane foam composition of claim 11, **characterized in that** the foam comprises a flexible foam; or:
**characterized in that** the foam meets the ASTM specifications for a high resilience flexible foam; or:
**characterized in that** the foam comprises a rigid foam.

15. The method of claim 6, wherein 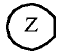 is a moiety derived from a polyether polyol.

## Patentansprüche

1. Verfahren zum Herstellen einer Polyurethan-Schaumzusammensetzung, bei dem:
eine A-Side-Zusammensetzung, umfassend ein oder mehrere Polyisocyanate, bereitgestellt wird;
eine B-Side-Zusammensetzung, umfassend ein oder mehrere hochalternierende Polycarbonatpolyole, die abgeleitet sind von der Copolymerisation von einem oder mehreren Epoxiden und CO₂, bereitgestellt wird;
dier B-Side-Zusammensetzung auf eine Temperatur von mehr als 50 °C erwärmt wird;
die A-Side-Zusammensetzung, die erwärmte B-Side-Zusammensetzung und CO₂ gemischt werden, um eine Schaummischung zu erhalten;
der Schaummischung gestattet wird, in die Polyurethan-Schaumzusammensetzung auszuhärten;
wobei mindestens ein Teil des CO₂ als separater Strom hinzugeführt wird oder gelöst in der B-Side-Zusammensetzung bereitgestellt wird;
wobei das hochalternierende Polycarbonatpolyol **dadurch gekennzeichnet ist, dass** es mindestens 95 % Carbonatverknüpfungen aufweist.

2. Verfahren nach Anspruch 1, wobei (i) die A-Side-Zusammensetzung, die erwärmte B-Side-Zusammensetzung und ein flüssiger CO₂-Strom zeitgleich an einem Mischkopf gemischt werden, um die Schaummischung bereitzustellen; oder:
wobei (ii) mindestens ein Teil des CO₂ gelöst in der B-Side-Zusammensetzung bereitgestellt wird; oder:
wobei (iii) die A-Side-Zusammensetzung und die erwärmte B-Side-Zusammensetzung an einem Mischkopf gemischt werden und ein CO₂-Strom separat zu der A-Side/B-Side-Mischung hinzugegeben wird.

3. Verfahren nach einem der vorherigen Ansprüche, wobei die B-Side-Zusammensetzung weniger als 4 Moläquivalente Wasser enthält, bezogen auf die Mole von aktiven -OH-Endgruppen, die von den Polyolen in der B-Side-Zusammensetzung bereitgestellt werden.

4. Verfahren nach Anspruch 3, wobei die B-Side-Zusammensetzung weniger als 2 Moläquivalente Wasser enthält, bezogen auf die Mole von aktiven -OH-Endgruppen, die von den Polyolen in der B-Side-Zusammensetzung bereitgestellt werden.

5. Verfahren nach einem der vorhergehenden Ansprüche, wobei die B-Side-Zusammensetzung auf eine Temperatur zwischen 70 °C und 200 °C erwärmt wird; oder:
wobei die B-Side-Zusammensetzung auf eine Temperatur zwischen 70 °C und 150 °C, zwischen 70 °C und 120 °C, zwischen 80 °C und 120 °C, zwischen 100 °C und 150 °C, zwischen 90 °C und 140 °C oder zwischen 90 °C und 130 °C erwärmt wird.

6. Verfahren nach einem der vorhergehenden Ansprüche, wobei die B-Side-Zusammensetzung ein Polyol umfasst, das ausgewählt ist aus der Gruppe bestehend aus: 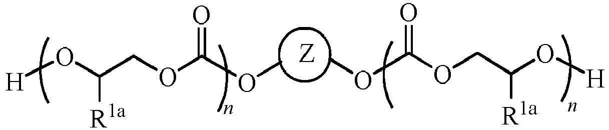 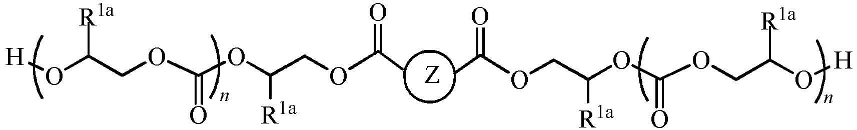 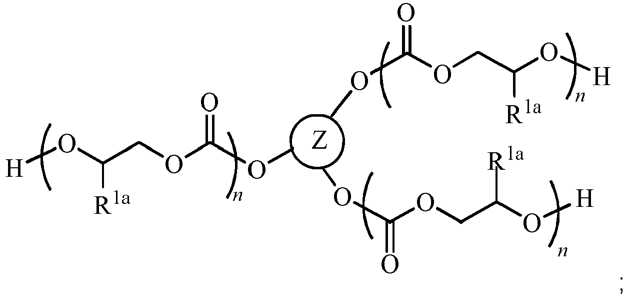 und 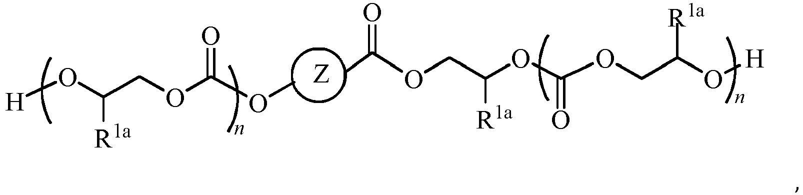 worin Folgendes gilt:
*n* ist bei jedem Auftreten eine ganze Zahl von 2 bis 100; 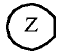
ist eine multivalente Einheit; und
R^{1a} ist unabhängig bei jedem Auftreten in der Polymerkette ausgewählt aus der Gruppe bestehend aus -H, -CH₃, -CH₂CH₃, -CH₂Cl, -CH₂OR^{x}, -CH₂OC(O)R^{x} und -(CH₂)*_{q}*CH₃, wobei jedes R^{x} unabhängig eine gegebenenfalls substituierte Einheit ist, die ausgewählt ist aus einer aliphatischen C₁₋₂₀-Gruppe, einer heteroaliphatischen C₁₋₂₀-Gruppe, einem 3- bis 14-gliedrigen Kohlenstoffzyklus, einer 6- bis 10-gliedrigen Arylgruppe, einer 5- bis 10-gliedrigen Heteroarylgruppe und einem 3- bis 12-gliedrigen Heterozyklus, und q eine ganze Zahl von 2 bis 40 ist.

7. Verfahren nach Anspruch 6, wobei (i) die B-Side-Zusammensetzung ein Polyol der folgenden Formel umfasst: 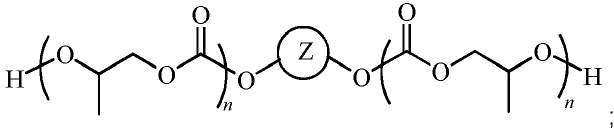 oder:
wobei (ii) die B-Side-Zusammensetzung ein Polyol der folgenden Formel umfasst: 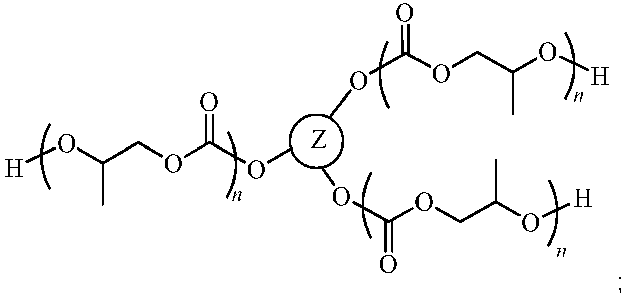 oder:
wobei (iii) die B-Side-Zusammensetzung ein Polyol der folgenden Formel umfasst: 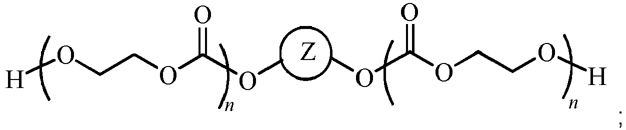 oder:
wobei (iv) die B-Side-Zusammensetzung ein Polyol der folgenden Formel umfasst

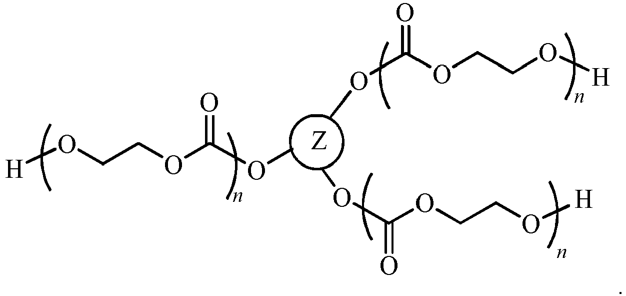

8. Verfahren nach einem der vorherigen Ansprüche, wobei das hochalternierende Polycarbonatpolyol **dadurch gekennzeichnet ist, dass** es mindestens 97 % Carbonatverknüpfungen, mindestens 99 % Carbonatverknüpfungen oder im Wesentlichen ausschließlich Carbonatverknüpfungen aufweist.

9. Verfahren nach einem der vorherigen Ansprüche, wobei das hochalternierende Polycarbonatpolyol Poly(propylencarbonat) umfasst.

10. Verfahren nach einem der vorherigen Ansprüche, wobei das hochalternierende Polycarbonatpolyol Poly(ethylencarbonat) umfasst.

11. Polyurethanschaumzusammensetzung, hergestellt durch ein Verfahren nach einem der vorhergehenden Ansprüche.

12. Polyurethanschaumzusammensetzung nach Anspruch 11, **dadurch gekennzeichnet, dass** die gehärtete Schaumzusammensetzung einen Gehalt an harten Segmenten von weniger als 40 %, weniger als 30 %, weniger als 25 %, weniger als 20 %, weniger als 15 % oder weniger als 10 % aufweist.

13. Polyurethanschaumzusammensetzung nach Anspruch 11, **dadurch gekennzeichnet, dass** die gehärtete Schaumzusammensetzung ein Verhältnis von Urethanverknüpfungen zu Harnstoffverknüpfungen von mehr als 1:1, mehr als 2:1, mehr als 3:1 oder mehr als 5:1 aufweist.

14. Polyurethanschaumzusammensetzung nach Anspruch 11, **dadurch gekennzeichnet, dass** der Schaum einen Weichschaum umfasst; oder:
**dadurch gekennzeichnet, dass** der Schaum die ASTM-Spezifikationen für einen hochbelastbaren Weichschaum erfüllt; oder:
**dadurch gekennzeichnet, dass** der Schaum einen Hartschaum umfasst.

15. Verfahren nach Anspruch 6, wobei 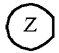 eine Einheit ist, die von einem Polyetherpolyol abgeleitet ist

## Revendications

1. Procédé de production d'une composition de mousse de polyuréthane, le procédé comprenant les étapes consistant à
fournir une composition de côté A comprenant un ou plusieurs polyisocyanates ;
fournir une composition de côté B comprenant un ou plusieurs polyols de polycarbonate hautement alternés dérivés de la copolymérisation d'un ou de plusieurs époxydes et de CO₂ ;
chauffer la composition de côté B à une température supérieure à 50°C ;
mélanger la composition de côté A, la composition de côté B chauffée et le CO₂ afin de fournir un mélange de mousse ; et
permettre au mélange de mousse de durcir pour former la composition de mousse de polyuréthane ;
dans lequel au moins une partie du CO₂ est ajoutée dans un flux séparé, ou est fournie à l'état dissous dans la composition de côté B ;
dans lequel le polyol de polycarbonate hautement alterné est **caractérisé en ce qu'**il présente au moins 95% de liaisons carbonate.

2. Procédé selon la revendication 1, dans lequel (i) la composition de côté A, la composition de côté B chauffée et un flux de CO₂ liquide sont mélangés simultanément au niveau d'une tête de mélange afin de fournir le mélange de mousse ; ou :
dans lequel (ii) au moins une partie du CO₂ est fournie à l'état dissous dans la composition de côté B, ou :
dans lequel (iii) la composition de côté A et la composition de côté B chauffée sont mélangées au niveau d'une tête de mélange et un flux de CO₂ est ajouté séparément au mélange de côté A / côté B.

3. Procédé selon l'une quelconque des revendications précédentes, dans lequel la composition de côté B contient moins de 4 équivalents molaires d'eau par rapport aux moles de groupes terminaux -OH actifs fournis par les polyols dans la composition de côté B.

4. Procédé selon la revendication 3, dans lequel la composition de côté B contient moins de 2 équivalents molaires d'eau par rapport aux moles de groupes terminaux -OH actifs fournis par les polyols dans la composition de côté B.

5. Procédé selon l'une quelconque des revendications précédentes, dans lequel la composition de côté B est chauffée à une température comprise entre 70°C et 200°C ; ou :
dans lequel la composition de côté B est chauffée à une température comprise entre 70°C et 150°C, entre 70°C et 120°C, entre 80°C et 120°C, entre 100°C et 150°C, entre 90°C et 140°C, ou entre 90°C et 130°C.

6. Procédé selon l'une quelconque des revendications précédentes, dans lequel la composition de côté B comprend un polyol choisi parmi le groupe constitué de : 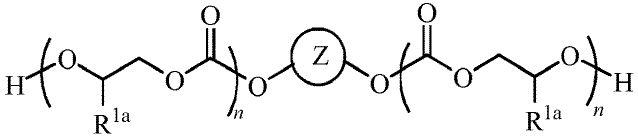 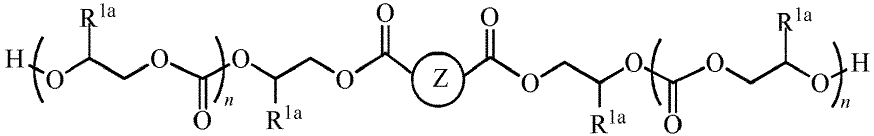 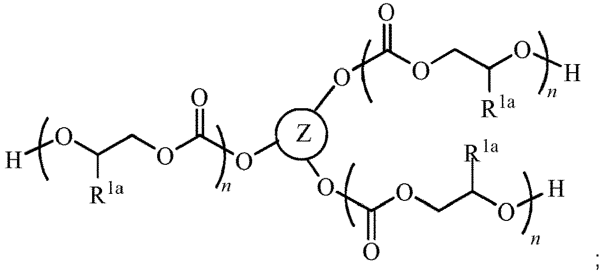 et 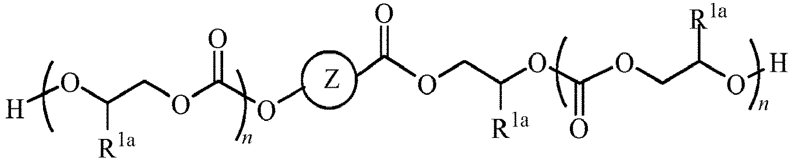 dans lequel,
*n* est indépendamment à chaque occurrence, un entier entre 2 et 100 ; 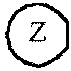
est un groupement multivalent ; et
R^{1a} est indépendamment à chaque occurrence dans la chaîne polymère, choisi parmi le groupe constitué de -H, -CH₃, -CH₂CH₃, -CH₂Cl, -CH₂OR^{x}, -CH₂OC(O)R^{x}, et -(CH₂)*_{q}*CH₃, où chaque R^{x} est indépendamment un groupement éventuellement substitué choisi parmi le groupe constitué d'un groupe aliphatique en C₁₋₂₀, hétéroaliphatique en C₁₋₂₀, carbocyclique de 3 à 14 chaînons, aryle de 6 à 10 chaînons, hétéroaryle de 5 à 10 chaînons, et hétérocyclique de 3 à 12 chaînons, et q est un entier entre 2 et 40.

7. Procédé selon la revendication 6, dans lequel (i) la composition de côté B comprend un polyol de formule : 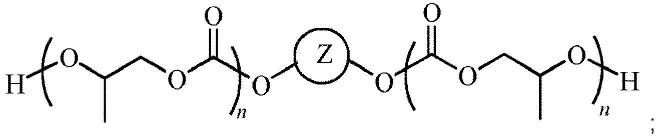 ou :
dans lequel (ii) la composition de côté B comprend un polyol de formule : 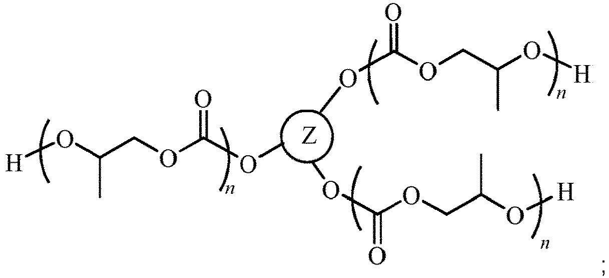 ou :
dans lequel (iii) la composition de côté B comprend un polyol de formule : 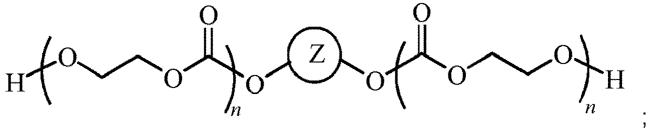 ou :
dans lequel (iv) la composition de côté B comprend un polyol de formule :

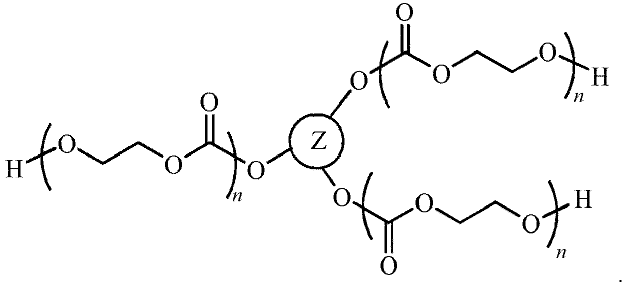

8. Procédé selon l'une quelconque des revendications précédentes, dans lequel le polyol de polycarbonate hautement alterné est **caractérisé en ce qu'**il présente au moins 97% de liaisons carbonate, au moins 99% de liaisons carbonate ou sensiblement uniquement des liaisons carbonate.

9. Procédé selon l'une quelconque des revendications précédentes, dans lequel le polyol de polycarbonate hautement alterné comprend du poly(carbonate de propylène).

10. Procédé selon l'une quelconque des revendications précédentes, dans lequel le polyol de polycarbonate hautement alterné comprend du poly(carbonate d'éthylène).

11. Composition de mousse de polyuréthane fabriquée par un procédé selon l'une quelconque des revendications précédentes.

12. Composition de mousse de polyuréthane selon la revendication 11, **caractérisée en ce que** la composition de mousse durcie présente une teneur en segment dur inférieure à 40%, inférieure à 30%, inférieure à 25%, inférieure à 20%, inférieure à 15% ou inférieure à 10%.

13. Composition de mousse de polyuréthane selon la revendication 11, **caractérisée en ce que** la composition de mousse durcie présente un rapport entre liaisons uréthane et liaisons urée supérieur à 1 : 1, supérieur à 2 : 1, supérieur à 3 : 1, ou supérieur à 5 : 1.

14. Composition de mousse de polyuréthane selon la revendication 11, **caractérisée en ce que** la mousse comprend une mousse flexible ; ou :
**caractérisée en ce que** la mousse satisfait aux spécifications ASTM pour une mousse flexible haute résilience ; ou :
**caractérisée en ce que** la mousse comprend une mousse rigide.

15. Procédé selon la revendication 6, dans lequel 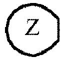 est un groupement dérivé d'un polyol de polyéther.
